# EUROPEAN PATENT SPECIFICATION

(11) **EP 4 217 665 B1**
(45) Date of publication and mention of the grant of the patent: **30.09.2026**
(21) Application number: 21857050.5
(22) Date of filing: 20.08.2021
(51) Int. Cl.: F24F 13/06, F24F 13/08, F24F 11/74, F24F 13/10, F24F 11/77

(54) **DIFFUSER UNIT AND METHOD OF DIFFUSING AN AIRFLOW**
DIFFUSOREINHEIT UND VERFAHREN ZUR DIFFUSION EINES LUFTSTROMS
UNITÉ DE DIFFUSION ET PROCÉDÉ DE DIFFUSION D'UN FLUX D'AIR

(30) Priority: 20.08.2020 AU 2020902971
(43) Date of publication of application: 02.08.2023
(73) Proprietor: Kaip Pty Limited, Kingsgrove, NSW 2208 (AU)
(72) Inventor: BADENHORST, Sean, Marrickville, New South Wales 2204 (AU); TENISON, Nicholas, Kirribilli, New South Wales 2061 (AU)
(74) Representative: Ipsilon Luxembourg
(86) International application number: PCT/AU2021/050923
(87) International publication number: WO 2022/036407

(56) References cited:
- WO-A1-2015/156720
- DE-A1- 3 229 212
- DE-A1- 3 642 056
- DE-A1- 3 642 056
- JP-A- H02 136 645
- JP-A- H02 136 645
- JP-A- H08 334 253

## Description

### Technical Field

Embodiments relate to a variable air volume (VAV) swirl diffuser, in particular, but not exclusively, for use as a ceiling swirl diffuser with integrated VAV terminal unit to maintain control of the room air temperature and/or indoor air quality (IAQ), as part of an installed air delivery system.

### Background Art

Many buildings have air conditioning or ventilation systems that distribute air throughout the building through ducts connected to diffusers. The diffusers distribute supply air, usually heated or cooled, into the spaces to be air conditioned or ventilated. The supply air may pass through VAV terminal units that each vary the supply air supplied to a group of several diffusers, so as to vary the cooling or heating capacity provided to the thermal zone served by that group of diffusers. Air handler fan speed may be controlled to a static pressure setpoint upstream of the VAV terminal units, and the static pressure setpoint may be reset as a function of thermal load.

Standard ceiling diffusers in buildings are usually designed to discharge air horizontally above head height, with a throw that substantially covers the footprint of the space served by each diffuser. For such standard diffusers that have fixed horizontal discharge, high airflow rates generally increase throw, often producing over-throw, which may cause draughts where air streams from adjacent diffusers clash or where air streams hit obstructions such as walls or bulkheads. In contrast, low airflow rates generally produce reduced throw, often causing zones of stagnation and of increased air temperature beyond the throw of the diffuser, whilst cold spots or even draughts may occur close to or beneath each diffuser due to dumping of cold, dense supply air into the occupancy space. In VAV cooling applications, such standard ceiling diffusers may, therefore, produce discomfort whenever overthrow or underthrow occurs due to the discharge of high or low airflow rates when thermal loads are high or low, respectively.

Ceiling swirl diffusers generally provide higher levels of thermal comfort and efficiency, especially in VAV applications, than four-way blow ceiling diffusers or similar low induction air diffusion devices. The highly inductive swirl discharge of ceiling swirl diffusers draws in and mixes large quantities of room air into the discharged supply air stream, rapidly breaking down the supply-to-room temperature differential to provide more uniform temperature distribution throughout the occupancy space whilst simultaneously bringing about rapid discharge velocity decay. This reduces draught risk at high airflow rates, improving thermal comfort in the space. The high induction characteristics also increase the effective air changes per hour in the space, reducing the risk of stagnation at lower airflow rates, thereby further improving thermal comfort. ADPI (Air Diffusion Performance Index) values in excess of 90%, i.e. of enhanced comfort, are readily achieved.

Ceiling swirl diffusers also provide potential to achieve fan energy savings by allowing supply air temperature to be reduced to a level that would otherwise cause dumping. This is because high induction brings about strong dilution of the supply air stream with room air, thereby reducing the density difference between the supply and room air. Even so, VAV turndown to approximately 25 to 30 per cent of the maximum airflow rate for a sound pressure level of NC 30, and a minimum specific airflow rate of approximately 1 L/s/m² typically define the lower operating limits for premium fixed vane ceiling swirl diffuser systems operating in cooling mode, especially if the temperature differential between supply and room air is high (often as high as 16 K). As a result, in order to prevent dumping and avoid stagnation, the minimum airflow rate that a VAV system may be turned down to is often higher than the airflow rate required to satisfy thermal load or indoor air quality (IAQ) criteria. This causes fan energy to be wasted, as it results in unnecessarily high airflow rates when thermal loads are low. It also causes discomfort due to overcooling the space unless even more energy is wasted reheating the supply air before it is discharged. Alternatively, if lower airflow rates are nevertheless used then reheat of the supply air may still be required to prevent dumping, again wasting energy.

In order to increase the range of thermal loads that can be dealt with by each VAV system, and to reduce the minimum permissible airflow rate of the diffusers and the minimum specific airflow rate of the diffuser system, the design of a VAV terminal unit with associated diffusers may be replaced with a system design of actuator driven variable geometry VAV diffusers. Such diffusers are each equipped with a VAV damper that has variable geometry discharge that changes the effective discharge aperture of the diffuser, or changes the aperture directly upstream of the fixed vanes of the diffuser, so that VAV airflow rate adjustment may be achieved from each diffuser whilst maintaining a substantially constant discharge velocity when the diffuser is operated at a substantially constant static pressure. Such operation limits the extent to which throw is reduced as the diffuser airflow rate is throttled, allowing for a greater degree of throttling, which potentially improves comfort by reducing the risk of overcooling and dumping as well as of stagnation in the space, whilst also reducing energy consumption by reducing both fan energy and reheat requirements. This solution additionally enables each diffuser to be controlled as an independent VAV terminal, rather than as part of a larger VAV group, thereby further improving thermal comfort and energy savings by reducing the size and increasing the number of thermal zones in the system, as each diffuser may be an independent thermal zone.

Adjustable VAV dampers in such variable geometry VAV diffusers are typically regulated by means of thermally or electrically powered actuators. Hybrid actuator solutions also exist comprising thermal actuators with electrically heated jackets to allow the actuator to respond to a heat output modulated by an electric controller, as do pneumatically operated actuators, especially for explosive environments.

Thermally powered actuators convert temperature change into an axial push/pull motion of a piston via a mechanical force exerted onto the piston by a phase change expansion material encased in a thermally conductive housing. Advantageously, thermal actuators require no external power source or controls, eliminating the need for power supply and wiring, as they are entirely thermally driven, and are generally maintenance free for about ten years.

On the other hand, an electrical actuator generally includes a temperature sensor connected to a computing device which operates an electrically powered actuator (e.g. an electric motor) when certain predetermined temperatures are sensed. It is to be realised therefore that the term 'thermal actuator' as used herein includes a sensor and actuator in one since these devices react mechanically to changes in temperature.

For cooling-only applications, only one thermal actuator is typically required to sense room air temperature. The room air temperature setpoint is usually manually adjustable in a range from 20°C to 26°C, or thereabouts. A supply air jet within a housing located behind the diffuser face plate typically draws in room air through a room air inlet and across the thermal actuator by entrainment so that the thermal actuator, which is hidden from view, responds to the room air temperature. The mixture of supply air and entrained room air is then discharged back into the room well clear of the room air inlet.

For combined cooling/heating applications, two or more thermal actuators are required: at least one to respond to room air temperature as described above, and at least one other in communication with the supply air to engage cooling or heating mode operation in response to the supply air temperature.

Electrically powered actuators are typically powered by a low voltage external power supply, such as 24 V, which may be daisy-chained from one diffuser to the next. Each diffuser is equipped with an electrically operated actuator (typically a brushless DC motor or stepper motor) that drives the VAV damper. The diffusers, which usually include a PC board, may communicate with one another or with remote controls or sensors via comms wiring or wirelessly, such as via Wifi. Typically, comms wiring is used, and is often combined with the power supply wiring into a common cable. While more expensive than a thermal actuator solution, the electric actuator diffusers allow for improved and more energy efficient operation, such as through PI (proportional-integral) or adaptive VAV damper control, global adjustment of cooling and heating setpoints as a function of outdoor temperature or other relevant parameters, minimum airflow rate adjustments based on indoor air quality, operation of diffusers based on occupancy, "voting" by the diffusers for an integrated determination of mechanical plant cooling/heating mode rather than this being entirely independent of the diffusers, and so on.

Electric actuator variable geometry VAV diffusers may house some electronic sensors and may include sensors located remotely. For example, remote sensors may be located in a casing at chest height on a wall in the room and may include a room air temperature sensor with setpoint adjustment buttons, a humidity sensor, a VOC or CO₂ sensor to measure room indoor air quality, and a PIR sensor to determine whether the room is occupied. A supply air temperature sensor may be located in the diffuser to determine cooling/heating operation. The diffuser airflow rate may be determined by means of a pressure sensor in the diffuser that measures the total or dynamic air pressure through the diffuser spigot, or via one or more hot wire anemometer sensors in the diffuser that measure air velocity. This allows VAV airflow control independent of system static pressure to be achieved, further improving temperature control. It also facilitates ease of commissioning. A PIR sensor may optionally be located in the diffuser face to determine whether the space is occupied, and an induction system that draws in room air may additionally be incorporated in the diffuser to allow room air temperature to be measured, thereby, in most cases, dispensing with the need for remote sensors unless indoor air quality or humidity are to be measured, as electric actuator variable geometry VAV diffusers of the current art do not have sufficient space to house these sensors. The elimination of remote sensors is often sought after, as this facilitates ease of tenancy fit-out changes (no cabling to reroute) or reduces maintenance requirements (no need to replace sensor batteries if communications are wireless or to deal with wireless interference cutting communications).

The most widely used thermal or electric variable geometry VAV diffusers have a square face designed to fit into a standard ceiling grid (typically approximately 600 mm x 600 mm square). Visible parts are largely made of powder coated metal. A top-entry spigot, for connection to a supply duct, is usually located at the apex of a hood shaped housing that extends down to the perimeter of the diffuser face. Alternatively, a connection box with side-entry spigot may be placed over the diffuser, typically sealing to the back of the diffuser housing outer edges, in which case supply air flows from the supply air duct via the side-entry spigot into the connection box, and then into the top-entry spigot of the diffuser. An actuator driven, centrally located and substantially horizontally aligned damper plate or damper vane array is located beneath the diffuser housing. The actuator drives the damper plate or vane array to adjust the vertical aperture between the damper plate or vane array and the diffuser housing to meter the airflow at substantially constant velocity (for a given supply air pressure) for discharge through the diffuser face. When viewed in plan-view, the most common arrangement is that a broad, continuous, square or round, discharge slot surrounding a large square or round face plate, called a plaque, discharges the supply air directly towards the diffuser perimeter, for the supply air stream to then attach, via Coanda effect suction, to the ceiling and spread in a substantially 360° pattern away from the diffuser, without dumping. The VAV actuator(s), damper mechanism and induction system (if present) are substantially located above the large plaque which screens these components and is usually removable for access to them. The substantially horizontal damper plate or vane array, located above the plane of the plaque, obstructs, at least in part, the air path to the continuous discharge slot.

Instead of discharge through a continuous discharge slot, a flat face swirl diffuser, comprising a round array of substantially radially aligned swirl vanes centred about a round hub, is sometimes used. The hub replaces the plaque of the non-swirl diffuser variant but is generally somewhat smaller so that the active area of the swirl vanes is not too restricted. The VAV actuator(s), damper mechanism and induction system (when used) are substantially located behind the hub. The damper plate or vane array, located above the plane of the diffuser face, obstructs, at least in part, the air path to the swirl vanes. The plurality of swirl vanes is typically folded or pressed in a substantially radial pattern, with round outer boundary, into the metal face of the diffuser. These vanes break the discharged supply air up into a multitude of air streams that are each discharged in a direction that, in plan-view, is substantially perpendicular to the radial alignment of the two directly adjacent swirl vanes. These air streams attach to the ceiling and spread in a substantially 360° pattern away from the diffuser.

Patents US 4,523,713, US 6,857,577 B2 and US 6,176,777 B1 describe widely used actuator driven variable geometry VAV diffusers that have a continuous discharge slot surrounding a plaque. Patents US 4,231,513 and 10,337,760 include embodiments that describe variable geometry VAV diffusers with swirl diffuser discharge.

Whilst offering many advantages, actuator driven variable geometry VAV diffusers of the prior art suffer from numerous shortcomings, which it may be desirable to overcome.

Most manufacturers of such prior art actuator driven variable geometry VAV diffusers recommend that the AHU (air handling unit), supply air fan and associated branch duct dampers be controlled to maintain a predetermined static pressure setpoint (which may be varied during operation) at a location approximately two thirds along the active length of the branch duct to which the diffusers are connected, the active length being the length between the first and last diffuser take-offs on that branch duct.

Multiple such diffusers are typically connected via flexible ducts to one or more branch ducts. Each diffuser has a minimum permissible static pressure, which is typically 12 Pa, at which its induction system (if present) can operate and at which the diffuser can operate in a stable fashion without dumping. Each diffuser also has a maximum recommended static pressure, typically of 60 Pa, to prevent excessive airflow noise generation.

Due to additional duct pressure losses (e.g. in the flexible ducts connected to the diffusers, from balancing dampers serving individual diffusers, or caused by changing pressure distribution in the entire duct system as diffuser dampers open and close) such a static pressure measurement point at a single and remote point in a duct cannot be representative of the actual static pressure at each diffuser. Consequently, some diffusers may well operate at less than their minimum permissible static pressure, leading to compromised performance and possible dumping, or a safety factor may be added, in which case the entire system will run at an excessive air pressure, thereby wasting energy and generating excessive noise. Moreover, if the single duct static pressure sensor were to fail then static pressure control in that duct will be lost, potentially causing the entire system to fail.

**In** the prior art, if the airflow rate of each diffuser is to be determined then each diffuser is typically equipped with several velocity sensors or with a pressure sensor (measuring dynamic or total pressure) connected to an array of pressure measuring points. Several velocity sensors or an array of pressure points are required in order to average out asymmetric air velocity distribution in the diffuser spigot due to bends in the duct directly upstream of the diffuser. Even so, both solutions tend to be inaccurate, especially at higher airflow rates, due to the asymmetric and often turbulent on-flow conditions into each diffuser spigot. Furthermore, dynamic pressure sensors become increasingly inaccurate when airflow rates are low, due to dynamic pressure being a function of air velocity squared, and accurate velocity sensors are extremely expensive.

**In** order to minimise HVAC costs, it is often desirable to discharge as much air per diffuser as possible without creating draughts, excessive airflow noise, or requiring too much fan pressure. For the prior art actuator driven variable geometry VAV diffusers described in the above patents, the top-entry spigot configuration necessitates the diffuser housing to be low in profile to allow installation into ceiling voids of restricted height. The substantially horizontally orientated damper plate or vane array imparts abrupt changes in direction to the air path, has a restricted discharge aperture due to the low-profile diffuser housing, and at least partially obstructs the continuous discharge slot. This increases the pressure loss of the diffuser, thereby increasing system fan energy requirements.

Flexible ducting typically connected to the top-entry diffuser spigots typically rests on the adjacent ceiling tiles before "goose-necking" through an almost 90-degree upward curve and then a more than 90-degree downward curve to the connection point on the diffuser spigot. These abrupt and opposite bends strongly increase duct pressure drop and cause strongly asymmetric airflow onto the diffuser spigot, resulting in excessive noise and asymmetric discharge from the diffuser face. Additionally, if the diffuser is equipped with a total or dynamic air pressure sensor in the diffuser spigot to determine the airflow rate, then the accuracy of these measurements is severely compromised, resulting in incorrect airflow control.

While one of the key purposes of variable geometry VAV discharge is to target substantially constant throw across a broad VAV range of operation, this, in fact, is not achieved, as throw is proportional to the square root of the product of volume flow rate and discharge velocity, and variable geometry VAV diffusers of the prior art vary the volume flow rate of the discharged airstream at a substantially constant velocity (for a given supply air static pressure) of the discharged airstream, thereby affecting throw substantially as a function of the square root of the airflow rate. Consequently, as the airflow rate discharged by actuator driven variable geometry VAV diffusers of the prior art decreases, so too does the throw, and hence the threat of stagnation and heat build-up further afield increases, compromising thermal comfort and indoor air quality, or closer spacing between diffusers is required by increasing the number of diffusers, which increases capital cost.

As the discharge pattern from the broad and continuous discharge slot is not highly inductive, draughts occur, especially at higher airflow rates, and such discharge is generally not suitable for a supply air temperature of less than 12°C. This may cause discomfort and increases the system airflow rates necessary - and hence the number of diffusers required - to cool the space, increasing fan energy requirements.

The use of a swirl discharge face instead of a broad, continuous slot reduces draught risk and may allow lower supply air temperatures to be used but adds substantial further restrictions to the air path. Only a small percentage of the diffuser face is available to be fully active due to obstruction by the damper plate, and the airflow is further restricted by the additional abrupt changes in airflow direction that the swirl vanes impart. Diffuser airflow noise increases noticeably, the maximum permissible diffuser airflow rate drops substantially, and the maximum permissible operating pressure is significantly reduced in a bid to prevent excessive airflow noise. More diffusers are required to serve the space, adding to capital cost, a greater need for static regain duct design may be required to minimise pressure distribution variations in the duct system, adding to capital cost and often rendering such diffusers unsuitable for retrofit applications unless existing ducting is replaced, and the VAV operating range is reduced, increasing operating costs and compromising thermal comfort.

The ceiling void height in modern multi-storey buildings is extremely restricted in order to reduce the overall height of these buildings, to thereby reduce their overall construction costs. Diffusers with top-entry spigots require substantial ceiling void height for the supply air duct to be routed to approach from one side and then curve through at least 90 degrees to attach to the top-entry spigot. Even if the diffusers are equipped with a side-entry connection box, the connection box needs to be relatively high so that the supply air can easily flow from the connection box into the top-entry spigot of the diffuser. The higher the diffuser airflow rate the greater this height needs to be. The space requirements of diffusers with relatively large airflow rates are therefore often too high to fit into the ever more common restricted ceiling void spaces, requiring either more diffusers to be used, which increases capital cost, or resulting in excessively sharp or even kinked flexible duct bends onto the top of each diffuser, dramatically increasing pressure drop, noise and fan energy requirements.

New-build, multi-storey commercial buildings are initially air conditioned for the base building design, which consists largely of open-plan floor plates which ideally have a small number of ceiling diffusers each discharging a large air quantity across a large floor area. This helps minimise the base building HVAC costs. Once tenanted, tenancy fit-outs occur, in which parts of each floor are partitioned into offices, meeting rooms, etc, each of which is then typically conditioned by means of diffusers that often discharge relatively small air quantities (if the room served is small), while open-plan areas remain largely unchanged from the base-building installation. The larger airflow base building diffusers of the prior art that need to be replaced by counterparts suitable for smaller airflow rates generally cannot be repurposed for such smaller airflow rates, as their top-entry spigots are too large to connect to smaller ducts and their large damper system sizing is not able to provide proper VAV authority over smaller airflow rates. These extremely costly VAV diffusers of the prior art become superfluous, and effectively have to be thrown away to be replaced by additional, extremely costly, smaller airflow rate prior art VAV diffusers. This increases the HVAC costs of tenancy fit-outs.

Space availability beneath the damper plate or vane array of electric actuator variable geometry VAV diffusers of the prior art is extremely limited due to the restricted height of the low-profile diffuser housing and the space requirements of the damper motor and mechanism. There is generally insufficient space to fit more than the PC board, room temperature sensor and PIR sensor, and associated induction system without increasing diffuser height or throttling diffuser airflow. This is especially so if the diffuser has a swirl face as the induction system, including its inlet and outlet, must fully fit into and seal to the smaller sized hub of the swirl face. Consequently, remote sensors are still required to house bulky CO₂, VOC and **RH** room air sensors. This adds to project costs and reduces flexibility for tenancy fit-outs.

Due to space constraints outlined above, the induction systems of prior art VAV diffusers are extremely restricted, especially in variable geometry VAV diffusers with swirl discharge. Their air inlets are under-sized and their induction chambers are short, resulting in a low induction ratio and weak secondary airflow from the room into the induction system. This not only causes a slow thermal response time to room temperature changes, but also leads to inaccurate steady state room temperature measurements as thermal bridging (especially from swirl vanes to the hub) can significantly affect the boundary layer air temperature beneath the hub as well as in and around the induction inlet unless a strong secondary airflow into the induction system is used to dilute this air with more representative room temperature air. The induction systems of such prior art diffusers are not able to generate such strong secondary airflow due to the space restrictions above the diffuser plaque or, in particular, the smaller sized swirl face hub. The accuracy of room air temperature sensing is compromised, resulting in poor indoor air temperature control, reduced comfort, and increased HVAC energy costs.

In order to somewhat boost secondary airflow into the induction system, relatively high primary airflow rates are sometimes used in actuator driven variable geometry VAV diffusers of the prior art. This limits the VAV range of operation, especially if the maximum airflow rate is low, leading to discomfort and energy wastage due to overcooling when thermal loads diminish.

Given that the diffuser induction systems operate continuously, energy is additionally wasted discharging primary cooled/heated airflow into spaces even when they have no air conditioning requirement, such as when the HVAC system is active but the diffusers in question serve spaces that are untenanted or that are unoccupied.

DE3642056A1 discloses a diffuser unit having a pressure plenum, an air deflector and a damper compartment where the damper compartment is cylindrical.

JPH02136645A relates to a floor-mounted diffuser unit with adjustable veins arranged in a cylindrical arrangement.

### Summary

According to a first aspect of the present invention there is proposed a diffuser unit according to claim 1. According to another aspect of the present invention, there is proposed a method of diffusing an airflow according to claim 10. Preferred embodiments are defined in the dependent claims. According to the first aspect, the diffuser unit for supplying air to a space, comprises:
a pressure plenum having an air inlet receiving an airflow with a variable rate;
an air deflector through which air is discharged into the space, the air deflector arranged to disperse the discharged air in a plane substantially parallel to a discharge face of the diffuser unit, the air deflector forming an outlet to the pressure plenum;
a damper compartment located within the pressure plenum and connected to the air deflector so that the air deflector forms at least one facet of the damper compartment, the damper compartment being frusto-conical and having a plurality of damper apertures forming inlets to the damper compartment, the damper compartment further comprising a plurality of damper doors, each damper door associated with at least one corresponding aperture and being operable between an open position and a closed position;
and wherein the damper compartment and the damper apertures are arranged so that air entering the damper compartment through the damper apertures from the pressure plenum forms a swirl before exiting the damper compartment through the air deflector.

The damper apertures and damper doors may be configured and operable to maintain a substantially constant velocity or throw of air discharged from the air deflector.

The pressure plenum, damper compartment and or damper doors may comprise one or more surfaces configured to impart a tangential velocity to air flowing into the damper compartment. The surface may be angled.

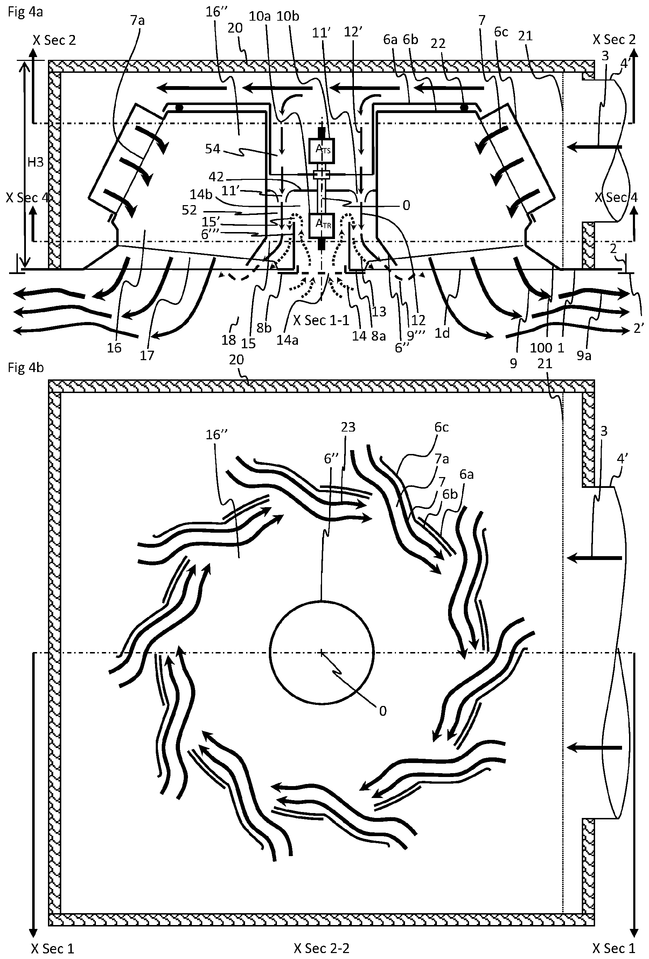

**In** certain embodiments (e.g. Figures 4a to 4l), an angle of the one or more surfaces relative to the damper compartment remains constant as the doors open and close. In such embodiments a constant velocity of air discharged from the outlet may be maintained, at least for a portion of possible positions of the damper doors.

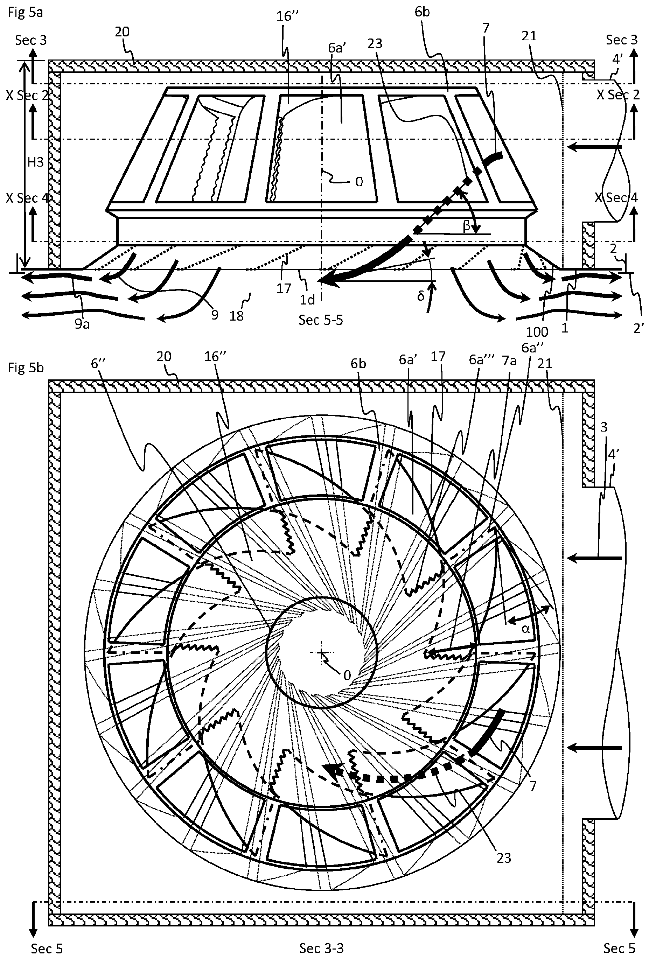

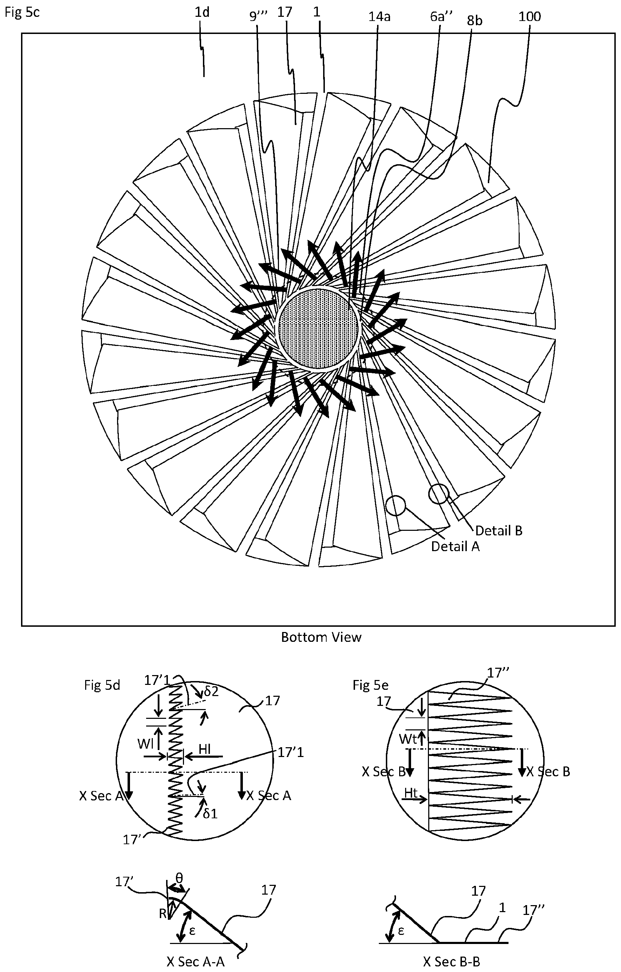

**In** further embodiments (e.g. Figures 5, 6, 7 and 8), the angle of the one or more surfaces varies as the doors open and close. In these embodiments, the one or more surfaces may be a surface of the doors. The doors may pivot relative to the damper compartment. In such embodiments, a substantially constant throw of air discharged from the air deflector may be maintained, at least for a portion of possible positions of the damper doors, and a greater tangential velocity component of the discharge velocity may be achieved at small apertures than if the angle of the surface relative to the damper compartment remained constant.

The unit may be a ceiling diffuser unit adapted to be mounted to a ceiling defining the space. Alternatively, the diffuser unit may be adapted to be mounted at a location towards an upper part of the space. For example, the unit may, in certain embodiments, be suspended from a ceiling or roof and located above head-height.

The diffuser unit may have a perforated baffle plate associated with the air inlet of the pressure plenum.

The pressure plenum may be a connection box. The pressure plenum may have a low or substantially zero dynamic pressure relative to a duct connected to the air inlet of the pressure plenum.

The damper compartment may be radially symmetric.

Each damper door may be moved between an open position and a closed position.

One or more damper doors may comprise a vane extending tangentially to a surface of the damper compartment. Alternatively, or in addition, the damper compartment may have a plurality of edges defining the apertures, the damper compartment having vanes formed at the edges.

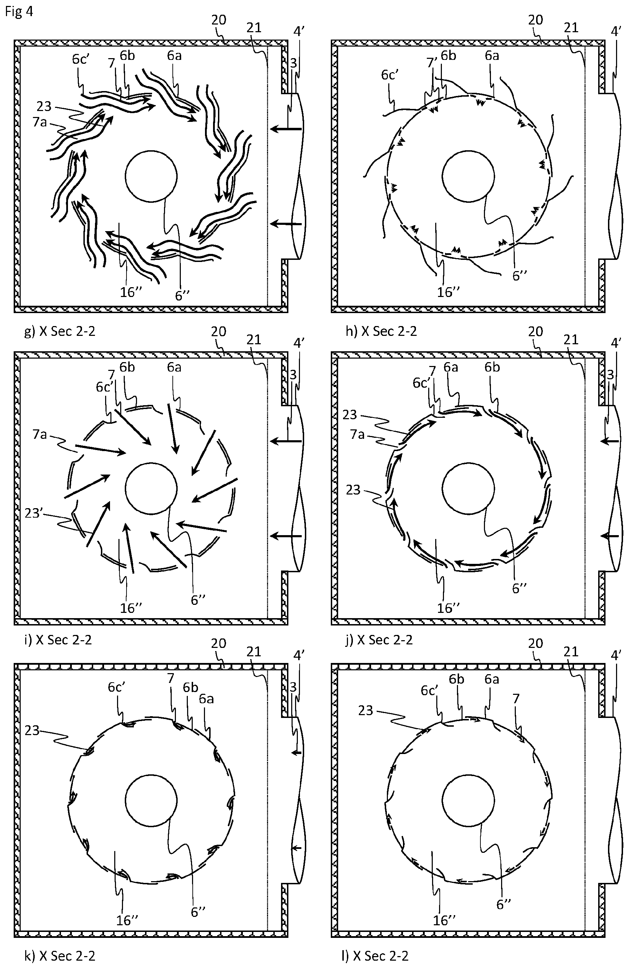

The vanes may extend away from an outer surface of the damper compartment (e.g. Figures 4a to 4h). Alternatively, the vanes may extend into an interior of the compartment (e.g. Figures 4i to 4l). In a further embodiment (not shown) the vanes extend both into and out of the compartment.

The damper doors may be connected to a control mechanism. The control mechanism may be a sliding mechanism causing the damper doors to slide with respect to the compartment and thereby open and close the respective apertures.

There may be a single mechanism for all doors so that the position of each door relative to the corresponding aperture is the same for all damper doors.

The damper doors may be formed by a sheath which engages with, and slides relative to, the damper compartment.

Alternatively, a plurality of damper doors may each have a corresponding door control mechanism, each corresponding door control mechanism acting independently so the plurality of doors may selectively be moved relative to the corresponding aperture to open or close the aperture.

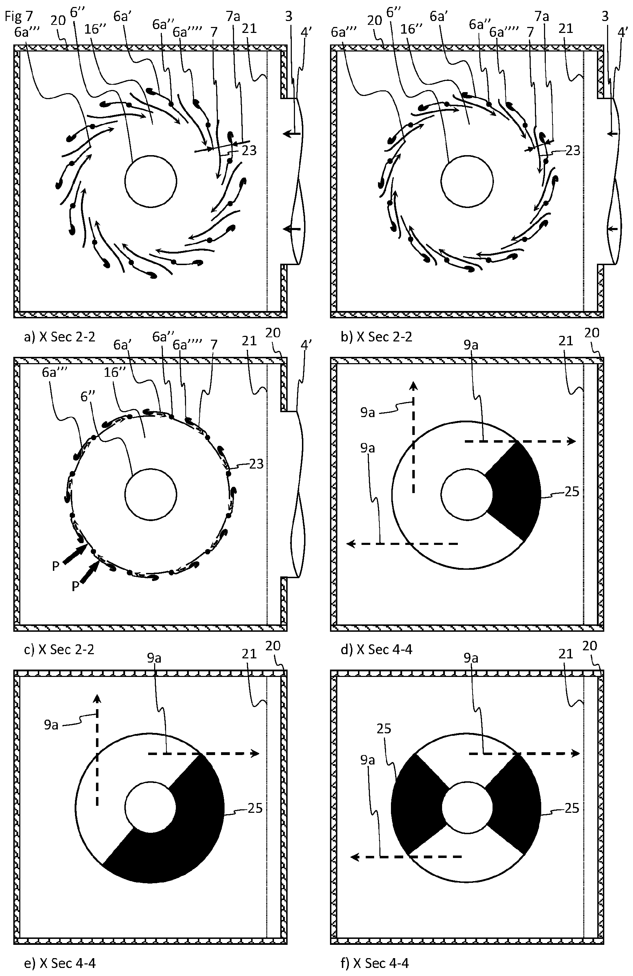

One or more damper doors may be mounted for pivoting movement about a respective axis relative to the damper compartment (e.g. Figures 5 and 7). The axis may be located substantially coincident with, or in close proximity to, a leading edge of the respective door. Alternatively, the axis may be located substantially equidistantly between a trailing edge and a leading edge of the respective door, or closer to a trailing edge than the leading edge of the door. The axis may be located so that, when in a closed position, static pressure in the pressure plenum, exerts an opening force, a balanced force, or a shutting force on the respective door.

The axes of rotation of the damper doors may be vertical or may be inclined. Where the axes are vertical they may be orientated substantially normal to the plane of the discharge face of the diffuser unit. The axes may be orientated to be substantially coincident with the surface of a cylinder. Where the axes are inclined, the axes may be orientated to be substantially coincident with the surface of a cone.

The axes of rotation of the damper doors may be parallel to a diffuser centre-line or may be inclined thereto. Where the axes are parallel they may be orientated substantially normal to the plane of the discharge face of the diffuser unit. The axes may be orientated to be substantially coincident with the surface of a cylinder. Where the axes are inclined, the axes may be orientated to be substantially coincident with the surface of a cone.

The door may substantially provide a seal to the corresponding aperture when in the closed position.

Each door may have a trailing edge. The trailing edge may be formed with serrations. The serrations may be one or more of: saw-tooth, sinusoidal or irregular. The one or more doors may be formed from a perforated or porous material at the trailing edge.

The profile of the trailing edge may diverge from a profile of a portion of the damper door excluding the trailing edge. The damper door may comprise a sealing edge. The sealing edge may be located at, or proximate to, the trailing edge. The trailing edge may diverge from a tangent to a surface of the damper door at the sealing edge. The trailing edge may have an arcuate profile. The arc may extend towards the compartment.

The terms "leading" and "trailing" are used with reference to an airflow when the unit is in use, unless the context indicates otherwise.

The damper doors may comprise a respective surface upon which airflow impinges, wherein at least one of the surfaces is formed with one or more protrusions to reduce a noise generated by air flowing over the surface. The respective surfaces may form respective trailing edges. The respective surfaces may form respective sealing edges.

The shape of the protrusions may be in the form of one or more of: substantially planar, a sawtooth, rectangles, triangles, truncated triangles, substantially sinusoidal or irregular. The protrusions may protrude from the surface at an angle, which may be between 20° and 90°, or between 30° and 60°. A closest spacing between adjacent protrusions may be between 0.5 mm and 5 mm, or between 1 mm and 3 mm. The protrusions may have a width of between 1 mm and 2 mm, or between 3 mm and 10 mm. One or more damper doors may have a first set of protrusions with one of the aforementioned shapes and a second set of protrusions with another of the aforementioned shapes. The damper doors may have more than two sets of protrusions, each with different shapes.

The protrusions may be vortex generators. Further or alternative shapes of the protrusions may comprise a distorted pyramid with a triangular base, a blade shape or one or more hemispheres.

As well as, or in addition to protrusions formed at the surface of the damper door, the damper compartment may comprise one or more vanes formed at an edge defining an aperture.

The damper compartment may comprise an inlet surface for forming a seal with a corresponding door. The inlet surface may describe a rounded inlet upstream of a sealing site. The rounded inlet may have a radius between 5 mm and 30 mm, most preferably between 10 mm and 20 mm. The rounded inlet may help to reduce noise.

One or more doors may comprise a lock for locking a position of the door relative to the corresponding aperture. The lock may lock the door in a closed position. The lock may be manually operable and accessible through the discharge element.

The unit may comprise a first door type and a second door type. The first door type may be smaller than the second door type. A circumferential extent of the first door type may be less than a circumferential extent of the second door type. The unit may comprise a plurality of doors of the first door type and a plurality of doors of the second door type. Doors of the first door type may alternate with doors of the second door type through a circumference of the damper compartment. Alternatively, there may be twice as many doors of the second type than doors of the first type. There may be one or more sets of doors of the second type, each set comprising two or more doors of the second type. Each set of doors of the second type may alternate with doors of the first type through a circumference of the damper compartment.

At least one door may comprise a switch arranged to be activated when the door is in a fully closed position or in a fully open position. Alternatively, or in addition, the compartment may comprise a switch positioned to be activated by closure or full opening of at least one door. The switch may be activated by a door actuator. The switch, when activated may signal a zeroing of a position of the corresponding door. There may be a switch associated with each door.

The unit may comprise one or more blanking segments for obstructing a portion of airflow though the unit. The one or more blanking segments may be located to block the discharge element. There may be two blanking segments. Each segment may be shaped as a wedge. The wedge may be a 90° wedge. (Figures 7d to 7f).

The damper apertures may be substantially symmetrically arranged around a periphery of the compartment.

The arrangement of the apertures may be radially symmetric.

The unit may comprise an actuator for opening and closing the doors. The actuator may be connected to a sensor. The sensor may be a supply air sensor arranged to measure supply air temperature. The sensor may be a room air sensor arranged to measure an air temperature of the space.

The unit may comprise a supply air sensor and a room air sensor. Each of the supply air sensor and the room air sensor may be connected to a corresponding actuator, or to the same actuator.

The actuator may comprise one or more arms which engage with respective damper doors. Where the compartment is frusto-conical, the arms may translate in a direction substantially parallel to a central axis of the compartment. The arms may be connected to a connection ring. The actuator may further comprise a drive for incrementally translating a position of the arms. The drive may engage with the connecting ring. The drive may comprise a stepper motor or a brushless DC motor. The doors may be pushed open by supply air pressure onto their respective arms. Furthermore, gravity may pull the doors open onto their respective arms. The arms may be magnetically engaged with respective doors.

In an alternative embodiment, the arms may translate rotationally relative to the damper compartment. The arms may translate both rotationally relative to the damper compartment and linearly in a direction substantially parallel to a central axis of the compartment.

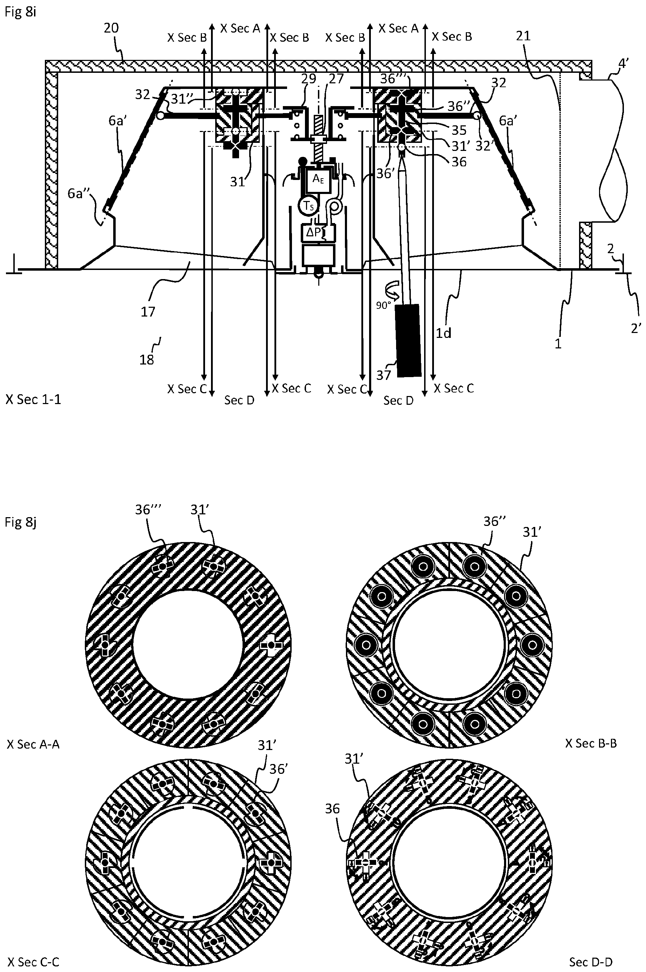

The unit may comprise a translating ring and a docking ring. Where the actuator comprises a plurality of arms, one or more of the arms may have a locking mechanism wherein the locking mechanism selectively engages the respective arm with either the translating ring or the docking ring. (Figures 8i to 8l).

The air deflector may comprise a perforated plate. The air deflector may comprise a multi-cone diffuser.

The air deflector may comprise a swirl diffuser with a plurality of discharge elements, the discharge elements being substantially radially arranged. The air deflector may comprise more than one swirl diffuser. In an embodiment the air deflector comprises two or three, or more, swirl diffusers. Where the outlet comprises more than one swirl diffuser, the swirl diffusers may be located adjacent to one another.

The discharge element may comprise blades. Each blade may have a trailing edge and a leading edge.

The diffuser unit may comprise a core portion delimited from the damper compartment by a core conduit.

Although the core portion is centrally located in the embodiments illustrated and discussed, it is to be realised that in further embodiments the core portion may be located elsewhere.

The core conduit may comprise a shroud, the shroud having an inlet into which air from the pressure plenum enters the shroud, and an outlet through which air exits the shroud.

The core portion may house one or more actuators.

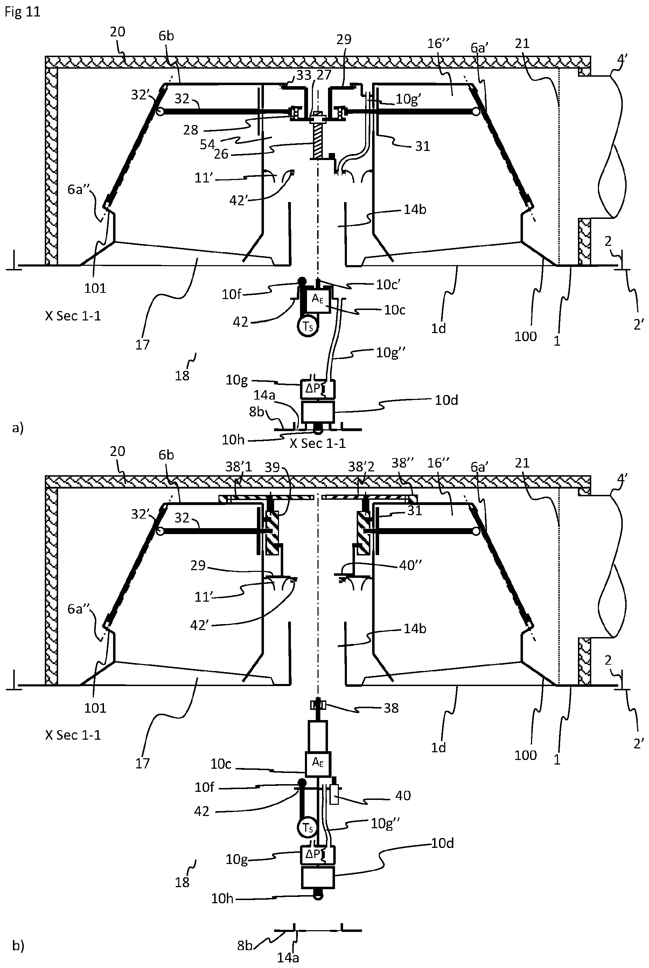

The core portion may comprise a divider dividing the core portion into an upper portion associated with the pressure plenum and a lower portion associated with the space into which the air is discharged by the diffuser unit during use. The divider may be formed with one or more induction inlets. The induction inlets may be nozzles. The divider may have a removable proximal portion that seals to a distal portion wherein the distal portion is formed with the nozzles. The removable proximal portion may facilitate removal of the actuator for maintenance (Figures 11a and 11b).

The core portion may comprise a cap and the cap may be perforated.

The cap may be manually removable to provide access to the core portion. Where the core portion houses one or more sensors such as temperature sensors and/or pressure sensors, a manually removable cap may provide relatively easy access to these sensors (and any other components, such as one or more actuators, housed in the core portion) for maintenance purposes, without requiring removal of the entire unit.

The core portion may comprise a second inlet located in the lower portion wherein airflow through the induction inlets causes an induced airflow through the perforations in the cap into the shroud through the second inlet to form a combined airflow which exits the shroud through the outlet. The second inlet may be located in an upper part of the lower portion.

The unit may comprise a protrusion located in the lower portion of the core portion separating the perforations in the cap from the shroud outlet. Where the shroud is rotationally symmetric (e.g. in the shape of a partial cone or cylinder), the protrusion may extend along a line parallel to a central axis of the shroud. The protrusion may form the second inlet located in the lower portion of the shroud. The protrusion may be formed by a cylinder.

The induction inlet may be configured to impart a swirl to the combined airflow. Where the induction inlet comprises one or more nozzles, the nozzles may be angled relative to a central axis of the unit.

The unit may comprise an induction damper. The induction damper may be operable between a closed position in which induced airflow is restricted or prevented and an open position in which induced airflow is permitted.

Where the unit comprises an actuator for opening or closing the damper doors, the induction damper may be connected to the actuator. The actuator may act to close the damper doors and move the induction damper to a closed position. The actuator may act to open the damper doors and move the induction damper to an open position. The actuator may act to first close the damper doors and then move the induction damper to a closed position. The actuator may act to first move the induction damper to the open position and then open the damper doors. The actuator may act so that the induction damper is open when the damper doors are open.

The core portion may comprise a first sensor located in the upper portion and/or a second sensor located in the lower portion.

The first sensor may sense a temperature of air in the pressure plenum and the second sensor may sense temperature in the space. The first and/or second sensor may be a thermal actuator. The first and/or second sensor may be connected to a corresponding actuator for actuating the aperture doors.

The unit may comprise one or more pressure sensors for measuring a static pressure of the supply air relative to a static pressure of the space. In an embodiment, the pressure sensor is located in the lower portion with a snorkel extending into the pressure plenum outside of the damper compartment and the upper portion. Where the unit comprises an induction damper, the induction damper may, in a closed position, close the upper portion to the pressure plenum. In this case, having a snorkel with an inlet which extends directly into the pressure plenum, and not into the upper portion, may allow for pressure measurements even when the induction damper is closed.

A method of diffusing an airflow using a diffuser unit, the diffuser unit comprising:
a pressure plenum having an air inlet;
an air deflector through which air is discharged into a space, the air deflector comprising a plurality of discharge elements arranged to disperse the discharged air in a plane substantially parallel to a discharge face of the discharge unit, the air deflector forming an outlet to the pressure plenum;
a damper compartment located within the pressure plenum and connected to the air deflector so that the air deflector forms at least one facet of the damper compartment, the damper compartment being frusto-conical and having a plurality of damper apertures forming inlets to the damper compartment, the damper compartment further comprising at least one damper door, the damper door associated with a corresponding aperture and being operable between an open position and a closed position;
the method comprising:
   receiving a supply airflow with a variable supply airflow rate through the air inlet to the pressure plenum;
   opening one or more damper doors to allow an airflow into the damper compartment;
   creating a swirl airflow within the damper compartment; and
   allowing air to exit the diffuser unit into a space via the air deflector in a swirl in a plane substantially parallel to a discharge face of the discharge unit.

The damper door may describe a damper door angle. The damper door angle may be related to an amount of airflow permitted through the corresponding aperture.

The swirl airflow within the damper compartment may have a pitch angle. The pitch angle may be a pitch of the swirl airflow relative to a plane of a face of the air deflector for a majority of the swirl airflow in the compartment.

An airflow rate and pitch angle of the swirl airflow within the compartment may increase with increasing damper door angle.

The method may further comprise maintaining an attachment between an airstream exiting the air deflector and a face of the air deflector. The air deflector may comprise diffuser blades, wherein the method comprises maintaining the attachment by the diffuser blades. The air deflector may comprise a perforated plate, wherein the method comprises maintaining the attachment by the perforated plate acting as a baffle plate.

The method may comprise closing the damper door and achieving an elevated throw from the air exiting the air deflector. The method may comprise closing the damper door. Closing the damper door may achieve a higher distal tangential velocity relative to a proximal tangential velocity of the swirl airflow within the damper compartment. The airstream exiting the air deflector may then comprise an extended throw and a reduced airflow rate. The static pressure within the pressure plenum may be substantially constant. A throw of the airstream exiting the air deflector may be substantially constant as the damper doors close or may be greater than if the tangential velocity distribution of the air deflector were substantially constant.

The method may comprise substantially or fully closing the damper door. A small but non-negligible swirl airflow may be formed in the compartment when the damper door is substantially or fully closed. In this case, the airstream exiting the diffuser unit via the air deflector may do so in a swirl in the plane substantially parallel to the discharge face of the discharge unit.

The unit may comprise more than one door. The method may comprise locking one or more doors.

The unit may comprise a blanking segment and the method may comprise using the blanking segment to obstruct a portion of airflow though the unit.

The method may comprise sensing a temperature of a supply air and/or a temperature of the space. The doors may be operated in response to a determined temperature. The doors may be operated in dependence on a temperature of a supply air and/or a temperature of the space.

The unit may comprise an induction chamber having induction inlets, the method comprising drawing air into the induction chamber from the space through induction caused by an airstream through the induction inlets derived from the pressure plenum to form a combined airflow which exits through the diffuser outlet. The induction chamber may be defined by a divider situated in a core portion of the diffuser unit.

The combined airflow which exits through the diffuser outlet may do so in a substantially 360° pattern in the plane substantially parallel with the diffuser face. The combined airflow which exits through the diffuser outlet may project away from the diffuser outlet in the direction substantially parallel to the plane defined by the face of the diffuser outlet. The combined airflow which exits through the diffuser outlet may act to arrest leakage from the damper doors. This may help to prevent short-circuiting of the leakage into the induction chamber.

A further embodiment relates to a method of determining an airflow rate for a diffuser unit, the diffuser unit comprising:
a pressure plenum having an air inlet receiving a supply airflow with a variable supply airflow rate;
an air deflector through which air is discharged into a space, the air deflector comprising a plurality of discharge elements arranged to disperse the discharged air in a plane substantially parallel to a discharge face of the diffuser unit, the air deflector forming an outlet to the pressure plenum;
a damper compartment located within the pressure plenum and connected to the air deflector so that the air deflector forms at least one facet of the damper compartment, the damper compartment having a plurality of damper apertures forming inlets to the damper compartment, the damper compartment further comprising a plurality of damper doors, the damper doors being associated with a corresponding aperture and each damper door being operable between an open position and a closed position;
the method comprising:
   determining a static pressure in the pressure plenum;
   determining a position of each of the damper doors; and
   calculating a supply airflow rate with reference to the determined static pressure and door positions.
The damper compartment and the damper apertures may be arranged so that air entering the damper compartment through the damper apertures from the pressure plenum forms a swirl before exiting the damper compartment through the air deflector.

The position of the door may be operable between an open position and a closed position, and a plurality of intermediate positions between the open position and the closed position.

The door may be actuated by a drive. The position of the door may be determined with reference to the drive. The drive may increment a counter and the position may be determined with reference to the counter.

The unit may comprise a switch which is activated when the door is closed or open to zero the counter.

### Detailed Description of the Drawings

In the following detailed description, reference is made to accompanying drawings, which are not to scale and which form a part of the detailed description.

The same part number is used for the same part if it appears across multiple figures.

The illustrative embodiments described in the detailed description, depicted in the drawings and defined in the claims, are not intended to be limiting. Other embodiments may be utilised, and other changes may be made without departing from the spirit or scope of the subject matter presented. It will be readily understood that the aspects of the present disclosure, as generally described herein and illustrated in the drawings can be arranged, substituted, combined, separated and designed in a wide variety of different configurations, all of which are contemplated in this disclosure.

Embodiments will now be described, by way of example only, with reference to the accompanying drawings in which:
Figure 1a is a diagram illustrating a typical thermal actuator variable geometry VAV ceiling diffuser of the prior art, with a substantially throttled damper plate;
Figure 1b is a diagram illustrating a typical electric actuator variable geometry VAV ceiling diffuser of the prior art with a substantially open damper plate;
Figures 2a to 2c are diagrams illustrating a typical electric actuator variable geometry VAV ceiling swirl diffuser of the prior art with substantially open, substantially closed and substantially throttled damper plate, respectively;
Figures 3a to 3c are diagrams illustrating a typical improved electric actuator variable geometry VAV ceiling swirl diffuser of the prior art with substantially throttled, substantially closed and substantially open damper plate, respectively;
Figures 4a to 4f are diagrams illustrating embodiments according to the present invention of a thermal actuator VAV cyclone swirl diffuser with a rotatory damper;
Figures 4g to 4l are diagrams illustrating alternative embodiments according to the present invention of an actuator driven VAV cyclone swirl diffuser with rotary damper;
Figures 5a to 5e are diagrams illustrating a preferred embodiment of an actuator driven VAV cyclone swirl diffuser with swirl vane discharge face;
Figures 6a and 6b are diagrams illustrating an alternative actuator driven VAV cyclone swirl diffuser with perforated discharge face in accordance with an embodiment of the present invention;
Figures 7a to 7c are diagrams illustrating an actuator driven VAV cyclone swirl diffuser with an alternative damper embodiment according to another embodiment of the present invention;
Figures 7d to 7f are diagrams illustrating discharge pattern blanking segments in accordance with an embodiment of the present invention;
Figures 8a to 8f are diagrams illustrating a swirl damper arrangement and electric actuator with worm gear mechanism for a VAV cyclone swirl diffuser in accordance with an embodiment of the present invention;
Figure 8h is a diagram illustrating door locks on each swirl damper door in accordance with an embodiment of the present invention;
Figures 8i to 8l are diagrams illustrating an alternative damper door locking mechanism in accordance with an embodiment of the present invention;
Figures 9a to 9p are diagrams illustrating swirl damper doors of two differing sizes and staggered operation, as well as damper door noise reduction features in accordance with an embodiment of the present invention;
Figures 10a to 10c are diagrams illustrating a swirl damper arrangement and electric actuator with planetary gear mechanism for a VAV cyclone swirl diffuser in accordance with an embodiment of the present invention;
Figures 11a and 11b are diagrams of embodiments of the present invention illustrating removal from below of the electric actuator, sensors and PC board;
Figures 12a and 12b are isometric views of embodiments of the present invention illustrating removal from below of the electric actuator, sensors and PC board;
Figure 13a is an isometric side-section view illustrating an embodiment illustrated schematically in figures 10a to 10c and 11b;
Figure 13b is an isometric side-section view illustrating an embodiment illustrated schematically in figures 5, 8a to 8h, 9c, 9d, 9g, 9j, 9p and 11a, including fully open damper doors and half-sized damper doors;
Figure 13c is an isometric top-section view of the embodiment shown in figure 13b, but with only half-sized damper doors shown open; and
Figures 14a shows an example comprising a cylindrical swirl damper arrangement not covered by the present invention. Figures 14b and 14c are diagrams illustrating conical swirl damper arrangements, side-entry and top-entry connection boxes, and a multi-cone discharge element.

### Detailed Description of the Embodiments

The embodiments, as described herein, relate generally to an air diffuser assembly for ceiling discharge with an air supply supplied from a pressure plenum or duct.

For reasons of simplicity, the illustrations below show the diffuser discharge openings largely coincident with a plane that is coincident with the diffuser discharge plane. It will be appreciated by persons skilled in the art that the discharge openings need not be coincident with a plane (for example, they may lie on a curved surface) and that they need not be coincident with the diffuser discharge plane (which, for example, may be a perforated plate further downstream).

For reasons of simplicity, power supply and communications cabling to diffusers and within diffusers is not shown.

**It** will be appreciated by persons skilled in the art that numerous variations and/or modifications may be made as shown in the specific embodiments without departing from the spirit or scope of the description. The present embodiments are, therefore, to be considered in all respects as illustrative and not restrictive.

Any reference to prior art contained herein is not to be taken as an admission that the information is common general knowledge, unless otherwise indicated.

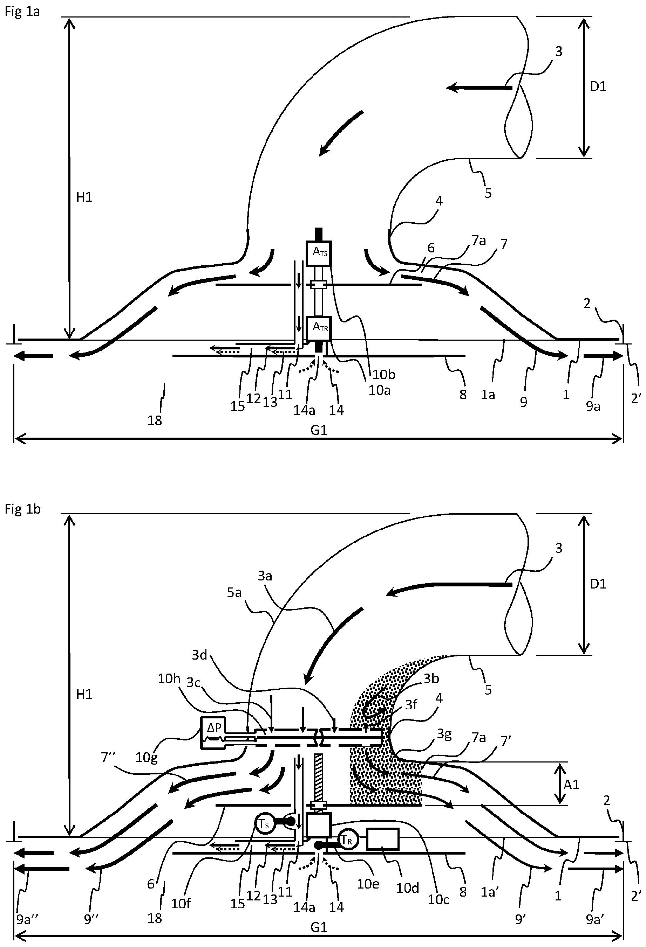

Figures 1a and 1b are diagrams illustrating side section views of a typical thermal actuator, and electrical actuator, VAV ceiling diffuser of the prior art, 1a and 1a', each with four-way or radial discharge of discharged airstream 9 of low flow rate, and 9' and 9" of high flow rate, respectively, relative to the diffuser design airflow rate (i.e. the maximum required airflow rate to achieve the maximum cooling or heating capacity for the application in question) in which diffuser face 1 rests in ceiling grid Trail 2 with ceiling grid centres G1 of approximately 600 mm, and in which the plane of diffuser face 1 is substantially coincident with the plane of ceiling grid underside 2', which in turn defines the plane of the ceiling (not shown), and in which supply airstream 3 of low airflow rate in figure 1a and of high airflow rate in figure 1b, flows into diffuser spigot 4 from supply air duct 5. Not shown is a supply air fan or motorised damper upstream of supply air duct 5 to blow supply air 3 into supply air duct 5 at a substantially constant static pressure upstream of diffuser spigot 4, or a relief air damper upstream of diffuser spigot 4 to relieve excessive air pressure. A damper 6, shown substantially throttled in figure 1a, and fully open in figure 1b to dimension A1 of discharge aperture 7a, may be used to adjust the airflow rate of damper airstream 7 in figure 1a, by adjustment from a room air thermal actuator 10a and a supply air thermal actuator 10b, responding to room air temperature and supply air temperature, respectively; or to adjust the airflow rate of damper airstream 7' in figure 1b, by adjustment from an electric actuator 10c, responding to a control signal from printed circuit board (PCB) 10d in response to inputs from room air temperature sensor 10e, room supply air temperature 10f and dynamic air pressure sensor 10g. Airflow rate adjustment of low and high damper airstreams 7 and 7' occurs at a substantially constant velocity for a substantially constant static pressure of airstream 3 by varying the position of damper 6, bringing about increases or decreases to both the airflow rate and throw of discharged airstream 9, or 9' and 9", which, in turn, each attach to diffuser face 1 and the adjoining ceiling (not shown) via Coanda effect suction to project into room 18 as diffuser airstream 9a of low airflow rate, or 9a' and 9a" of high airflow rate without dumping.

Also shown in figures 1a and 1b is induction nozzle 11, located behind diffuser face plate 8 (typically a round or square plaque) located parallel to but offset from the plane of diffuser face 1 so that the plane of face plate 8 is lower than the plane of ceiling grid underside 2', discharging primary airstream 12 and inducing secondary airstream 13 into induction channel 15, thereby drawing replenishment airstream 14 from room 18 via face plate inlet 14a across room temperature sensor 10e.

For maintenance access from room 18, diffuser face plate 1b may fold down to provide access to damper 6 and the associated mechanism, actuators 10a, 10b and 10c, sensors 10e and 10f, and PC board 10d, or the above components may be attached to removable diffuser face plate 8.

Advantageously, the changes in throw to a terminal velocity of 0.25 m/s of diffuser airstream 9a, or 9a' and 9a", due to changes in position of damper 6, are not as great as they would be if both the airflow rate and static pressure of supply airstream 3 were to be increased or decreased simultaneously, as would occur if damper 6 were located well upstream of diffuser spigot 4, as throw is proportional to the square root of airflow rate multiplied by the square root of the discharge velocity, but discharge velocity, in the VAV diffuser of the prior art described above, is maintained to be substantially constant. The resultant reduced sensitivity of throw to airflow rate adjustment reduces the degree of over-throw and under-throw of the diffuser airstream 9a, or 9a' and 9a", into room 18, thereby potentially improving comfort levels in the occupancy space compared to those that would have been achieved in a traditional VAV system with non-variable geometry VAV diffusers (often referred to as fixed aperture diffusers). A further advantage is that discharged airflow 9, or 9' and 9", can be turned down to a lower airflow rate without dumping given that Coanda effect attachment of diffuser airstream 9a, or 9a' and 9a" to the ceiling is maintained even at extremely low airflow rates due to the substantially constant velocity of discharged air stream 9, or 9' and 9".

Figure 1b shows the centrifugal effect bias of high supply airflow rate 3a towards the outer edge of curved duct 5a and potential stalling and turbulence 3b along the inner edge of curved duct 5a resulting in both high dynamic pressure 3c and low dynamic pressure 3d, and potential negative dynamic pressure 3f, into pressure tube array 10h, and low static pressure region 3g causing both a low damper airstream 7' and a high damper airstream 7", in turn leading to asymmetric airflow rate and throw of diffuser airstreams 9a' and 9a" due to low and high velocities of discharged airstreams 9'and 9", respectively. Additionally, inaccuracies in measuring dynamic pressure, and hence in calculating the airflow rate of supply airstream 3 occur, in particular at high airflow rates due to the uneven dynamic pressure distribution and turbulence into pressure tube array 10h.

Inaccurate airflow measurements also occur at low airflow rates due to the extremely low dynamic pressure of airstream 3a when the velocity of supply airstream 3 is low, as dynamic pressure is proportional to the square of the velocity, and the air velocity is very low at low airflow rates.

The top entry of supply duct 5 requires substantial ceiling void height H1 (typically 500 mm to 800 mm), which may be disadvantageous.

Disadvantageously, face plate 8 protrudes into room 18 as it is lower than the plane of ceiling grid underside 2', which may be architecturally undesirable.

For optimised airflow rate adjustment authority by damper 6 without excessive pressure drop, the ratio of the diffuser spigot 4 area to the annular area of maximum damper aperture 7a should be substantially constant for all diameters - and hence for the maximum airflow rate capacities - of diffuser spigot 4, which requires that both the diameter of damper 6 and the maximum stroke A1 of aperture 7a increase approximately in direct proportion to the diameter of diffuser spigot 4. Diffuser spigot 4 is usually round and typically available in one of five nominal diameters, viz 150 mm, 200 mm, 250 mm, 300 mm and 350 mm, suitable for increasing ranges of airflow up to approximately 300 to 330 L/s at a maximum sound power level of approximately 45 dB(A), which equates to a sound pressure level of approximately NC 30 in room 18 based on 10 dB room absorption, and hence damper 6 as well as the maximum damper stroke A1 of aperture 7a are typically sized to suit these different diffuser spigot diameters; though it should be noted that the diffuser static pressure at approximately 300 to 330 L/s is typically well in excess of 40 Pa, which is substantially above the preferred maximum static pressure of 30 Pa to minimise fan energy requirements. Consequently, diffuser dampers and associated mechanism stroke are not interchangeable between diffuser spigot sizes if optimum performance is to be achieved across all spigot sizes.

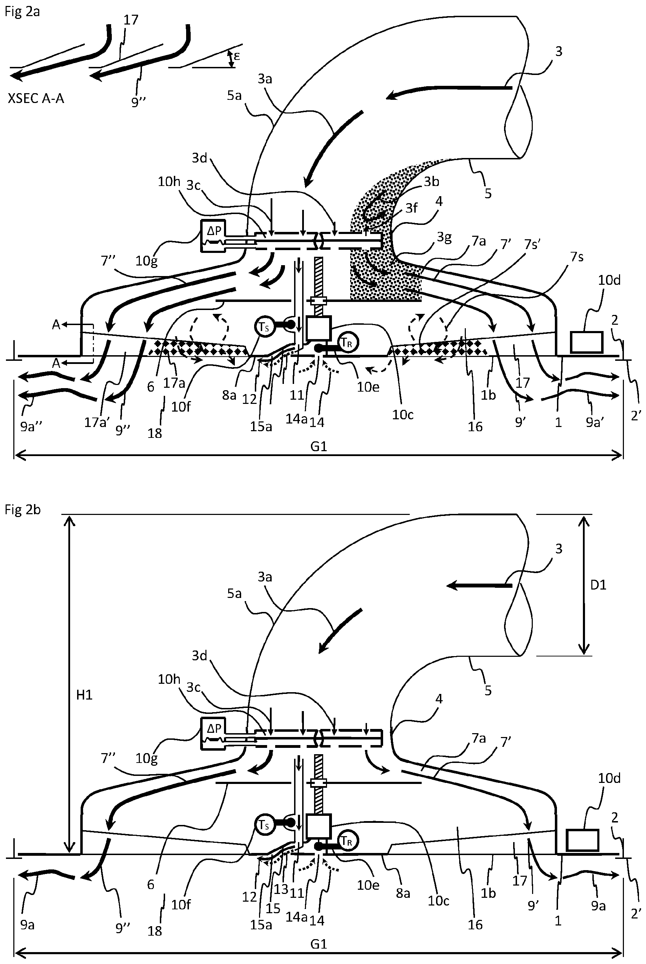

Figures 2a and 2b are diagrams illustrating side section views of an electric actuator VAV ceiling swirl diffuser of the prior art 1b, in which damper airflow 7' and 7" of high airflow rate, and damper airflow 7' and 7" of low airflow rate, respectively, are discharged into diffuser chamber 16 and then flow onto radially aligned swirl vanes 17, which impart swirl onto discharged airstream 9'and 9" of high airflow rate, or discharged airstream 9'and 9" of low airflow rate, respectively, to be directed substantially in the plane of diffuser face 1 to attach, via Coanda effect suction, onto diffuser face 1 and the adjoining ceiling (not shown) as highly turbulent diffuser airflow 9a' and 9a" of high airflow rate, or 9a of low airflow rate.

Also shown is induction nozzle 11, located behind diffuser hub 8a, discharging primary airstream 12 and inducing secondary airstream 13 into induction channel 15, both of which are then discharged through hub discharge opening 15a, and drawing replenishment airstream 14 from room 18 via face plate inlet 14a across room temperature sensor 10e.

Advantageously, high induction swirl diffuser discharge 9a, 9a' and 9a" may improve thermal comfort in room 18 at both high and low airflow rates, and enables the use of a lower temperature of supply airstream 3 without dumping.

Advantageously, no part of diffuser 1b protrudes into room 18 as no part is located below the plane of diffuser face 1, which in turn is substantially coincident with the plane of ceiling grid underside 2'.

Potentially disadvantageously, the multiple abrupt changes in direction of the air from supply airstream 3 to diffuser airstream 9a' and 9a" result in an extremely high pressure drop and airflow noise generation, especially at high airflow rates. Furthermore, damper 6 blocks discharged airstream 7'and 7" from blowing onto the full radial length of each swirl blade 17, resulting in inactive swirl blade portions 17a even at high airflow rates when damper 6 is fully open, causing a high pressure drop of the active swirl blade portions 17a'. This further increases pressure drop and airflow noise, whilst severely limiting maximum airflow capacity, typically to less than 200 L/s at a sound power level of 45 dB(A), whilst also creating supply stream eddies 7s and eddy discharge 7s' towards diffuser hub 8a, partially short-circuiting into induction inlet 14a, thereby leading to inaccurate room temperature sensing by room temperature sensor 10e.

Substantial ceiling void height H1, typically of 450 to 750 mm, is required, which may be disadvantageous.

Maintenance access to damper 6 and the associated mechanism, actuator 10c, sensors 10e and 10f, and PCB 10d is not available from room 18 due to space restrictions and the complexity that would be required to seal induction system components against the positive pressure of diffuser chamber 16.

As with the non-swirl actuator VAV diffusers of the prior art shown in figures 1a and 1b, when operating at high airflow rates, asymmetric discharge occurs and pressure sensor 10g dynamic pressure measurements are inaccurate, due to the top entry bend 5a in supply duct 5. At low airflow rates, dynamic pressure measurements are also inaccurate, due to the low velocity of supply airstream 3.

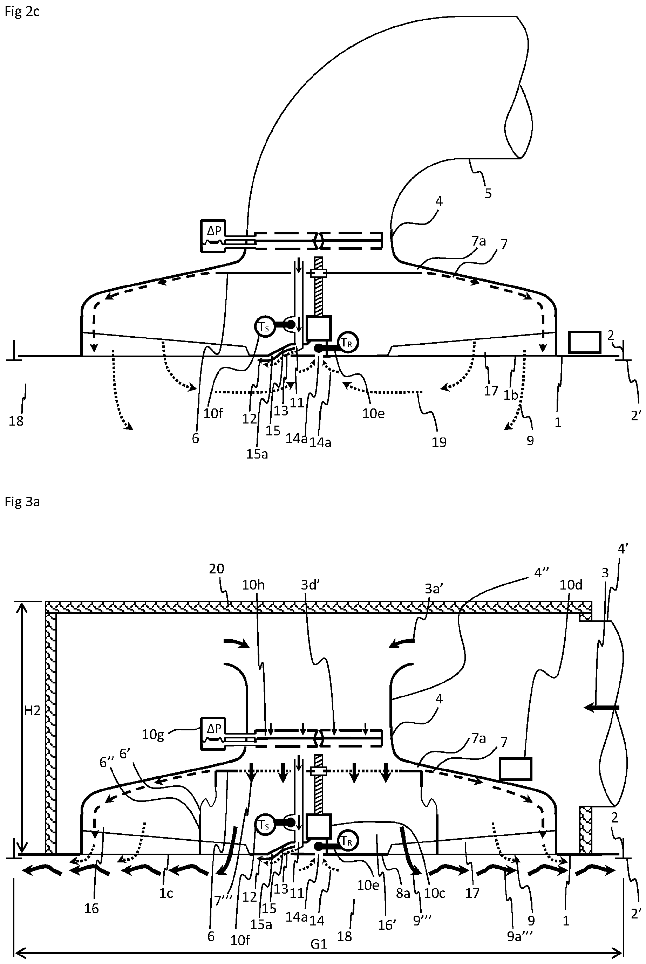

Figure 2c is a diagram that shows the prior art embodiment depicted in figures 2a and 2b, with damper 6 closed or almost fully closed, such that the damper airstream 7, produced by the small damper aperture 7a or by leakage, has insufficient momentum to produce a discharge airstream that attaches to diffuser face 1 upon passing through swirl blades 17. Instead, short-circuiting occurs, as low velocity discharged airstream 9 creates an air pocket 19 beneath the diffuser face 1 that is drawn into induction inlet 14a and over room air temperature sensor 10e. The temperature of air pocket 19 is strongly influenced by the temperature of discharged airstream 7, and therefore may deviate substantially from the temperature of the room air 18, resulting in erroneous room air temperature measurements by room air temperature sensor 10e.

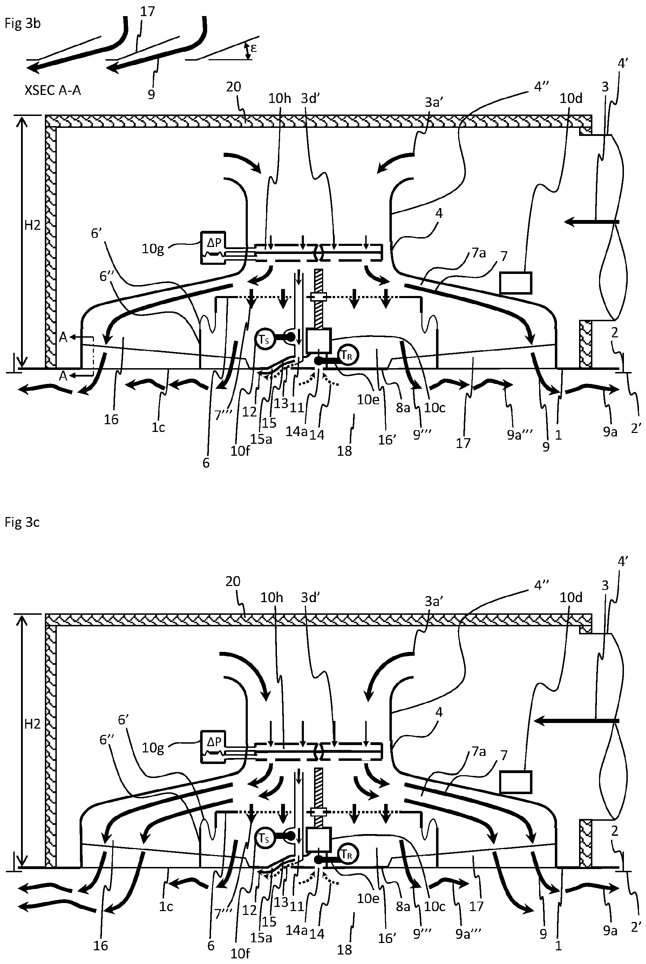

Figures 3a to 3c are diagrams illustrating the side section views of an alternative embodiment of an electrical actuator VAV ceiling swirl diffuser of the prior art 1c, in which damper 6 is shown with damper aperture 7a substantially closed, substantially throttled, and fully open, respectively.

Supply air 3 passes through side-entry spigot 4' into connection box 20. Bellmouth inlet extension 4" attached to diffuser spigot 4 directs supply airstream 3a' onto pressure tube array 10h with substantially uniform dynamic pressure 3d' to achieve reliable dynamic pressure readings by pressure sensor 10g when supply airstream 3a' is high. In order to ensure substantially unrestricted airflow of supply airstream 3a', a connection box height H2 of approximately 350 mm is required for a supply airflow rate 3 of approximately 200 L/s.

Not shown are embodiments with a connection box height H2 of approximately 250 mm and which exclude bellmouth inlet extension 4", pressure sensor 10g and dynamic pressure tube array 10h (which would provide unstable dynamic pressure measurements in the absence of bellmouth inlet extension 4"). It will be apparent to a person skilled in the art that such embodiments will result in substantially increased pressure drop and airflow noise, and will not be suitable for applications that require the volume flow rate of supply air 3 to be determined within diffuser 1c.

Damper 6 is perforated and is sealed via bellows 6' to shroud 6" that, in turn, seals to the proximal portion of swirl blades 17 radiating from hub 8a, all of which encompass damper chamber 16'. Pilot airstream 7‴ flows into damper chamber 16' and is discharged by the proximal portion only of swirl blades 17 into room 18 as discharged pilot airstream 9‴ which attaches to diffuser face 1 and surrounding ceiling (not shown) by Coanda effect suction as diffuser pilot airstream 9a"', which induces low velocity discharged airstream 9 in figure 3a away from induction inlet 14a even when damper aperture 7a is substantially closed or leaking. Pilot airstream 7‴ and discharged pilot airstream 9‴ are typically 25% of supply airstream 3 when damper 6 is fully open as shown in figure 3c. Consequently, turndown to less than approximately 25% is not possible (figure 3a).

The minimum turndown percentage and the minimum airflow rate are pressure dependent. For example, if system static pressure rises above the pressure (typically approximately 30 Pa) at which supply airstream 3 is equal to a desired diffuser design airflow rate delivered when damper 6 is fully open, then pilot airstream 7‴ and discharged pilot airstream 9‴ will increase to above 25% of the desired diffuser design airflow rate. For example, if the system static pressure at the diffuser were to rise from 30 Pa to 60 Pa (which is the typical maximum permissible pressure to prevent excessive noise generation) then the effective diffuser turndown would increase from 25% to 35% relative to the design airflow rate. Such high and pressure dependent diffuser turndown is disadvantageous.

Figures 4a to 4l are diagrams illustrating side section and top section views of a VAV cyclone swirl diffuser 1d with rotary damper 6a and one supply air thermal actuator 10b and one room air thermal actuator 10a, as an embodiment, suitable for both cooling and heating applications.

An alternative cooling-only embodiment (not shown) does not include the supply air thermal actuator 10b.

Aperture 7a is adjusted by rotary damper 6a rotating on ball bearings or sliders 22 in response to room air thermal actuator 10a and supply air thermal actuator 10b expanding or contracting due to the temperature of room air and supply air drawn across each, respectively. Not shown is a supply air fan or motorised damper blowing supply air 3 at a substantially constant static pressure upstream of side-entry spigot 4' into connection box 3.

Figures 4a and 4b are top section and side section views, respectively, in which rotary damper 6a is rotated about diffuser centre-line 0 and damper housing 6b, equipped with externally located cyclone inlet vanes 6c, such that damper aperture 7a is fully open. Supply airstream 3 of high airflow rate relative to the diffuser design airflow rate (i.e. the maximum required airflow rate to achieve the maximum cooling or heating capacity for the application in question) passes into connection box 20 through side-entry spigot 4' via perforated baffle plate 21, which spreads supply airstream 3, to flow as damper airstream 7b of high airflow rate and with swirl 23 of high tangential velocity into cyclone plenum 16" substantially bounded by housing 6b in the form of a truncated cone, and is discharged through 360°, in a plane substantially parallel with diffuser face 1, by discharge cone 100 into room 18 as discharged airstream 9 of high airflow rate and high swirl with high tangential velocity, and is deflected by the full span of swirl blades 17 external to shroud 6" to attach to diffuser face 1 and surrounding ceiling (not shown) by Coanda effect suction as diffuser airstream 9a of high airflow rate and high velocity that spreads in a plane substantially coincident with or parallel to diffuser face 1, which in turn is substantially coincident with the plane of ceiling grid underside 2' that defines the plane of the ceiling (not shown).

Advantageously, no part of diffuser 1d protrudes into room 18 as no part is located below the plane of diffuser face 1, and hence below the plane of ceiling grid underside 2'.

**In** an alternative embodiment spigot 4' is located on top of connection box 20.

**In** yet a further embodiment, diffuser 1d is freely suspended in room 18, rather than diffuser face 1 resting in ceiling grid 2.

A divider, in the form of a mounting plate 42, divides the cavity in the core here encapsulated by the shroud 6" into a primary chamber 54 and a secondary chamber 14b. A protrusion, here in the form of a cylinder 6‴, extends up from the region near the face of the diffuser unit and into the second chamber forming a venturi wall. The void between the venturi wall 6‴ and the mounting plate 42 forms an induction inlet 15'. The conduit between the venturi wall 6‴ and shroud 6" forms a venturi.

Primary air 12' flows across supply thermal element 10b in primary chamber 54, before being discharged by induction nozzle array 11' into induction channel 15 as primary airstream 12 to induce secondary airstream 13 from secondary chamber 14b through induction inlet 15' above venturi wall 6‴ into the upper portion 52 of induction channel 15, with both airstreams then being combined and discharged as discharged pilot airstream 9‴ by the proximal portion only of swirl blades 17 contained within shroud 6", thereby drawing replenishment airstream 14 into secondary chamber 14b and across room thermal actuator 10a from room 18 via face plate inlet 14a in hub cap 8b.

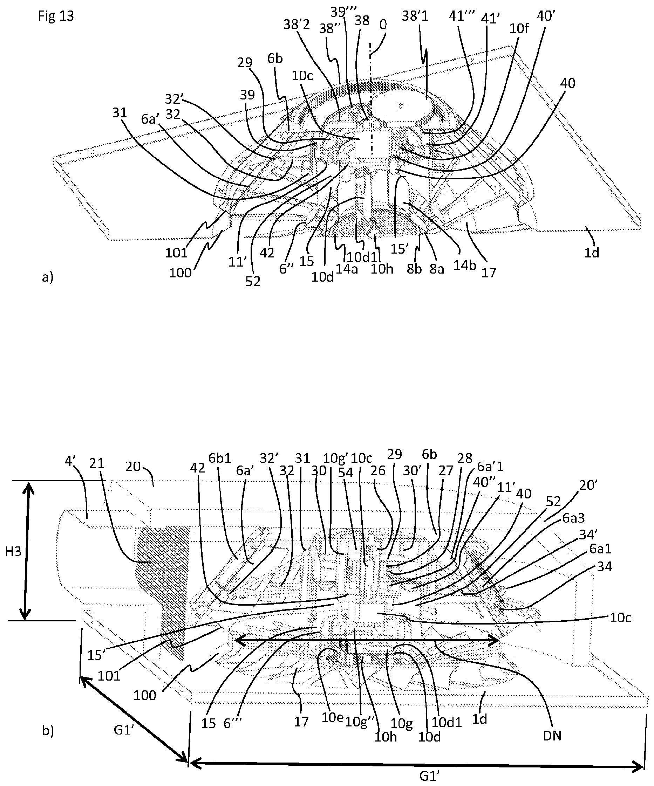

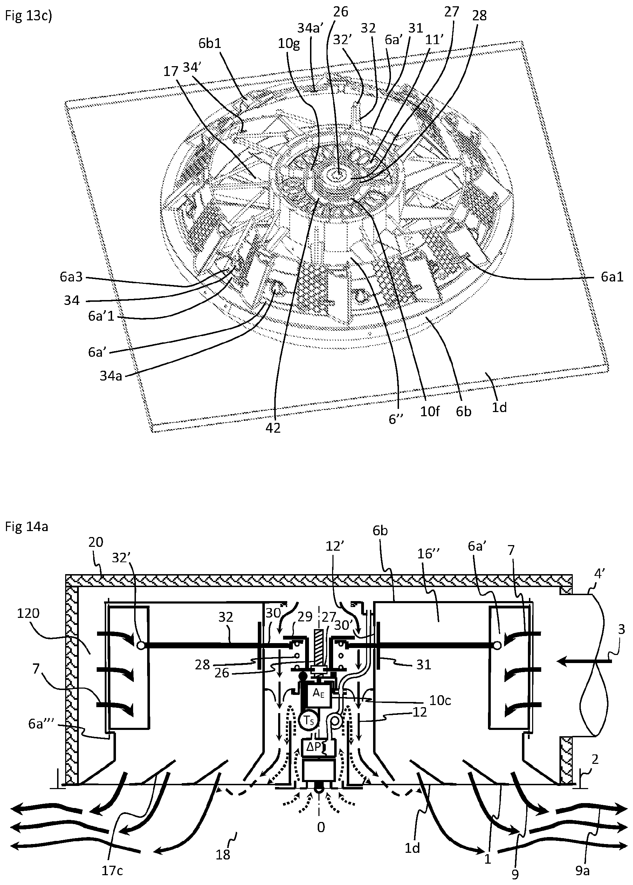

As better illustrated in Figure 13, the nozzles of induction nozzle array are angled relative to a central axis of the unit. This provides the discharged pilot airstream 9‴ with a swirl, to match the diffuser airstream 9a, and venturi wall 6‴ (Figure 13b) restricts induction channel 15, creating negative static pressure, increasing the inducement of secondary airstream 13 through induction inlet 15'.

Primary airstream 12 is typically no more than about 10% of supply airstream 3 when damper 6 is fully open, as shown in figure 4a.

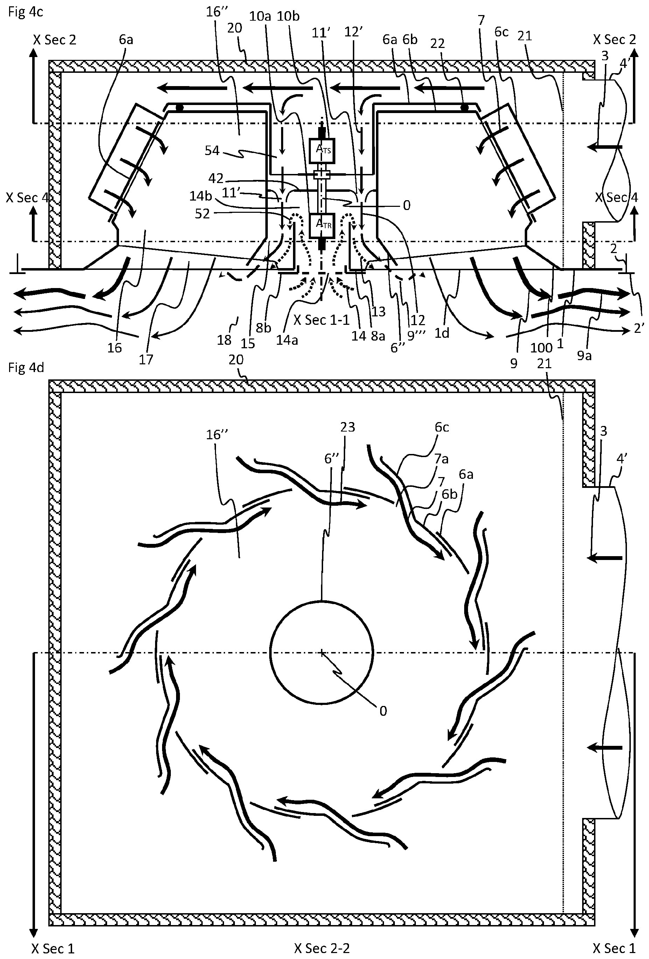

Figures 4c and 4d are top section and side section views, respectively, of the embodiment shown in figures 4a and 4b with damper aperture 7a partially throttled. Supply airstream 3 of medium airflow rate relative to the diffuser design airflow rate (i.e. the maximum required airflow rate to achieve the maximum cooling or heating capacity for the application in question) passes into connection box 20 through side-entry spigot 4', to flow into cyclone plenum 16" substantially bounded by housing 6b in the form a truncated cone as damper airstream 7b of medium airflow rate generating swirl 23 of both higher distal tangential velocity and lower proximal tangential velocity, and is discharged through 360°, in a plane substantially parallel with diffuser face 1, by discharge cone 100 into room 18 as discharged airstream 9 of medium airflow rate and swirl with higher distal tangential velocity and lower proximal tangential velocity towards shroud 6", and is deflected by at least the distal portion of swirl blades 17 external to shroud 6" to attach to diffuser face 1 and surrounding ceiling (not shown) by Coanda effect suction as diffuser airstream 9a of medium airflow rate that spreads in a plane substantially coincident with or parallel to diffuser face 1, achieving a higher throw of diffuser airstream 9a relative to that which would be achieved if discharge airstream 9 had a substantially uniformly spread velocity across the span of swirl blades 17 external to shroud 6".

**It** will be apparent to a person skilled in the art that since diffuser throw (not shown) to a fixed terminal velocity (typically taken as 0.25 m/s) is proportional to the square root of the product of volume flowrate and discharge velocity, diffuser throw at a medium airflow rate, as generated by medium damper aperture 7a in figures 4c and 4d, will be less than diffuser throw at a high airflow rate, as generated by large damper aperture 7a in figures 4a and 4b, assuming substantially constant static pressure of supply airstream 3 to side-entry spigot 4', given that volume flow rate has decreased even though distal discharge velocity has remained substantially constant.

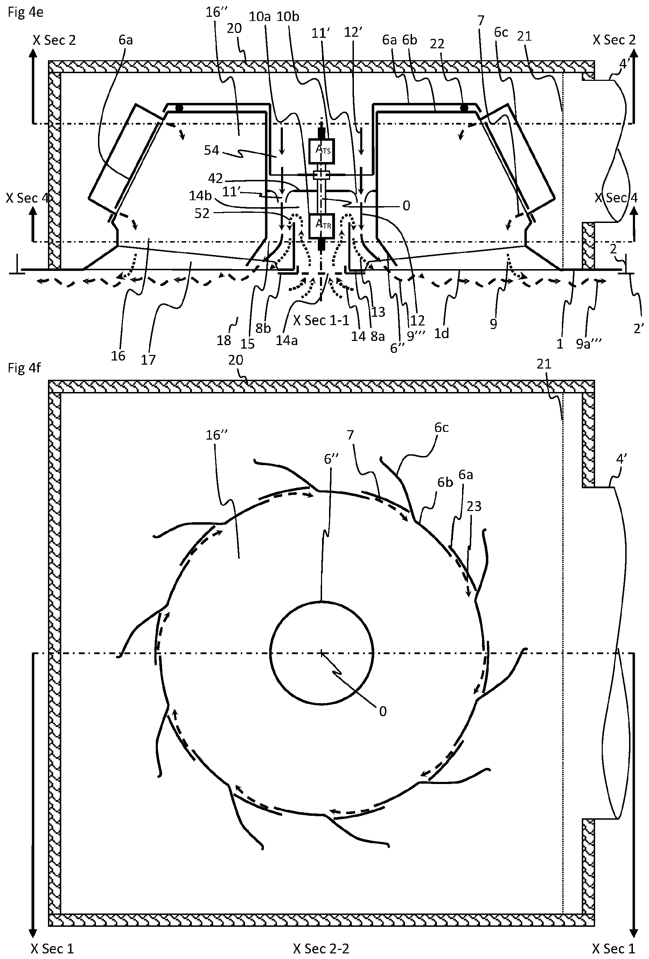

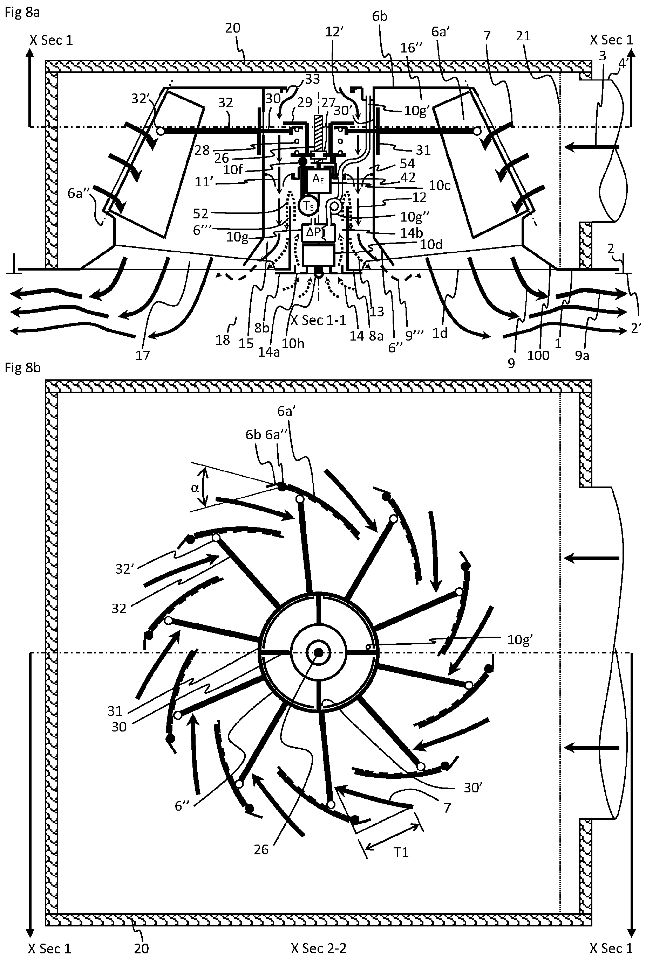

Figures 4e and 4f are top section and side section views, respectively, of the embodiment shown in figures 4a and 4b with damper aperture 7a fully closed. Advantageously, leakage or small damper airstream 7 when damper 6a is fully closed or slightly open may produce swirl 23 that brings about early stability of discharged airstream 9 to produce Coanda effect attachment to diffuser face 1 and the surrounding ceiling (not shown). Furthermore, pilot airstream 9‴, made up of primary airstream 12 and secondary airstream 13, is discharged through 360°, in a plane substantially parallel with diffuser face 1, with sufficient momentum to attach to diffuser face 1 and surrounding ceiling (not shown) by Coanda effect suction as diffuser pilot airstream 9a"', which induces low velocity discharged airstream 9 produced by leakage through damper aperture 7a of damper airstream 7, improving the stability and increasing rotational momentum of discharged airstream 9 at very low airflow rates, thereby improving throw when damper airstream 7 is strongly throttled and reducing the risk of dumping or short-circuiting into face plate inlet 14a when leaking, as well as enabling variable air volume (VAV) turndown to extremely low airflow rates. These principles, and the operation of the induction system, are discussed in further detail in figures 8a to 8f.

Alternative embodiments utilising an electric actuator, rather than one or more thermal actuators, to rotate rotary damper 6a are possible.

Many alternative embodiments of rotary damper 6a and damper housing 6b are possible to achieve swirl 23 of substantially constant distal tangential velocity in cyclone plenum 16" for both high and medium damper aperture 7a settings, corresponding to high and medium airflow rates 7, respectively, and hence may achieve substantially constant distal velocity of discharged airstream 9 and diffuser airstream 9a across a broad range of damper apertures 7a for supply airstream 3 of substantially constant static pressure at side-entry spigot 4'. Examples of two such alternative embodiments are shown in figures 4g to 4l.

Figures 4g and 4h are diagrams illustrating an alternative embodiment of rotary damper 6a and damper housing 6b in which cyclone inlet vanes 6c' are externally located on rotary damper 6a. Swirl 23 of high tangential velocity results from high damper airstream 7 when aperture 7a is fully open, as shown in figure 4g. Not shown is swirl 23 of high distal tangential velocity and reduced proximal tangential velocity when partially throttled damper aperture 7a produces medium damper airstream 7, similar to figures 4c and 4d. Disadvantageously, opposing leakage airstreams 7' of no swirl are created when rotary damper 6a is fully closed(figure 4h) or almost fully closed, which may destabilise diffuser pilot airstream 9a‴ (figure 4e).

Figures 4i to 4l are diagrams illustrating an alternative embodiment of rotary damper 6a and damper housing 6b in which cyclone inlet vanes 6c' are internally located on rotary damper 6a and are fashioned to only partially overlap fully open damper aperture 7a, thereby producing damper airstream 7 of maximum airflow rate and reduced swirl 23' with weak tangential velocity, as shown in figure 4i, which is in contrast to damper airstream 7b of reduced airflow rate and increased swirl 23 with increased distal tangential velocity, as shown in figure 4j. Advantageously, for a broad range of rotary damper 6a positions, this embodiment may achieve increasing distal velocity of discharged airstream 9 as the volume flowrate of discharged airstream 9 reduces, potentially achieving substantially constant throw of diffuser airstream 9a across a broad range of airflow rates. A further advantage of this embodiment is that damper airstream 7 or leakage, when rotary damper 6a is strongly throttled (figure 4k) or fully closed (figure 4l), respectively, is discharged with swirl 23, improving the stability and increasing rotational momentum of discharged airstream 9 at very low airflow rates, including to less than 15% of maximum airflow rate, thereby improving throw when strongly throttled or the stability of Coanda effect suction to diffuser face 1 when leaking, and enabling variable air volume (VAV) turndown to extremely low airflow rates without dumping. Disadvantageously, this embodiment partially obstructs fully open damper aperture 7a, thereby reducing maximum airflow rate.

The rotary damper doors shown in figures 4a to 4l rotate about diffuser centre-line 0, and are therefore pressure independent. Air pressure in connection box 20 does not exert forces on the damper mechanism, which is advantageous for mechanisms that include thermal actuators, as the forces generated by thermal actuators are generally weak.

Figures 5a and 5b are diagrams illustrating side section and top section views of an embodiment of a VAV cyclone swirl diffuser 1d, in which cyclone plenum 16" surrounds shroud 6" (housing the actuator, induction system, etc as previously described; all not shown for the sake of clarity), and is substantially bounded by a plurality of damper doors 6a', which, when all closed (not shown) substantially form a truncated cone about diffuser centre-line 0. Each damper door 6a' has a door axis of rotation 6a" coincident with or in close proximity to the leading edge of damper door 6a', and coincident with or in close proximity to damper housing 6b, and which, when viewed in plan view (figure 5b), is substantially radially aligned, such that each damper door 6a' substantially seals against damper housing 6b from the inside of cyclone plenum 16" when closed (not shown), and opens by swinging inwards through damper door angle α, opening damper aperture 7a between damper housing 6b and the trailing edge 6a‴ of damper door 6a'. Damper door trailing edge 6a‴ may be serrated to reduce vortex shedding from damper airstream 7, and thereby reduce airflow noise. Damper door angle α (figure 5b) is typically 25° to 30° when damper aperture 7a is fully open.

Advantageously, no part of diffuser 1d protrudes into room 18 as no part is located below the plane of diffuser face 1, which in turn is substantially coincident with the plane of ceiling grid underside 2'.

**In** an alternative embodiment, spigot 4', through which supply airstream 3 enters connection box 20, is located on top of connection box 20 instead of on the side.

**In** yet a further embodiment, diffuser 1d is freely suspended in room 18, rather than diffuser face 1 resting in ceiling grid 2.

For a given static pressure in connection box 20, the airflow rate and swirl pitch angle β of damper airstream 7 relative to a plane parallel to diffuser face 1 (figure 5a) increase with increasing damper aperture 7a, and hence with increasing damper door angle α. For small damper apertures 7a, and hence for small airflow rates of damper airstream 7 relative to the diffuser design airflow rate (i.e. the maximum required airflow rate to achieve the maximum cooling or heating capacity for the application in question), swirl pitch angle β is sufficiently small to achieve Coanda effect attachment of diffuser airstream 9a to diffuser face 1 and the surrounding ceiling (not shown) and spread in a plane substantially coincident with or parallel to diffuser face 1. For large damper apertures 7a, and hence for large airflow rates of damper airstream 7 relative to the diffuser design airflow rate (i.e. the maximum required airflow rate to achieve the maximum cooling or heating capacity for the application in question), swirl pitch angle β is too great to achieve stable Coanda effect attachment of diffuser airstream 9a to diffuser face 1 and the surrounding ceiling (not shown), in which case swirl blades 17 deflect discharge airstream 9 to reduce the angle of discharge from swirl pitch angle β to a sufficiently small discharge angle δ (figure 5a) to achieve Coanda effect attachment of diffuser airstream 9a to diffuser face 1 and the surrounding ceiling (not shown) and thereby spread diffuser airstream 9a in a plane substantially coincident with or parallel to the plane of diffuser face 1.

When damper aperture 7a is fully open, as shown in figures 5a and 5b, supply airstream 3 of high airflow rate passes into connection box 20 through side-entry spigot 4' via perforated baffle plate 21, which spreads supply airstream 3, with large damper door angle α imparting high tangential velocity onto damper airstream 7 of high airflow rate, producing swirl 23 in cyclone plenum 16" that is discharged through 360°, in a plane substantially parallel with diffuser face 1, by discharge cone 100 into room 18 as discharged airstream 9 of high airflow rate and swirl of high tangential velocity, and is deflected by the full span of swirl blades 17 external to shroud 6" to attach to diffuser face 1 and the surrounding ceiling (not shown) by Coanda effect suction as diffuser airstream 9a of high airflow rate and high velocity that spreads in a plane substantially coincident with or parallel to diffuser face 1.

**In** comparison to fully open damper aperture 7a and for the same static pressure in connection box 20, when damper aperture 7a is open to a medium setting (not shown) supply airstream 3 of reduced airflow rate passes into connection box 20 through side-entry spigot 4' via perforated baffle plate 21, which spreads supply airstream 3, to flow into cyclone plenum 16" as damper airstream 7 of reduced airflow rate and high tangential velocity (i.e. similar in velocity to when damper aperture 7a is fully open) to be discharged through 360°, in a plane substantially parallel with diffuser face 1, by discharge cone 100 into room 18 as discharged airstream 9 of reduced airflow rate with swirl of higher distal tangential velocity and lower proximal tangential velocity towards shroud 6", which is deflected by at least the distal portion of swirl blades 17 external to shroud 6" to attach to diffuser face 1 and surrounding ceiling (not shown) by Coanda effect suction as diffuser airstream 9a of reduced airflow rate that spreads in a plane substantially parallel to diffuser face 1, achieving a higher throw of diffuser airstream 9a, in a plane substantially coincident with or parallel to diffuser face 1, relative to that which would be achieved if the velocity were uniformly spread across swirl blades 17 external to shroud 6".

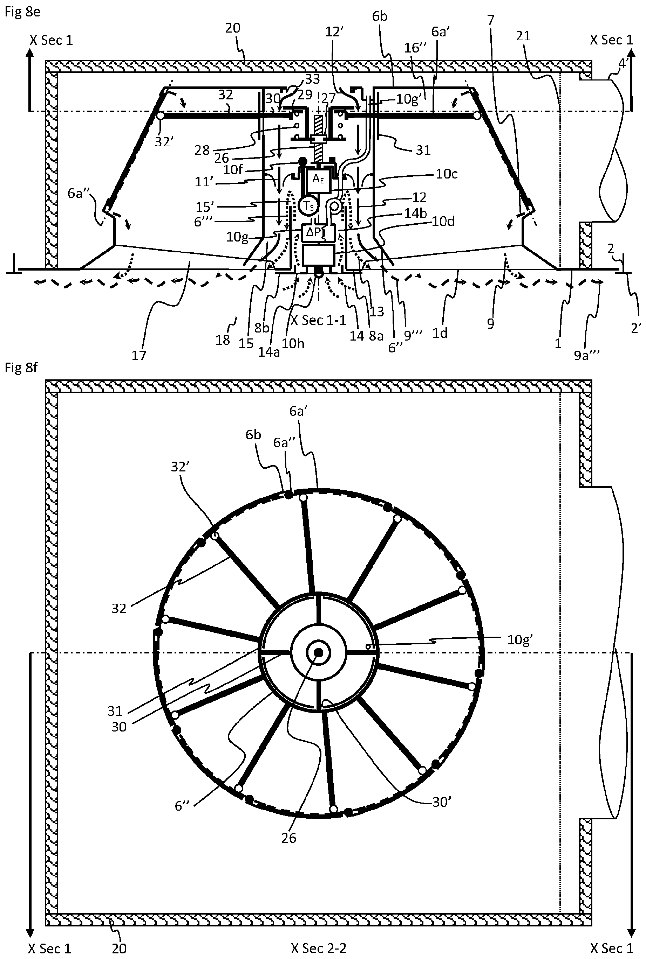

Similar to the airflow patterns shown in figures 4k and 4l, damper airstream 7 or leakage, when damper door 6a' is strongly throttled or fully closed but leaking, is discharged with swirl 23, improving the stability and increasing rotational momentum of discharged airstream 9 at very low airflow rates, thereby improving throw when strongly throttled or facilitating Coanda effect suction to diffuser face 1, reducing the risk of dumping when leaking, and enabling variable air volume (VAV) turndown to extremely low airflow rates, including to less than 15% airflow of that which is achieved when damper aperture 7a is fully open. This is further described in figures 8e and 8f.

**In** comparison to the embodiments shown in figures 4a to 4l, the embodiment in figures 5a and 5b may have a substantially higher maximum airflow rate capacity for a given connection box height H3 due to the large cumulative open area of damper aperture 7a in the latter. Additionally, the latter may have the advantage that compression door seals can readily be made to be air tight when damper doors 6a' shut, whereas the sliding action of rotary damper 6a in the former is more challenging to seal and is likely to result in leakage or increased friction to the operation of rotary damper 6a.

Figure 5c is a bottom view of an embodiment of swirl diffuser 1d with radially off-set swirl vanes 17 connected to diffuser face 1, and with pilot airstream 9‴ discharged through 360° in a plane substantially parallel with diffuser face 1 by shroud 6" of the induction system (not shown) and directed away from hub cap 8b, preventing short-circuiting into face plate inlet 14a as per embodiments described in figures 4a to 4f, 8a to 8g, 10a to 10c, and 11a and 11b.

Figures 5d and 5e are diagrams illustrating leading edge barbs 17' and angled trailing edge serrations 17", respectively, on an embodiment of swirl vanes 17 to reduce airflow noise, in which leading edge barbs 17" are curved by angle θ through radius R to a shallower leading edge angle than the angle ε of swirl vane 17 relative to a plane parallel to diffuser face 1, and trailing edge serrations 17" are angled by angle ε relative to swirl vanes 17 to be parallel to or coincident with diffuser face 1. Leading edge barbs are shown with successively increasing angle of absolute orientation, in plan-view, such that proximal barb centre-line angle δ2 is greater than distal barb centre-line angle δ1, resulting in proximal barb tips toeing out relative to distal barb tips.

An alternative embodiment, not shown, has leading edge barbs curved upwards to a steeper leading edge angle than the angle ε of swirl vane 17 relative to a plane parallel to diffuser face 1.

A further embodiment, not shown, has a successively increasing leading edge absolute angle of attack of the barb 17' tip by varying angle θ shown in X Sec A-A from a large value for a distal barb 17' to a small value for a proximal barb 17', and in which θ ≤ ε.

The non-uniform absolute orientation of leading edge barbs 17', whereby, when progressing in a proximal direction, the absolute angle of attack in side view of each successive barb tip is increased by decreasing θ, and each successive barb tip is toed out in plan view such that δ2 > δ1, is advantageous in reducing both noise and air pressure drop, in particular for the embodiments shown in figures 5a, 5b, 7a to 7c, 8a to 8i, 9a to 9o, and 10a to 10c.

Curved leading edge barbs 17' on their own are a preferred embodiment as they are more effective at reducing noise than trailing edge serrations 17", are aesthetically less obtrusive, and additionally reduce diffuser pressure drop.

Preferred dimensions for HI are 5 mm to 20 mm, for WI are 1 mm to 5 mm, for R are 5 mm to 50 mm, for Ht are 5 mm to 20 mm, and Wt are 1 mm to 5 mm, and for ε are 20° to 50°.

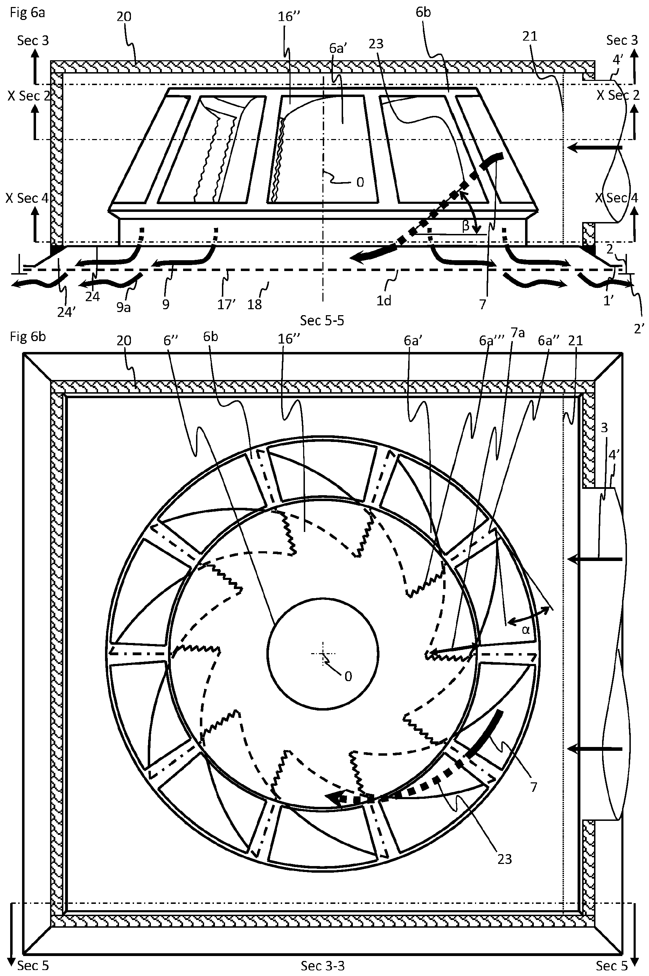

Figures 6a and 6b are diagrams illustrating side section and top section views of an alternative embodiment of a VAV cyclone swirl diffuser 1d, in which cyclone plenum 16" surrounds shroud 6" (housing the actuator, induction system, etc; all not shown), and is substantially bounded by a plurality of damper doors 6a', which, when all closed (not shown) substantially form a truncated cone about diffuser centre-line 0. Each damper door 6a' has a substantially radially aligned door axis of rotation 6a" coincident with or in close proximity to the leading edge of damper door 6a', and coincident with or in close proximity to damper housing 6b, and which, when viewed in plan view (figure 6b), is substantially radially aligned, such that each damper door 6a' substantially seals against damper housing 6b from the inside of cyclone plenum 16" when closed (not shown), and opens by swinging inwards through damper door angle α, opening damper aperture 7a between damper housing 6b and the trailing edge 6a‴ of damper door 6a'. Damper door trailing edge 6a‴ may be serrated to reduce vortex shedding from damper airstream 7, and thereby reduce airflow noise. Damper door angle α (figure 6b) is typically 25° to 30° when damper aperture 7a is fully open.

Advantageously, no part of diffuser 1d protrudes into room 18 as no part is located below the plane of diffuser face 1, which in turn is substantially coincident with the plane of ceiling grid underside 2'.

**In** an alternative embodiment, spigot 4', through which supply airstream 3 enters connection box 20, is located on top of connection box 20 instead of on the side.

**In** yet a further embodiment, diffuser 1d is freely suspended in room 18, rather than diffuser face 1 resting in ceiling grid 2.

For a given static pressure in connection box 20, the airflow rate and swirl pitch angle β of damper airstream 7 relative to a plane parallel to diffuser face 1 (figure 6a) increase with increasing damper aperture 7a, and hence with increasing damper door angle α. For small damper apertures 7a, and hence for small airflow rates of damper airstream 7 relative to the diffuser design airflow rate (i.e. the maximum required airflow rate to achieve the maximum cooling or heating capacity for the application in question), swirl pitch angle β may be sufficiently small to achieve Coanda effect attachment of diffuser airstream 9a to diffuser face 1 and the surrounding ceiling (not shown) and spread in a plane substantially coincident with or parallel to diffuser face 1. For large damper apertures 7a, and hence for large airflow rates of damper airstream 7, swirl pitch angle β is too great to achieve stable Coanda effect attachment of diffuser airstream 9a to diffuser face 1 and the surrounding ceiling (not shown), in which case perforated baffle plate 17' deflects discharge airstream 9 to substantially spread in hood cavity 24' beneath hood 24 such that discharge airstream 9 is discharged at a sufficiently acute angle through perforated baffle plate 17' into room 18 as diffuser airstream 9a of high airflow rate and swirl to attach to diffuser face 1 and the surrounding ceiling (not shown) by Coanda effect suction as diffuser airstream 9a of high airflow rate that spreads in a plane substantially coincident with or parallel to the plane of diffuser face 1.

Fully open damper aperture 7a, as described for figures 5a and 5b and shown in figures 6a and 6b, produces high swirl 23 in cyclone plenum 16" that is discharged by the full face of perforated baffle plate 17' external to shroud 6" into room 18 as discharged airstream 9 of high airflow rate and swirl, attaching to diffuser face 1 and the surrounding ceiling (not shown) by Coanda effect suction as diffuser airstream 9a of high airflow rate and high velocity that spreads in a plane substantially coincident with or parallel to diffuser face 1.

When operating at the same static pressure in connection box 20 as above with damper aperture 7a open to a medium setting (not shown), damper airstream 7 of reduced airflow rate and high tangential velocity (i.e. similar in velocity to when damper aperture 7a is fully open) generates swirl with higher distal tangential velocity and lower proximal tangential velocity that is deflected by perforated baffle plate 17' to be discharged through 360°, in a plane substantially parallel with diffuser face 1, substantially by the distal portion of diffuser baffle plate 17' external to shroud 6" into room 18 as discharged airstream 9 of reduced airflow rate and swirl of higher distal tangential velocity and lower proximal tangential velocity, to attach to diffuser face 1 and surrounding ceiling (not shown) by Coanda effect suction as diffuser airstream 9a of reduced airflow rate that spreads in a plane substantially parallel to diffuser face 1, achieving a higher throw of diffuser airstream 9a relative to that which would be achieved if the velocity were uniformly spread across baffle plate 17' external to shroud 6".

When damper door 6a' is strongly throttled or fully closed but leaking, damper airstream 7 is discharged with swirl 23, improving the stability and increasing rotational momentum of discharged airstream 9 at very low airflow rates, thereby improving throw when strongly throttled or facilitating Coanda effect suction to diffuser face 1, reducing the risk of dumping when leaking, and enabling variable air volume (VAV) turndown to extremely low airflow rates, including to less than 15% airflow of that which is achieved when damper aperture 7a is fully open.

**In** comparison to the embodiment shown in figures 5a and 5b, the embodiment in figures 6a and 6b has a perforated rather than a swirl diffuser aesthetic when viewed from room 18, but may have a lower maximum airflow rate capacity for a given area of diffuser face 1'.

Figures 7a to 7c are diagrams illustrating top cross-section views of an alternative preferred embodiment for the configuration and arrangement of a plurality of damper doors 6a' in which door axis of rotation 6a" of each damper door 6a' is substantially centrally located in the damper door 6a' or slightly biased towards the damper trailing edge 6a‴ such that static pressure P in connection box 20 is balanced on the damper door 6a' or biased to exert a slight shutting force when the damper door 6a' is closed, as shown in figure 7c. A Leading edge seal 6aʺʺ may seal each damper door 6a' substantially shut against the trailing edge 6a‴ of adjoining damper door 6a' when closed.

As described in figures 5a, 5b, 6a and 6b, trailing edge 6a‴ may be serrated to reduce airflow noise.

As described in figures 5a, 5b, 6a and 6b, for a given static pressure in connection box 20, damper door 6a' settings with a medium damper aperture 7a, as shown in figure 7b, produce a diffuser airstream 9a of medium airflow rate, generating swirl with higher distal and lower proximal tangential velocity across swirl blades 17 external to shroud 6", to achieve a higher throw of deflected diffuser airstream 9a in a plane coincident with or substantially parallel to diffuser face 1 than that which would be achieved if the velocity were uniformly spread across the span of swirl blades 17 external to shroud 6".

Similarly, as described in figures 5a, 5b, 6a and 6b, when damper aperture 7a is substantially closed or leaking, as shown in figure 7c, damper airstream 7 is discharged with swirl 23, improving the stability and increasing rotational momentum of discharged airstream 9 at very low airflow rates, thereby improving throw when strongly throttled or facilitating Coanda effect suction to diffuser face 1, reducing the risk of dumping when leaking, and enabling variable air volume (VAV) turndown to extremely low airflow rates, including to less than 15% airflow of that which is achieved when damper aperture 7a is fully open.

Advantageously, substantially balanced static air pressure on damper doors 6a' allows for substantially pressure independent operation of the damper doors as it eliminates or reduces the air pressure forces on the damper mechanism and actuator(s), which is especially beneficial for thermal actuators, as these are extremely weak.

Disadvantageously, especially for electrically actuated VAV diffusers in which it is highly beneficial for damper doors 6a' to seal fully shut, a substantially centrally located door axis of rotation 6a" on each damper door 6a' causes greater complexity in sealing the top and bottom of each damper door 6a' shut in comparison to the embodiment shown in figures 5a, 5b, 6a and 6b.

Figures 7d to 7f are diagrams illustrating top cross-section views of an embodiment as shown in figures 4a to 7c in which one or two blanking segments 25 located directly upstream of swirl vanes 17 or hood 24 partially obstruct damper airstream 7 such that discharged airstream 9 is discharged in a 270° (3-way), 180° (2-way asymmetrical) or 2 x 90° (2-way symmetrical) pattern, respectively, instead of through 360°.

Figures 8a to 8f are diagrams illustrating top cross-section and side cross-section views of an embodiment in which PC board 10d, pressure sensor 10g and electric actuator 10c are located in secondary chamber 14b. Not shown are a processor, an integrated room air temperature sensor 10e, a carbon dioxide (CO₂) sensor, a volatile organic compound (VOC) sensor, a relative humidity sensor (RH), and a Bluetooth antenna, which may optionally be included on PC board 10d. A passive infrared (PIR) sensor 10h may be plugged into PC board 10d and may be orientated to protrude through hub cap 8b to sense occupancy in room 18. Pressure sensor 10g is piped via pressure tube 10g" to mounting plate 42, and then via snorkel 10g' to sense static pressure in connection box 20 relative to the static air pressure in secondary chamber 14b, which is substantially equal to the static air pressure in room 18.

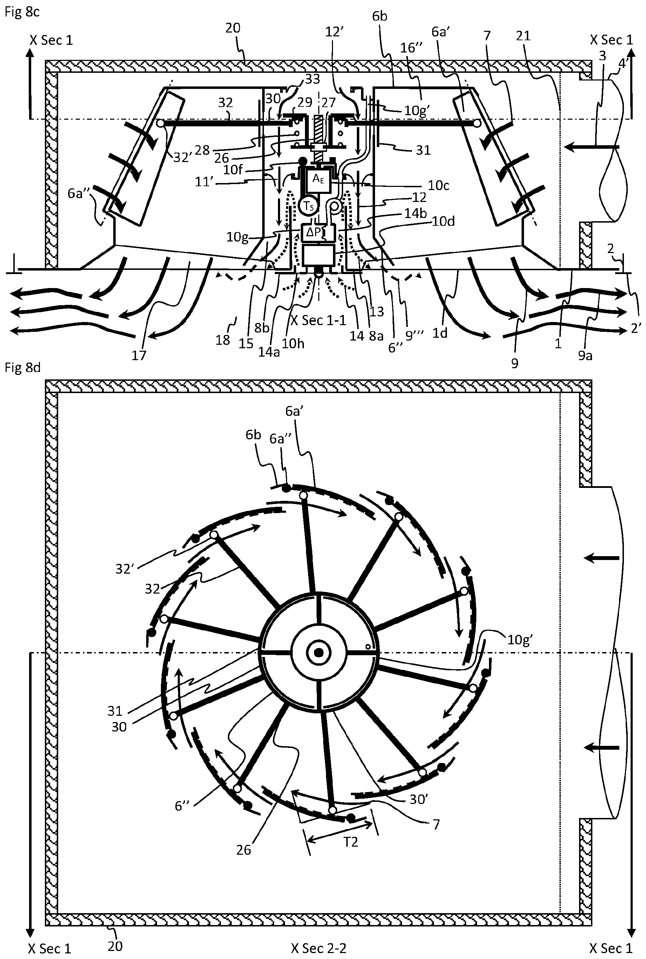

Electric actuator 10c is connected to worm gear 26, which drives worm nut 27, which is fixedly connected to both induction damper 29 and the bottom of damper spring 28, which is in compression and pushes a plurality of damper spokes 30 towards the underside of induction damper 29, which in turn acts as a stop beyond which damper spokes 30 cannot travel. Damper spokes 30 are fixedly attached to translating ring 31, to which a plurality of damper arms 32 is fixedly attached, each terminating in one of a plurality of magnets 32'. The plurality of magnets 32' is arranged relative to an equal number of damper doors 6a' (shown indicatively only in figures 8a and 8c), each of which includes a ferrous metal sliding surface, such that each magnet 32' is magnetically attracted to the ferrous metal sliding surface of the damper doors 6a' that it is in contact with. Static air pressure from supply airstream 3 in connection box 20 furthermore pushes damper doors 6a' open against their respective magnets 32', and gravity acting on dampers doors 6a' furthermore pulls dampers doors 6a' open against their respective magnets 32'.

**In** an alternative embodiment, induction damper 29 is located above damper housing 6b and is mechanically linked to worm nut 27 to open upwards from damper housing 6b.

Figures 8a, 8c and 8e are top side-section views of the embodiment in which primary air 12' flows across supply air temperature sensor 10f in primary chamber 54, separated from secondary chamber 14b by mounting plate 42, before being discharged by induction nozzle array 11' into induction channel 15 as primary airstream 12 to induce secondary airstream 13 from secondary chamber 14b into the upper portion 52 of induction channel 15, with both airstreams then being discharged through 360°, in a plane substantially parallel with diffuser face 1, as discharged pilot airstream 9‴ by the proximal portion only of swirl blades 17, which is contained within shroud 6", thereby drawing replenishment airstream 14 into secondary chamber 14b and across PC board 10d (and across room air temperature sensor 10e, not shown) from room 18 via face plate inlet 14a in hub 8b, to provide accurate sensing of room air temperature, relative humidity and CO₂, as well as to cool PC board 10d.

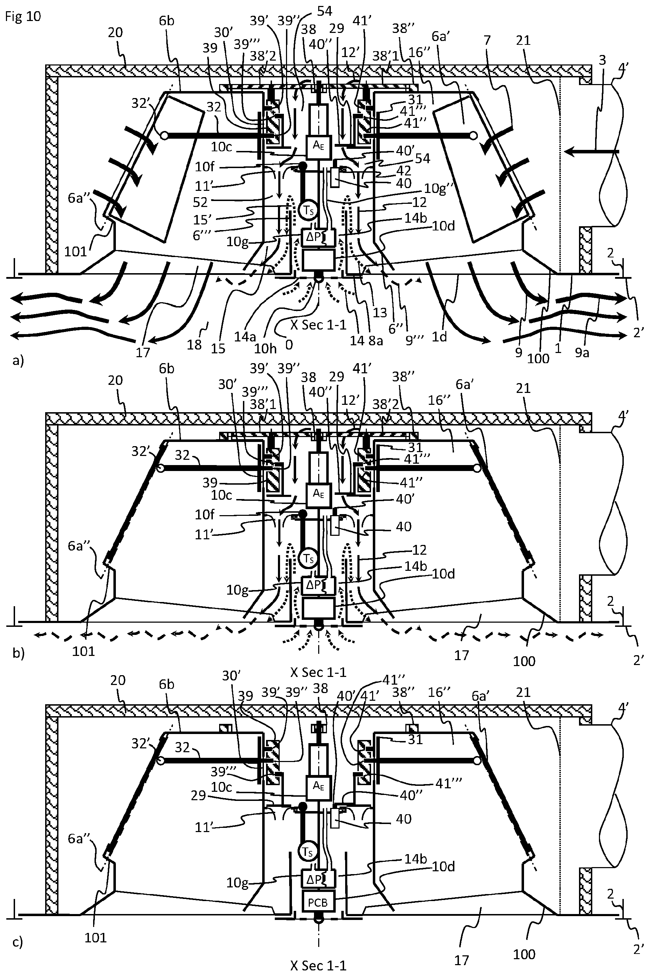

The airflow rate of supply air stream 3 is calculated by the processor (not shown) on PC board 10d or by a remote processor as a function of the static air pressure in connection box 20 and the position of worm nut 27, which in turn determines the door angle α of damper doors 6a". The processor may determine the position of worm nut 27 by counting the number of rotations of worm gear 26 and by zeroing the position of electric actuator 10c when worm nut 27 is fully down by means of a micro-switch 40 (shown in figures 10a to 10c, and 11b).

Figures 8a and 8b are top cross-section and side cross-section views, respectively, in which worm nut 27 has been driven fully down by electric actuator 10c, and in which damper spokes 30 slide in shroud slots 30', which are parallel to diffuser centre-line 0, thereby rotationally constraining translating ring 31 about diffuser centre-line 0, such that both gravity acting on damper doors 6a' and the attraction of the plurality of magnets 32' pull fully open, and air pressure within connection box 20 pushes fully open, the plurality of damper doors 6a' (shown indicatively only in figure 8a) about their respective axes of rotation 6a", which are substantially perpendicular to inlet cone 101, to a door angle α of approximately 25° to 30° relative to a plane parallel to the tangent to damper housing 6b at each respective axis of rotation 6a", resulting in discharged airstream 9a of high airflow rate and high tangential velocity.

In an alternative embodiment, shroud slots 30' are at an acute angle relative to diffuser centre-line 0.

Figures 8c and 8d are top cross-section and side cross-section views, respectively, in which worm nut 27 has been driven partially up by electric actuator 10c, such that both gravity acting on damper doors 6a'and the attraction of the plurality of magnets 32' pull partially open, and air pressure in connection box 20 pushes partially open, the plurality of damper doors 6a' (shown indicatively only in figure 8c) about their respective axes of rotation 6a", resulting in discharged airstream 9a of medium airflow rate with swirl of higher distal and lower proximal tangential velocity.

For a given static pressure in connection box 20, the velocity of damper airstream 7 in figure 8b is substantially equal in magnitude to that of damper airstream 7 in figure 8d. The length of the arrows depicting these two damper airstreams 7 is, therefore, shown to be equal. However, relative to diffuser housing 6b, the tangential velocity component T2 of damper airstream 7 in figure 8d is greater than the tangential component T1 in figure 8a, leading to the distal velocity of discharged airstream 9a in figure 8c potentially being greater than that of discharged airstream 9a in figure 8a. The momentum of the two discharged airstreams 9a may, therefore, be substantially equal, given that the reduction in the volume flow rate of diffuser airstream 9a in figure 8c may be substantially compensated for by a corresponding increase in the distal velocity of the same airstream, resulting in throw (not shown) of diffuser airstream 9a in figure 8c, in a plane coincident with or substantially parallel to diffuser face 1, being substantially equal to that in figure 8a or at least being higher than that which would be achieved if discharge airstream 9 had a substantially uniformly spread velocity across the span of swirl blades 17 external to shroud 6".

Figures 8e and 8f are top cross-section and side cross-section views, respectively, in which worm nut 27 has been driven substantially up by electric actuator 10c, such that the plurality of magnets 32' push against and hence push closed the plurality of damper doors 6a' about their respective axes of rotation 6a". Pilot airstream 9"', made up of primary airstream 12 and secondary airstream 13, is discharged through 360°, in a plane substantially parallel with diffuser face 1, with sufficient momentum to attach to diffuser face 1 and the surrounding ceiling (not shown) by Coanda effect suction as diffuser pilot airstream 9a"', which induces low velocity discharged airstream 9 produced by leakage through damper aperture 7a of damper airstream 7 to also attach to diffuser face 1 and the surrounding ceiling, thereby preventing dumping and short circuiting of leakage or discharged airstream 9 into face plate inlet 14a and across room air temperature sensor 10e (not shown).

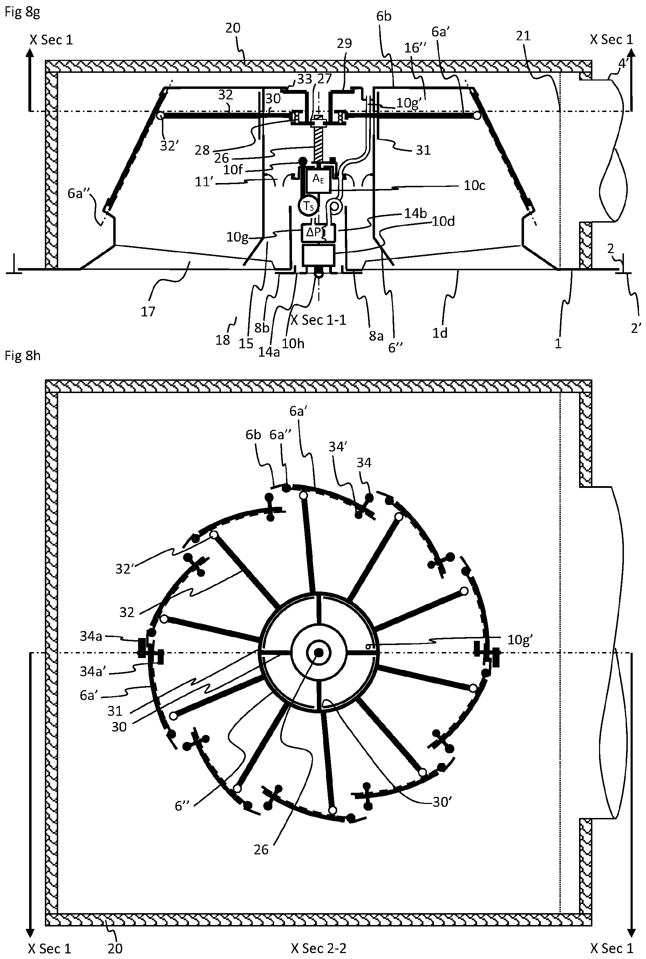

Figure 8g is a top cross-section view in which worm nut 27 has been driven fully up by electric actuator 10c, such that induction damper 29 seals against induction seal 33, shutting off airflow to induction nozzle array 11', and damper spring 28 is compressed as the plurality of magnets 32' push closed the plurality of damper doors 6a' about their respective axes of rotation 6a".

**In** figures 8a to 8g, damper arms 32 translate in a direction substantially parallel to diffuser centre-line 0. **In** an alternative embodiment, damper arms 32 translate rotationally relative to diffuser centre-line 0. **In** an even further embodiment, damper arms 32 translate both parallel to and rotationally about diffuser centre-line 0.

Figure 8h is a diagram illustrating a top cross-section view of a preferred embodiment in which each damper door 6a' is equipped with an unlocked latch 34 and unlocked latch handle 34'(which may be in the form of a screw driver slot or a hex socket) or a locked latch 34a and a locked latch handle 34a'. A tool, such as a screwdriver or hex key, may be inserted through the face of the diffuser (not shown) to turn the latch handle of a shut damper door to the locked position 34a' thereby locking the corresponding latch shut 34a against damper housing 6b (or when reversing the operation, turning from locked position 34a' to unlocked position 34a). Corresponding magnet 32' disengages from shut damper door 6a' when translating ring 31 and the plurality of damper arms 32 move to open unlocked, and hence active, damper doors 6a'. This allows a diffuser according to embodiments to be configured, or potentially reconfigured on site, to one of many ranges of airflows, each with a full VAV range of operation to a turndown of 15% or less of that which is achieved when the unlocked damper doors are fully open. In order to achieve a substantially uniform 360° airflow pattern in a plane substantially parallel with diffuser face 1, at least four damper doors 6a' should ideally be unlocked, which, for a given air static pressure in connection box 20, and in comparison to all damper doors 6a' being active, equates to an approximately 60% reduction (for the configuration shown) in maximum airflow rate for the lowest airflow range whilst preserving a VAV turndown ratio to less than 15% for each airflow range.

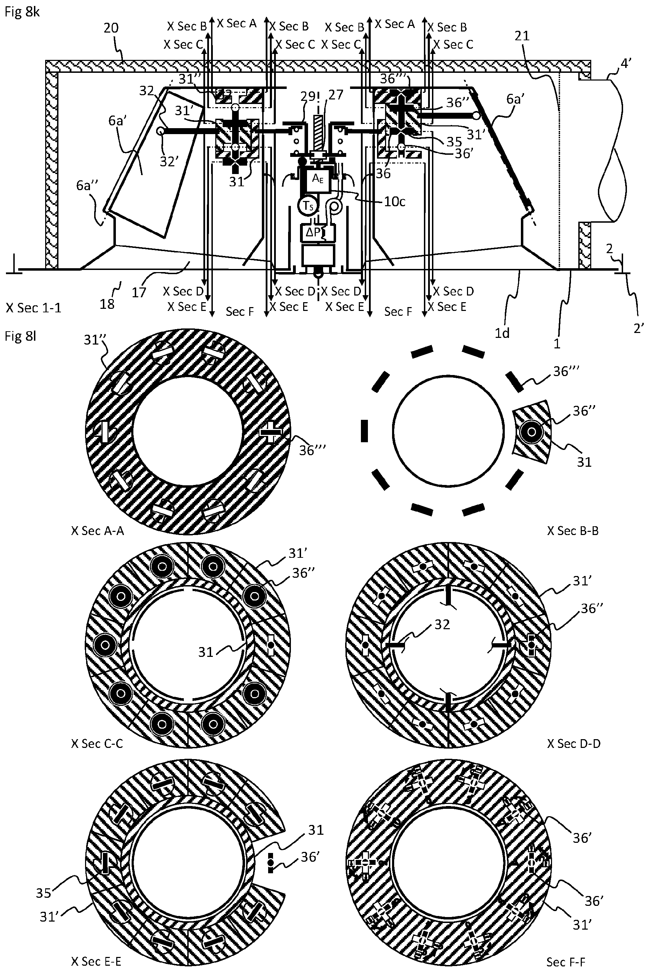

Figures 8i to 8l are diagrams illustrating top cross-section and side-section views of an alternative damper door locking embodiment, in which a screw driver, hex key, or similar tool 37 may be inserted through the face of the diffuser to engage with one of a plurality of locking shafts 36, each corresponding to a respective damper door 6a' (shown indicatively only in figures 8k)that may be locked shut or unlocked, in which figures 8i and 8j show that a 90° turn of tool 37 rotates locking shaft 35 and associated locking pins 36, 36' and 36"', as well as locking disk 36", such that door arm ring 31' is disengaged from translating ring 31 and is fixedly engaged with housing ring 31", thereby locking corresponding door arm 32 to push its magnet 32' against corresponding damper door 6a', locking this damper door shut. The locking pins 36, 36' and 36‴ as well as locking disks 36" of all other locking shafts fixedly attach door arm ring 31' to translating ring 31 and disengage it from housing ring 31".

Figures 8k and 8l show all damper doors 6a', excepting for the one that was locked in figures 8i and 8l, pulled open by corresponding magnets 32' when translating ring 31 is driven down by electric actuator 10c.

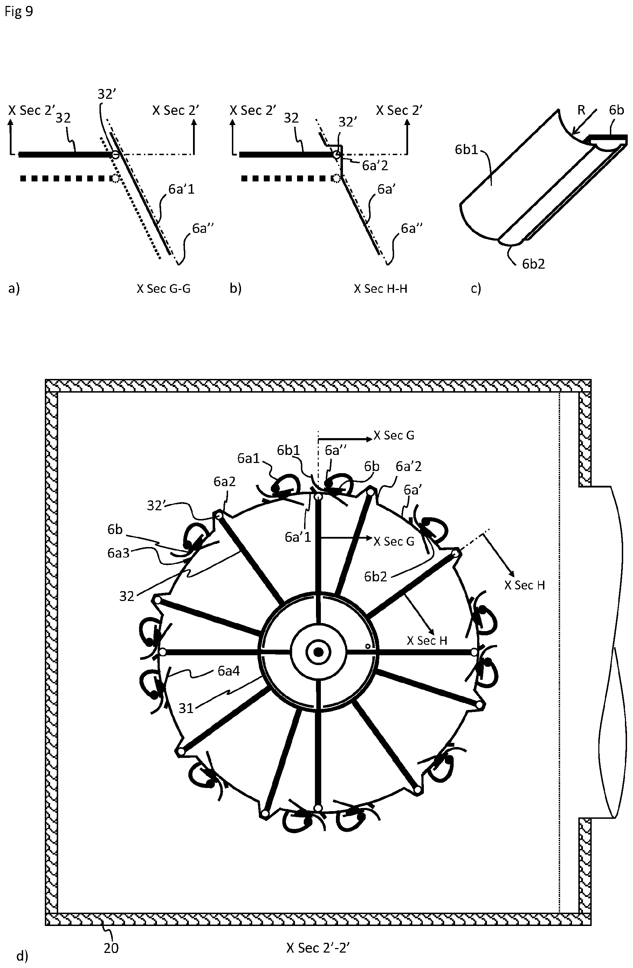

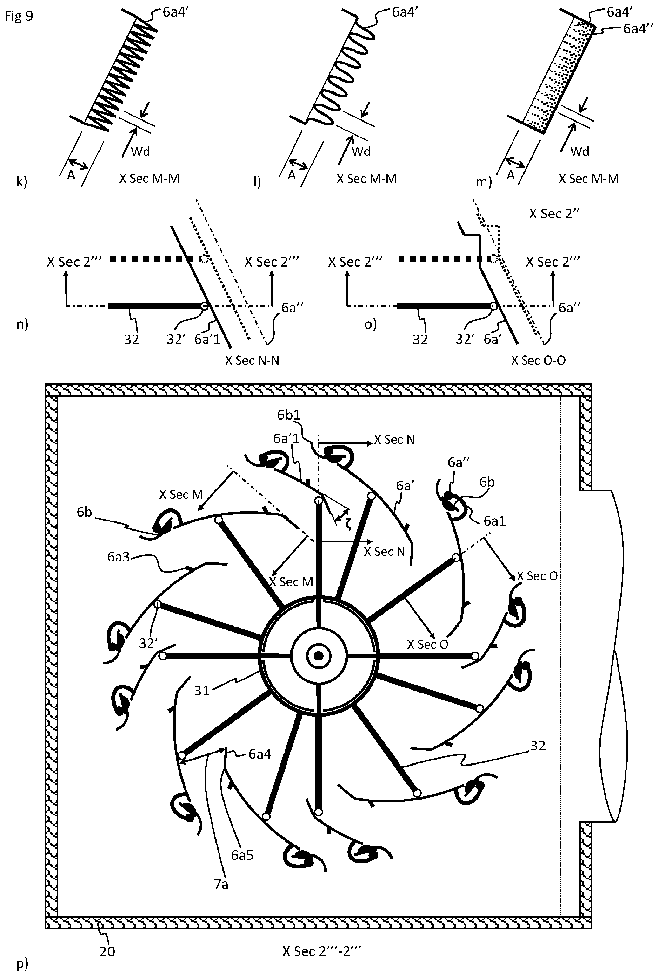

Figures 9a to 9p are diagrams illustrating side cross-section and top cross-section views of an alternative embodiment, in which a plurality of half-sized damper doors 6a'1 is interspaced amongst a plurality of damper doors 6a', with each of the latter incorporating a magnet recess 6a'2 and various noise reducing features. Damper doors 6a' and half-sized damper doors 6a'1 each pivot about a respective axis of rotation 6a" via door arm 6a1. Rounded housing leading edges 6b1 and angled trailing edge serrations 6a4 reduce pressure drop and airflow generated noise. Airflow noise, in particular tonal noise, at small aperture openings of damper doors 6a' and half-sized damper doors 6a'1, is further reduced by turbulators 6a3.

Figures 9a to 9d are diagrams showing trailing sealing edges 6a5 of damper doors 6a' and half-sized damper doors 6a'1 pushed closed against damper seals 6b2 of damper housing 6b by magnets 32' attached to damper arms 32 relative to respective damper door axis or rotation 6a". Rounded inlet 6b1 of damper housing 6b reduces airflow generated noise and pressure drop from damper doors 6a' and half-sized damper doors 6a'1. Radius R is preferably between 5 mm and 30 mm, most preferably between 10 mm and 20 mm.

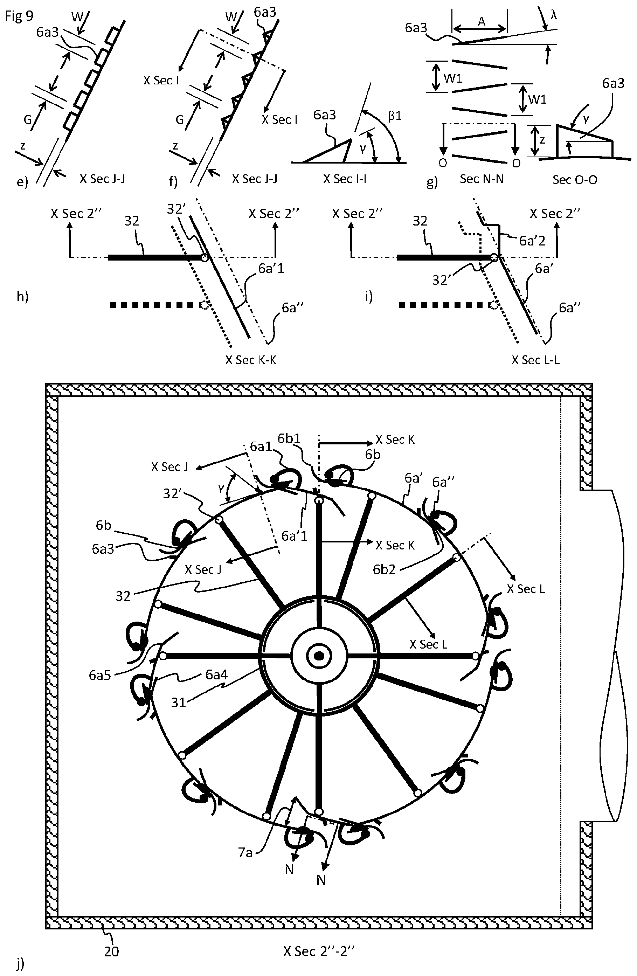

Each magnet 32' corresponding to a damper door 6a' is located within a door recess 6a'2 of that damper door, whereas each magnet 32' corresponding to a half-sized damper door 6a'1 is located directly on damper door 6a'1. For ease of comparison, unlabelled dashed lines in figures 9a and 9b depict the labelled positions in figures 9h and 9i of damper arms 32, magnets 32', damper doors 6a' and half-sized damper doors 6a'1.

Figures 9e to 9g are diagrams showing turbulators 6a3 located on damper doors 6a' and half-sized damper doors 6a'1, located as shown in figures 9c, 9i and 9o, or located on door sealing surfaces, to reduce noise, in particular tonal noise, generated by airflow through small damper aperture 7a of partially open doors. Turbulators 6a3 may be substantially planar protruding from damper door 6a and 6a' at angle γ, which may be between 20° and 90°, preferably between 30° and 60°, and may be in the form of a plurality of rectangles, as in figure 9e, or triangles or truncated triangles (not shown), or may be substantially sinusoidal or irregular (not shown). Dimension G is preferably between 0.5 mm and 5 mm, most preferably between 1 mm and 3 mm. Dimension W is preferably between 1 mm and 20 mm, most preferably between 3 mm and 10 mm.

Turbulators 6a3 may, alternatively, be fashioned as vortex generators, with one embodiment being a plurality of non-planar solids (refer to figure 9f), each in the shape of a distorted pyramid with a triangular base, from which the apex and leading lateral edge overhang the leading edge base vertex by angle β1, like a ship's bow, and trailing lateral face angles downwards from the apex by angle γ. β1 may be between 5° and 60°, or between 20° and 55°. γ may be between 5° and 80°, or between 10° and 40°. Dimension G may be between 0.5 mm and 5 mm, or between 1 mm and 3 mm. Dimension W may be between 1 mm and 20 mm, or between 3 mm and 10 mm.

An alternative vortex generator embodiment where the vortex has a blade shape with parallel front and back edges, a sloping top edge, and sloping sides, is shown in figure 9g. Dimension A may be between 2 mm and 10 mm, or between 3 mm and 6 mm. Dimension z may be between 2 mm and 10 mm, or between 2 mm and 4 mm. Dimension W1 may be between 5 mm and 20 mm, or between 7 mm and 15 mm. Dimension λ may be between 10° and 30°, or between 15° and 25°.

In a further embodiment, not shown, turbulators 6a3 are a plurality of hemispherical protrusions of 1 to 2 mm radius at a centre-line spacing of 3 to 5 mm.

Further embodiments of turbulators 6a3 may consist of any combination of the turbulators described above.

Figures 9h to 9j are diagrams showing damper doors 6a' pushed closed, and half-sized damper doors 6a'1 pulled partially open, by respective magnets 32'. For ease of comparison, unlabelled dashed lines in figures 9g and 9h depict the labelled positions in figures 9m and 9n of damper arms 32, magnets 32', damper doors 6a' and half-sized damper doors 6a'1.

Figure 9p is a diagram showing door diffusers 6a4 at diverging angle ζ from the tangent to trailing sealing edge 6a5, with diverging angle ζ preferably being between 10° and 45°, most preferably between 25° and 35°, and figures 9k to 9m are diagrams showing door trailing edge serrations 6a4' located on door diffusers 6a4, the combination of which disrupts vortex shedding from the door trailing edges and reduces the discharge velocity of damper airstream 7 from damper aperture 7a, thereby reducing airflow generated noise from damper doors 6a', half-sized damper doors 6a'1 and swirl blades 17 (not shown), as well as reducing pressure drop. Serration profiles 6a4' may be saw-tooth, as in figure 9j, sinusoidal, as in figure 9k, or irregular (not shown), and may define the transition to a perforated or porous trailing edge material 6a4" as shown in figure 9m. Preferred trailing edge dimensions are 10 mm to 30 mm, most preferably 20 mm to 25 mm, for dimension A, and 1 mm to 5 mm, most preferably 2 mm to 3 mm, for dimension Wd.

In an alternative embodiment, half-sized damper doors 6a'1 may be individually locked closed, or may be unlocked to open and close, as described in figure 8h or figures 8i to 8j. In order to achieve a substantially uniform 360° airflow pattern in a plane substantially parallel with diffuser face 1, the four half-sized damper doors 6a'1 should be unlocked for the minimum airflow rate range, which, for the configuration shown and for a given air static pressure in connection box 20, and in comparison to all damper doors 6a' and half-sized damper doors 6a'1 being active, equates to an approximately 80% reduction in maximum airflow rate for the lowest airflow range whilst preserving a VAV turndown ratio to less than 15% for each airflow range. This is a greater reduction in maximum airflow rate than is achievable for the same total number of damper doors in which the damper doors are each of equal size.

Figures 10a to 10c are diagrams illustrating side cross-section views of an alternative embodiment to that shown in figures 8a to 8e, in which PC board 10d, pressure sensor 10g and electric actuator 10c are located in secondary chamber 14b. Not shown are a processor, an integrated room air temperature sensor 10e, a carbon dioxide (CO₂) sensor, a volatile organic compound (VOC) sensor, a relative humidity sensor (RH), and a Bluetooth antenna, which may optionally be included on PC board 10d. A passive infrared (PIR) sensor 10h may be plugged into PC board 10d and may be orientated to protrude through hub cap 8b to sense occupancy in room 18. Pressure sensor 10g is piped via pressure tube 10g" to mounting plate 42 to sense static pressure in primary chamber 54, which is substantially equal to the static pressure in connection box 20, relative to the static air pressure in secondary chamber 14b, which is substantially equal to the static air pressure in room 18.

Electric actuator 10c is connected to sun gear 38, which meshes with and drives planetary gears 38'1 and 38'2, which in turn mesh with and rotate within ring gear 38", which is fixedly attached to housing 6b and centred about diffuser centre-line 0. The axes of rotation of planetary gears 38'1 and 38'2 are attached to cam sleeve 39, which rotates within shroud 6" about diffuser centre-line 0, and is axially constrained from movement parallel to diffuser centre-line 0 by constraining slot 41' about constraining pins 39' fixed to shroud 6". Constraining slot 41' lies substantially in a plane parallel to diffuser face 1.

As shown in Figures 10a and 13a, magnets 32' are attached to arms 32, which in turn are attached to translating ring 31, to which translating pins 39" are attached and project into door cam slot 41" located in cam sleeve 39, such that when translating ring 31 is fully down, damper doors 6a' (shown indicatively only in Figure 10a) are fully open, and induction pins 39‴ in induction cam slot 41‴, which is located in cam sleeve 39, is driven fully up, thereby fully opening induction damper 29 to allow primary air 12' to be discharged by induction nozzle array 11'.

Induction pins 39‴ slide in shroud slots 30', which are parallel to diffuser centre-line 0, thereby rotationally constraining translating ring 31 about diffuser centre-line 0. Not shown is a feature that similarly constrains induction damper 29 from rotation about diffuser centre-line 0.

Figure 10b shows planetary gears 38'1 and 38'2 having been driven by electric actuator 10c 180° about diffuser centre-line 0, thereby having rotated cam sleeve 39 by 180° about diffuser centre-line 0, such that translating pins 39" have been driven fully upwards by door cam slot 41", and induction pins 39‴ continue to be driven fully up, thereby driving up translating ring 39, fully closing damper doors 6a', whilst holding induction damper 29 fully open, respectively. Damper airstream 7 is fully shut off, whilst primary air 12' continues to flow into induction nozzle array 11', as described in the airflow descriptions of figures 8e and 8f.

Figure 10c shows cam sleeve 39 having been rotated a further 90° about diffuser centre-line 0 by planetary gears 38'1 and 38'2 (both out of view), such that translating pins 39" continue to be held fully upwards by door cam slot 41", and induction pins 39‴ are driven fully down by induction slot 41‴, thereby continuing to hold translating ring 39 fully up and hence damper doors 6a' fully closed whilst fully closing induction damper 29, respectively. Switch nipple 40' of microswitch 40 is depressed by arm 40" attached to induction damper 29, zeroing electric actuator 10c to the fully closed position. All airflow is shut off, as described in figure 8g.

In figures 10a to 10c primary air 12' flows across supply air temperature sensor 10f in primary chamber 54, separated from secondary chamber 14b by mounting plate 42, before being discharged by induction nozzle array 11' into induction channel 15 as primary airstream 12 to induce secondary airstream 13 from secondary chamber 14b into the upper portion 52 of induction channel 15, with both airstreams then being discharged through 360°, in a plane substantially parallel with diffuser face 1, as discharged pilot airstream 9‴ by the proximal portion only of swirl blades 17, which is contained within shroud 6", thereby drawing replenishment airstream 14 into secondary chamber 14b and across PC board 10d (and across room air temperature sensor 10e, not shown) from room 18 via face plate inlet 14a in hub 8b, to provide accurate sensing of room air temperature, relative humidity and CO₂, as well as to cool PC board 10d, and to prevent short-circuiting of leakage into secondary chamber 14b.

In figures 10a to 10c, damper arms 32 translate in a direction substantially parallel to diffuser centre-line 0. In an alternative embodiment, damper arms 32 translate rotationally relative to diffuser centre-line 0. In an even further embodiment, damper arms 32 translate both parallel to and rotationally about diffuser centre-line 0.

Figures 11a and 11b are diagrams of exploded side cross-section views of the embodiments shown in figures 8a to 8g, and 10a to 10c, respectively, illustrating removal from or installation into diffuser 1d of electric actuator 10c, supply air temperature sensor 10f, pressure sensor 10g, PC board 10d, which may include room air temperature sensor 10e (not shown) and a VOC or CO₂ sensor (not shown), RH sensor (not shown), PIR sensor 10h, and hub cap 8b. When the above components are installed, electric actuator shaft 10c' in figure 11a engages with worm gear 26, or sun gear 38 in figure 11b engages with planetary gears 38'1 and 38'2, and mounting plate 42 seals against nozzle plate seal 42'.

Advantageously, the removal or installation of the components described above and shown in figures 11a and 11b neither requires removal of diffuser 1d from ceiling grid 2 nor access to the ceiling void above ceiling grid 2, facilitating tenancy ease of maintenance as well as reconfiguration for tenancy changes, such as if the PC board 10d needs to be upgraded to include a CO₂ or VOC sensor.

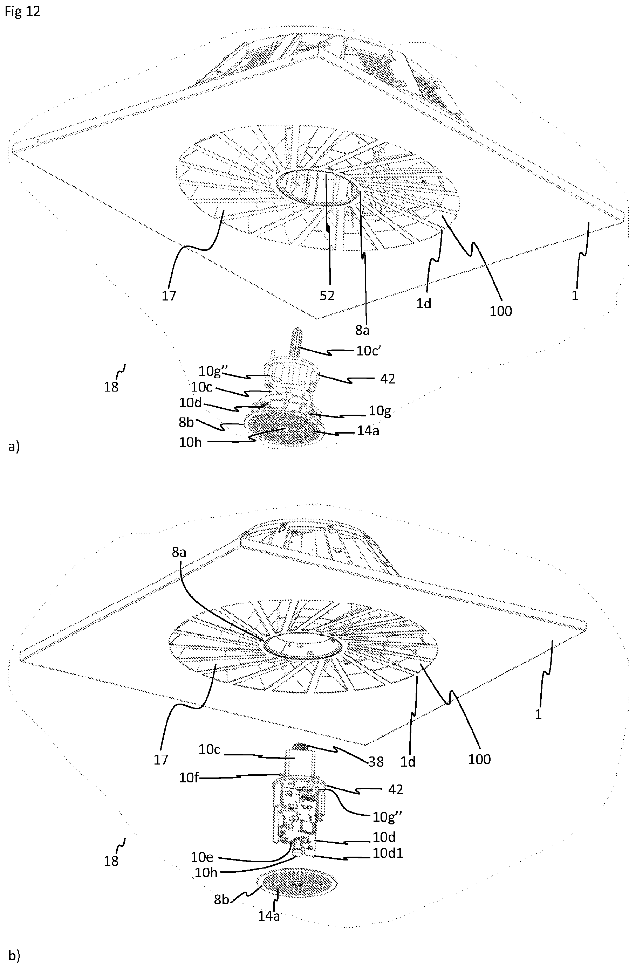

Figure 12a is an isometric view of an embodiment shown in figure 11a, in which hub cap 8b has been removed from hub 8a of diffuser 1d and dropped below diffuser face 1. PC board 10d is attached to hub cap 8b. Pressure sensor 10g is attached to PC board 10d, as are optional PIR sensor 10h, and sensors hidden from view, such as room air temperature sensor 10d, optional CO₂, relative humidity (RH) and VOC sensors, as well as Bluetooth antenna 10d1.

Also shown removed from diffuser 1d is mounting plate 42, which is connected to pressure sensor 10g by pressure tube 10g". Electric actuator 10c is fixedly attached to the underside of mounting plate 42, with electric actuator shaft 10c' protruding through mounting plate 42. Supply air temperature sensor 10f, hidden from view, also protrudes through mounting plate 42.

The above embodiment provides access from below the diffuser, without requiring removal of the diffuser from ceiling grid 2 (not shown) for installation, removal or replacement of PC board 10d, all sensors (including 10e, 10f, 10g, 10h), Bluetooth antenna 10d1 and electric actuator 10c.

Figure 12b is an isometric view of an embodiment shown in figure 11b, in which hub cap 8b has been removed from hub 8a of diffuser 1d and dropped below diffuser face 1. Also shown removed from diffuser 1d is mounting plate 42. Electric actuator 10c is fixedly attached to the upper side of mounting plate 42, with sun gear 38 attached to the electric actuator shaft (not shown). Supply air temperature sensor 10f protrudes through mounting plate 42. Pressure tube nipple 10g", suitable for connection of pressure tube 10g' (not shown), also protrudes through mounting plate 42. PC board 10c is attached to the underside of mounting plate 42. Pressure sensor 10g (not shown) may optionally be attached to PC board 10d. Optional PIR sensor 10h, room air temperature sensor 10e and Bluetooth antenna 10d1 are shown attached to PC Board 10d. Optional CO₂, relative humidity (RH) and VOC sensors (all not shown) may also be attached to PC Board 10d.

The above embodiment provides access from below the diffuser, without requiring removal of the diffuser from ceiling grid 2 (not shown) for installation, removal or replacement of PC board 10d, all sensors (including 10e, 10f, 10g, 10h), Bluetooth antenna 10d1 and electric actuator 10c.

Figure 13a is an isometric top-section view illustrating the embodiment illustrated schematically in figures 10a to 10c and 11b. Connection box 20 is not shown for simplicity. Electric actuator 10c, attached to the upper side of mounting plate 42, drives sun gear 38, which in turn drives planetary gears 38'1 and 38'2 to rotate within ring gear 38", thereby rotating cam sleeve 39, to which planetary gears 38'1 and 38'2 are attached, within shroud 6". Induction pin 39"', which protrudes into induction cam slot 41‴, and which is constrained (hidden from view) to motion parallel to diffuser centre-line 0 only, moves induction damper 29 up and down, opening and closing the air path to nozzle array 11', as described in figures 10a to 10c. Similarly, translating pins 39' (hidden from view and constrained to motion parallel to diffuser centre-line 0 only) protrude into door cam slot 41', moves cam sleeve 39 up and down, opening and closing damper doors 6a' as described in figures 10a to 10c.

Figure 13b is an isometric side-section view illustrating an embodiment illustrated schematically in figures 5, 8a to 8h, 9c, 9d, 9g, 9j, 9p and 11a. Electric actuator 10c, attached to the underside of mounting plate 42, rotates worm gear 26 to drive worm nut 27 vertically, opening and closing induction damper 29, as well as driving translating ring 31, damper arms 32 and magnets 32' up and down, as described in figures 8a to 8g. When magnets 32' move up, damper doors 6a' and half-sized damper doors 6a'1 are pushed closed. When magnets 32' move down, damper doors 6a' and half-sized damper doors 6a'1, to which magnets 32' are magnetically attached, are pulled open magnetically as well as by gravity, and are also pushed open by air pressure in connection box 20. Additionally, when dampers doors 6a' and half-sized damper doors 6a'1 are fully open, microswitch 40 is activated by arm 40" attached to induction damper 29 or worm nut 27, zeroing electric actuator 10c to the fully open position.y. The bottom edges of damper doors 6a' substantially abut inlet cone 101, reducing door edge vortices to reduce pressure drop and noise. Discharge cone 100, abutting distal edges of swirl vanes 17, further reduces pressure drop and noise.

Figure 13c is an isometric top-section view of the embodiment shown in figure 13b (connection box 20 is not shown for simplicity), but with only half-sized damper doors 6a'1 shown pulled open by gravity and magnets 32', as damper doors 6a' have each been locked shut by their respective locked latches 34a, resulting in detachment of their respective magnets 32' as translating ring 31 moves down.

Nozzle array 11' shown in figures 13a to 13c have a minimum primary airstream 12 requirement of 6 L/s, achieved at a minimum static pressure of 10 Pa in connection box 20, to induce secondary airstream 13 sufficiently for accurate temperature sensing of room air temperature by room air temperature sensor 10d. Induction damper 29 may be modulated by stepper motor 10c as a function of the static pressure in connection box 20, as measured by pressure sensor 10g, and the calculated position of induction damper 29 (for example, by counting the number of revolutions of worm gear 26 via stepper motor 10c) to maintain an airflow rate of 6 L/s for primary airstream 12 independent of the static air pressure in connection box 20. The minimum permissible static operating pressure of diffuser 1d is, therefore, 10 Pa, and the minimum airflow rate (when damper doors 6a are fully closed) is 6 L/s, independent of the static pressure in connection box 20 (on condition that this pressure is greater than or equal to 10 Pa). 6 L/s is, therefore, the minimum permissible turndown, independent of either connection box 20 static pressure or various maximum airflow rate configurations of damper doors 6a' and half-sized damper doors 6a'1 which are, in turn, determined by how many damper doors are active due to unlocked latches 34a (figures 8h and 8i).

Diffuser 1d provides greater distal discharge velocity and reduced proximal discharge velocity for extended throw of diffuser airstream 9a in a plane parallel to diffuser face 1 when damper doors 6a are partially throttled, achieving a specific airflow rate of less than 0.4 L/s/m² (relative to room 18 floor area) at an ADPI (Air Diffusion Performance Index) in excess of 90% when turned down to 15% of the maximum airflow rate for various maximum airflow rate configurations of damper doors 6a' and half-sized damper doors 6a'1, at approximately 30 Pa static in connection box 20 and at a supply-to-room air temperature differential of -15 K.

Diffuser 1d reduces the vertical temperature gradient in room 18 when providing part-load heating due to the greater distal discharge velocity and reduced proximal discharge velocity achieved when damper doors 6a are partially throttled, thereby extending the throw of diffuser airstream 9a and increasing agitation of the air in room 18. This improves comfort by reducing the risk of a "warm head / cold feet" sensation for occupants of room 18.

The maximum airflow rate of supply air 3, so as not to exceed either a sound pressure level in room 18 of NC 30 (based on 10 dB room absorption) or a static pressure of 30 Pa in connection box 20, is approximately 230 L/s for neck size DN of diameter 355 mm, and approximately 450 L/s for neck size DN of diameter 500 mm.

The minimum face dimension G1' is approximately 495 mm for neck size DN of diameter 355 mm and 595 mm for neck size DN of diameter 500 mm, suitable for a minimum ceiling grid centre-line dimension G1 of approximately 500 mm and approximately 600 mm, respectively, with connection box 20 having a wall thickness of up to 25 mm, suitable to achieve an R1 thermal insulation rating.

Spigot 4' typically has a maximum effective diameter of approximately 300 mm for neck size DN of diameter 355 mm, and of approximately 400 mm for neck size DN of diameter 500 mm.

The minimum connection box height H3 is 200 mm, based on connection box 20 having a wall thickness of up to 25 mm, suitable to achieve an R1 thermal insulation rating. Typical connection box height H3 varies from 250 mm to 450 mm, depending on the maximum airflow rate of supply air 3.

The corners and edges of connection box 20 may be facetted 20' to facilitate installation of the assembled diffuser unit, comprising diffuser 1d and connection box 20, into ceiling grid 2 from below without requiring dismantling of ceiling grid 2.

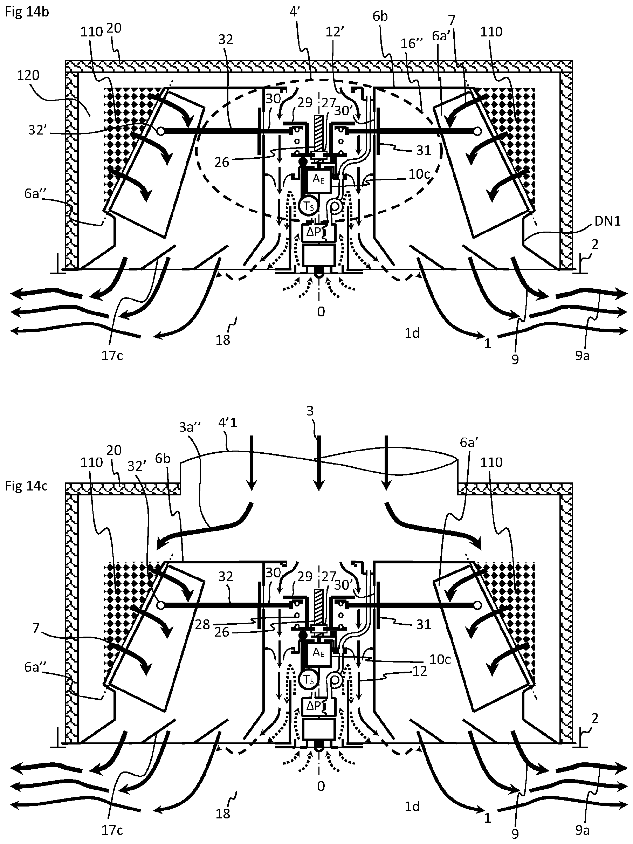

Figure 14a shows an example not falling under the present invention and figures 14b and 14c show embodiments with a side-entry spigot (figures 14a and 14b) and a top-entry spigot (figure 14c), and with damper axes of rotation parallel to centre-line 0 (figure 14a) and inclined to diffuser centre-line 0 (figures 14b and 14c), as well as with a multi-cone air deflector (17c) comprising a plurality of substantially truncated cone-shaped deflector elements of differing base diameter centred about diffuser centre-line 0.

Figures 14a and 14b show a plurality of damper doors 6a' with door axes of rotation 6a‴ and 6a" arranged substantially parallel and substantially inclined, substantially coincident with the surfaces of a truncated cylinder and a truncated cone, respectively, centred about diffuser centre-axis 0.

Only the latter embodiment is covered by the present invention for the following reasons:
Vertical damper axes of rotation 6a‴ potentially result in restricted onflow-chamber 120 relative to a side wall of connection box 20, thereby potentially restricting the flow of damper airstream 7 onto damper doors 6a', whereas inclined damper axes of rotation 6a" increase the average distance from a connection box 20 side wall to damper doors 6a', as indicated by shaded area 110, providing improved airflow from onflow-chamber 120 onto damper doors 6a', reducing pressure drop and providing more uniform discharge from damper doors 6a'.

Shaded area 110, created by inclined damper axes of rotation 6a", provides a path for supply air 3 (not shown) to pass intermediate damper doors 6a' (shown) as it travels from side-entry spigot 4' (shown as hidden detail) to damper doors 6a' proximate a connection box 20 side wall located substantially opposite side-entry spigot 4' (not shown, as this assembly is located behind the viewer of figure 14b), thereby reducing pressure drop and providing more uniform discharge from damper doors 6a'.

In figure 14c, shaded area 110, created by inclined damper axes of rotation 6a", provides an expanded path for supply air 3 to flow from top-entry spigot 4'1 into onflow-chamber 120 and then onto damper doors 6a', thereby reducing pressure drop and providing more uniform discharge from damper doors 6a'.

In comparison to vertisubstantiually parallel damper axes of rotation 6a"', inclined damper axes of rotation 6a" orientate damper doors 6a' to direct damper airstream 7 partially towards multi-cone deflector 7c, especially when damper doors 6a' are fully open, thereby reducing pressure drop and noise.

In comparison to substantially parallel damper axes of rotation 6a"', inclined damper axes of rotation 6a" orientate damper doors 6a' to open partially downwards (assuming diffuser centre-line 0 is vertically orientated, as would be the case if diffuser face 1 is horizontal) and hence gravity assists in pulling damper doors 6a' open onto magnets 32'.

In comparison to substantially parallel damper axes of rotation 6a"', inclined damper axes of rotation 6a" orientate damper doors 6a' to open partially in a direction parallel to diffuser centre-line 0, facilitating a simple worm gear (26) mechanism with direct stepper motor (10c) drive, to open and close damper doors 6a' via movement of damper arms 32 in a direction parallel to diffuser centre-line 0.

Not shown is an alternative embodiment with damper axes of rotation substantially radially aligned about diffuser centre-line 0 in diffuser neck DN1 (figure 14b). In comparison to this embodiment, inclined damper axes of rotation 6a" allow damper doors 6a' to provide a larger open area for damper airstream 7, resulting in a lower pressure drop and noise, based on a given minimum connection box height H3 (figure 13b), equal to 200 mm in some embodiments, to allow attachment of a side-entry spigot 4' to connection box 20 and for supply air 3 to enter connection box 20 and diffuser neck DN1 from the side.

### Potentially Advantageous Features of the Embodiments Described Herein

An air delivery system incorporating the diffuser described herein may provide the potential for substantial energy savings, increased VAV turndown, increased spread when turned down, full shut-off, lower supply air temperature, and more effective performance, as well as for improved thermal comfort, enhanced indoor air quality, reduced capital cost, increased flexibility to change, and enhanced aesthetics.

HVAC systems that deliver supply air to spaces via actuator driven VAV cyclone swirl diffusers in accordance with embodiments may be designed to operate in HVAC systems with variable speed drive fans or that incorporate devices, such as duct pressure control dampers, to potentially reduce airflow during periods of low thermal load, thereby saving fan energy. This is because a diffuser as described by certain embodiments, in which supply air is discharged substantially in the plane or parallel to the plane of the ceiling, may have the supply air supplied at a lower temperature (as low as 7°C, in comparison to 10°C to 12°C for the prior art) and hence at a lower airflow rate (typically 30% less airflow) for the same cooling capacity and without creating draughts.

Additionally, a diffuser in accordance with embodiments may have a greater VAV range of operation (typically 20% greater) as it can be turned down to a far lower airflow rate, equating to a pressure independent turndown to 6 L/s, or 15% or less of diffuser maximum airflow rate, than comparable swirl diffusers of the prior art, which typically have a pressure dependent turndown ratio to 25%, equating to turndown to a value greater than 25% when subjected to a pressure greater than the design pressure (to 35%, for example, if system pressure increases from a design static pressure of 30 Pa at the diffuser to 60 Pa). A lower minimum airflow rate may reduce the risk of overcooling the space or of requiring reheat to prevent overcooling, thereby potentially improving comfort and reducing energy costs.

A further potential advantage is that a diffuser in accordance with embodiments may achieve substantially greater airflow rate turndown at a supply-to-room temperature differential of -15 K and an ADPI in the room in excess of 90%, and maintain substantially constant throw in a plane parallel to the diffuser face, or achieve greater throw than is provided by a comparable swirl diffuser of the prior art when turned under the same conditions, thereby potentially increasing the floor area that may be served by a single diffuser. This may reduce the number of diffusers required, potentially saving capital costs.

Additionally, the maximum airflow rate that may be discharged by a diffuser as described by some embodiments may be greater than that of a comparable swirl diffuser of the prior art (more than 75% greater), thereby potentially allowing a smaller number of diffusers to be used (potentially 40% fewer diffusers), for diffusers that fit into a ceiling grid of approximately 600 mm x 600 mm, or a smaller diffuser face size to be selected, such as one suitable for a 500 mm x 500 mm ceiling grid up to a maximum airflow rate of 230 L/s at a sound pressure level in the room of NC30 (based on 10 dB room absorption), hence further reducing capital costs and improving aesthetics.

Further embodiments may allow the airflow rate range of the diffuser to be reconfigured, and additionally, for this to be done in situ without removal of the diffuser from the ceiling. This may provide flexibility for tenancy changes, such as for a diffuser that previously served a large space requiring a large airflow rate to be reconfigured to serve a small space requiring a small airflow rate. Importantly, this may be achieved without reducing the diffuser turndown ratio or minimum airflow rate. Diffusers of the prior art do not include such features.

Embodiments of the diffuser may include airflow rate determination by means of static pressure measurements within the connection box mapped to the position of the damper doors. This may allow diffuser airflow rate to be relatively accurately determined even at low airflow rates, and additionally may allow the actual diffuser static pressure to be determined for each diffuser so as to potentially allow system pressure to be controlled (e.g. via the system fan) to relatively accurately maintain at least each diffuser's minimum permissible static pressure, which is typically 10 Pa, or to achieve the required static pressure of the diffuser with the highest demand. Moreover, measuring static pressure at each diffuser may provide redundancy. If a pressure sensor were to fail then only the actual static pressure at that one diffuser would be lost (and may be estimated from the other pressure sensors), potentially without compromising operation of the entire system or causing system failure.

Some embodiments may incorporate room air induction systems to allow integrated sensing of room air temperature, humidity (RH) and indoor air quality (CO₂ or VOC), thereby potentially obviating the need for external wiring of remote sensors.

Embodiments of the diffuser may include an induction system that discharges through 360° in a plane parallel to the diffuser face, thereby arresting leakage when damper doors are closed, preventing draughts due to dumping, and preventing short-circuiting of leakage or of supply air discharged by the diffuser into the induction system and hence improving the accuracy of integrated sensing of room air temperature, humidity and indoor air quality (CO₂ or VOC), and providing uniform distribution of the discharged primary and secondary air of the induction system to the conditioned space.

Embodiments that further include an induction damper may allow each diffuser to be fully shut off, for example when the space served is unoccupied, which may be sensed by an optional integrated PIR sensor, thereby potentially saving energy.

Furthermore, embodiments with an induction damper may allow the induction damper position to be adjusted to deliver a constant airflow rate to the induction system to provide pressure independent minimum airflow discharge from the diffuser equal to the minimum airflow rate required for operation of the induction system.

Diffusers according to embodiments may have a lower profile than comparable diffusers of the prior art that deliver a similar airflow rate, thereby potentially reducing the ceiling void height requirement for a given diffuser airflow rate. This may allow larger airflow rates to be achieved per diffuser for a given ceiling void height, potentially reducing the number of diffusers required, or it may allow the building slab-to-slab height to be reduced. Substantial capital cost savings may be achieved.

Blanking segments may be used in embodiments to alter discharge direction from 360° to 270°, 180°, or 2 x 90° patterns when viewed in plan-view, which may allow the diffusers to be placed close to walls or other obstructions.

Embodiments may provide access through the diffuser hub whilst the diffuser is in situ in the ceiling, for removal or replacement of any sensor, the PC board or the electric actuator, thereby potentially facilitating ease of maintenance and reconfiguration of the diffuser for tenancy changes.

Embodiments of the diffuser may include noise suppression features such as serrations, turbulators and trailing edge diffusers, which may allow diffuser operation even when supply air static pressure is high, thereby making such diffusers suitable for non-static regain duct design systems, such as constant velocity or equal friction duct designs. This may simplify new-build duct design and make diffusers in accordance with embodiments suitable for retrofit applications in which existing ductwork is to be reused.

In the claims which follow and in the preceding description, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments.

## Claims

1. A diffuser unit (1d) for supplying air to a space, the diffuser unit comprising:
a pressure plenum (20) having an air inlet (4') receiving an airflow with a variable rate;
at least one air deflector (17, 17c) through which air is discharged into the space, the air deflector arranged to disperse the discharged air in a plane substantially parallel to a discharge face (1) of the discharge unit, the air deflector forming an outlet to the pressure plenum;
a damper compartment (6b) located within the pressure plenum and connected to the at least one air deflector so that the air deflector forms at least one facet of the damper compartment, wherein the damper compartment has a plurality of damper apertures (7a) forming inlets to the damper compartment, the damper compartment further comprising a plurality of damper doors (6a', 6a'1), each damper door associated with at least one corresponding aperture (7a) and being operable between an open position and a closed position;
and wherein the damper compartment and the damper apertures are arranged so that air entering the damper compartment through the damper apertures from the pressure plenum forms a swirl before exiting the damper compartment through the at least one air deflector, **characterized in that** the damper compartment is frusto-conical.

2. The diffuser unit according to claim 1 wherein the damper apertures are operable to achieve a higher distal and lower proximal tangential velocity of air discharged from the air deflector when the damper apertures are throttled, wherein
the diffuser unit may comprise a perforated baffle plate (21) associated with the air inlet of the pressure plenum;
each damper door may be moved between an open position and a closed position;
one or more damper doors may comprise a vane extending tangentially to a surface of the damper compartment;
the damper compartment may have a plurality of edges defining the apertures, the damper compartment optionally having vanes formed at the edges.

3. The diffuser unit according to claim 1 or claim 2 wherein the damper doors are formed by a sheath which engages with, and slides relative to, the damper compartment, wherein
one or more damper doors may be mounted for pivoting movement about an axis relative to the damper compartment;

4. The diffuser unit according to any preceding claim wherein one or more doors has a trailing edge (6a‴) formed with serrations (17"), wherein
the serrations may be one or more of: saw-tooth, sinusoidal or irregular;
the one or more doors may be formed from a perforated or porous material at the trailing edge;
one or more damper doors may have a trailing edge and a profile of the trailing edge may diverge from a profile of a portion of the damper door excluding the trailing edge;

5. The diffuser unit according to any preceding claim wherein one or more damper doors has a surface upon which airflow impinges, the surface being formed with one or more protrusions (6a3) to reduce a noise generated by air flowing over the surface, wherein the surface may form a trailing edge and/or a sealing edge, wherein
the protrusions may be one or more of: substantially planar, a sawtooth, rectangles, triangles, truncated triangles, substantially sinusoidal or irregular, or vortex generators shaped as a distorted pyramid with a triangular base, a blade shape or hemispheres.

6. The diffuser unit according to any preceding claim wherein the damper compartment comprises an inlet surface for forming a seal with a corresponding damper door, the inlet surface describing a rounded inlet upstream of a sealing site, wherein
one or more damper doors may comprise a lock (34a) for locking a position of the damper door relative to the corresponding aperture;
the diffuser unit may further comprise one or more blanking segments for obstructing a portion of airflow though the unit;
the damper apertures may be substantially symmetrically arranged around a periphery of the compartment (6b);

7. The diffuser unit may comprise at least one actuator (10c, 26, 27, 28) for opening and closing the doors, wherein
the diffuser unit may further comprise a sensor for measuring air temperature, the sensor being connected to the at least one actuator so that the doors may be opened or closed in response to measured air temperature;
the diffuser unit may further comprise a supply air sensor (10f) arranged to measure supply air temperature and a room air sensor (10e) arranged to measure an air temperature of the space;
the at least one actuator may comprise one or more arms (30, 32) engaging with respective doors, wherein the actuator is arranged to translate the arms in a direction substantially parallel to a central axis of the compartment to thereby move the damper doors between the open and closed positions.

8. The diffuser unit according to any preceding claim further comprising a core portion delimited from the damper compartment by a core conduit, wherein
the core conduit may comprise a shroud (6"), the shroud having an inlet into which air from the pressure plenum enters the shroud, and an outlet through which air exits the shroud;
the diffuser unit may have a perforated cap (8b) and the core portion may comprise a divider (42) dividing the core portion into an upper portion associated with the pressure plenum and a lower portion associated with the space into which the air is discharged by the diffuser unit during use, the lower portion having a venturi wall (6‴), the divider being formed with one or more induction inlets (11'), the core portion further having a second inlet (15') located above the venturi wall in the lower portion wherein airflow through the induction inlets causes an induced airflow through the perforations in the cap into the shroud through the second inlet to form a combined airflow which exits the shroud through the outlet, further wherein
the induction inlet may be configured to impart a swirl to the combined airflow;
the diffuser unit may further comprise an induction damper (29) operable between a closed position in which induced airflow is restricted or prevented and an open position in which induced airflow is permitted, in which case, the diffuser unit may further comprise an actuator mechanism (10c, 26, 27, 28) for closing the damper doors and then moving the induction damper to a closed position, and opening the damper doors after moving the induction damper to an open position.

9. The diffuser unit according to any preceding claim comprising one or more pressure sensors (10g) for measuring a static pressure of the supply air relative to a static pressure of the space.

10. A method of diffusing an airflow using a diffuser unit (1d), the diffuser unit comprising:
a pressure plenum (20) having an air inlet (4');
an air deflector (17, 17c) through which air is discharged into a space, the air deflector comprising a plurality of discharge elements arranged to disperse the discharged air in a plane substantially parallel to a discharge face of the discharge unit, the air deflector forming an outlet to the pressure plenum;
a damper compartment (6b) located within the pressure plenum and connected to the air deflector so that the air deflector forms at least one facet of the damper compartment, **characterized in that** the damper compartment is frusto-conical and has a plurality of damper apertures forming inlets to the damper compartment, the damper compartment further comprising at least one damper door (6a', 6a'1), the damper door associated with a corresponding aperture and being operable between an open position and a closed position;
the method comprising:
receiving a supply airflow with a variable supply airflow rate through the air inlet to the pressure plenum;
opening one or more damper doors (6a', 6a'1) to allow an airflow into the damper compartment;
creating a swirl airflow within the damper compartment; and
allowing air to exit the diffuser unit into a space via the air deflector in a swirl in a plane substantially parallel to a discharge face of the discharge unit.

11. The method according to claim 10 wherein
the damper door describes a damper door angle (α), the damper door angle being related to an amount of airflow permitted through the corresponding aperture, wherein
the swirl airflow within the damper compartment has a pitch angle (β), and wherein
airflow rate and pitch angle of the swirl airflow within the compartment increases with increasing damper door angle, wherein
the method may comprise maintaining an attachment between an airstream exiting the air deflector and a face of the air deflector.

12. The method according to claim 10 or claim 11 further comprising closing the damper door to achieve a higher distal tangential velocity relative to a proximal tangential velocity, or to increase a tangential velocity of the swirl airflow within the damper compartment; the airstream exiting the air deflector comprising a reduced airflow rate, a greater distal tangential velocity relative to a proximal tangential velocity; and a throw of the airstream exiting the air deflector being substantially constant or greater than if a tangential velocity distribution of the air exiting the air deflector were substantially constant as the damper doors close.

13. The method according to claim 12 wherein a static pressure in the pressure plenum remains substantially constant, wherein
the method according may further comprise closing the damper door thereby forming a small but non-negligible swirl airflow in the damper compartment; the airstream exiting the diffuser unit via the air deflector in a swirl.

14. The method according to any of claims 10 to 12 wherein the unit comprises more than one door, the method comprising locking one or more doors, wherein
the unit may comprise a blanking segment (25), the method comprising using the blanking segment to obstruct a portion of airflow though the unit;
the method may comprise sensing a temperature of a supply air and/or a temperature of the space and operating the damper doors in response to a determined temperature;
the unit may comprise an induction chamber having induction inlets (11'), the method comprising drawing air into the induction chamber (15) from the space through induction caused by an airstream through the induction inlets derived from the pressure plenum to form a combined airflow which exits through the diffuser outlet;
the combined airflow which exits through the diffuser outlet may do so in a substantially 360° pattern in the plane substantially parallel to the discharge face of the discharge unit.
the combined airflow which exits through the diffuser outlet may project away from the diffuser outlet in a direction substantially parallel to a plane defined by a face of the diffuser outlet.
the combined airflow which exits through the diffuser outlet may act to arrest leakage from the damper doors.

15. A method of determining an airflow rate for a diffuser unit (1d), the diffuser unit comprising:
a pressure plenum (20) having an air inlet (4') receiving a supply airflow with a variable supply airflow rate;
at least one air deflector (17, 17c) through which air is discharged into a space, the at least one air deflector comprising a plurality of discharge elements arranged to disperse the discharged air, the air deflector forming an outlet to the pressure plenum;
a damper compartment (6b) located within the pressure plenum and connected to the at least one air deflector so that the air deflector forms at least one facet of the damper compartment, the damper compartment having a plurality of damper apertures (7a) forming inlets to the damper compartment, the damper compartment further comprising a plurality of induction dampers (29) or damper doors (6a', 6a'1), the induction dampers or damper doors associated with corresponding apertures (7a) and being operable between an open position and a closed position;
the method comprising:
determining a static pressure in the pressure plenum;
determining a position of the induction damper or damper door; and
calculating a supply airflow rate with reference to the determined static pressure and door position.

## Patentansprüche

1. Diffusoreinheit (1d) zur Luftzufuhr in einen Raum, wobei die Diffusoreinheit umfasst:
ein Druckplenum (20) mit einem Lufteinlass (4'), der einen Luftstrom mit variablem Volumenstrom aufnimmt;
mindestens ein Luftleitblech (17, 17c), durch das Luft in den Raum ausgestoßen wird, wobei das Luftleitblech so angeordnet ist, dass die ausgestoßene Luft in einer im Wesentlichen parallel zu einer Austrittsfläche (1) der Diffusoreinheit verlaufenden Ebene verteilt wird, wobei das Luftleitblech einen Auslass zu dem Druckplenum bildet;
einen Klappenraum (6b), der innerhalb des Druckplenums angeordnet ist und mit dem mindestens einen Luftleitblech verbunden ist, so dass das Luftleitblech mindestens eine Fläche des Klappenraums bildet, wobei der Klappenraum eine Mehrzahl von Klappenöffnungen (7a) aufweist, die Einlässe zu dem Klappenraum bilden, wobei der Klappenraum ferner eine Mehrzahl von Drosselklappen (6a', 6a'1) umfasst, wobei jede Drosselklappe mindestens einer entsprechenden Klappenöffnung (7a) zugeordnet ist und zwischen einer offenen Stellung und einer geschlossenen Stellung betätigbar ist;
und wobei der Klappenraum und die Klappenöffnungen so angeordnet sind, dass Luft, die durch die Klappenöffnungen aus dem Druckplenum in den Klappenraum eintritt, einen Drall bildet, bevor sie den Klappenraum durch das mindestens eine Luftleitblech verlässt, **dadurch gekennzeichnet, dass** der Klappenraum kegelstumpfförmig ist.

2. Diffusoreinheit nach Anspruch 1, wobei die Klappenöffnungen so betätigbar sind, dass eine höhere distale und eine niedrigere proximale Tangentialgeschwindigkeit der Luft, die aus dem Luftleitblech ausgestoßen wird, erreicht wird, wenn die Klappenöffnungen gedrosselt sind, wobei
die Diffusoreinheit eine mit dem Lufteinlass des Druckplenums verbundene perforierte Prallplatte (21) umfassen kann;
wobei jede Drosselklappe zwischen einer offenen Stellung und einer geschlossenen Stellung bewegt werden kann;
wobei eine oder mehrere Drosselklappen eine sich tangential zu einer Oberfläche des Klappenraums erstreckende Leitschaufel umfassen können;
wobei der Klappenraum eine Mehrzahl von Kanten aufweisen kann, die die Klappenöffnungen definieren, wobei der Klappenraum wahlweise an den Kanten ausgebildete Leitschaufeln aufweist.

3. Diffusoreinheit nach Anspruch 1 oder Anspruch 2, wobei die Drosselklappen durch eine Ummantelung gebildet sind, die mit dem Klappenraum in Eingriff steht und relativ zu diesem verschiebbar ist,
wobei eine oder mehrere Drosselklappen für eine Schwenkbewegung um eine Achse relativ zu dem Klappenraum gelagert sein können.

4. Diffusoreinheit nach einem der vorstehenden Ansprüche, wobei eine oder mehrere Drosselklappen eine Hinterkante (6a‴) mit Ausnehmungen (17") aufweisen, wobei die
Ausnehmungen eine oder mehrere der folgenden Formen aufweisen können:
sägezahnförmig, sinusförmig oder unregelmäßig;
wobei die eine oder mehreren Drosselklappen im Bereich der Hinterkante aus einem perforierten oder porösen Material gebildet sein können;
wobei eine oder mehrere Drosselklappen eine Hinterkante aufweisen und ein Profil der Hinterkante von einem Profil eines Abschnitts der Drosselklappe ohne die Hinterkante abweichen kann.

5. Diffusoreinheit nach einem der vorstehenden Ansprüche, wobei eine oder mehrere Drosselklappen eine Oberfläche aufweisen, auf die ein Luftstrom auftrifft, wobei die Oberfläche mit einer oder mehreren Erhebungen (6a3) ausgebildet ist, um ein durch über die Oberfläche strömende Luft erzeugtes Geräusch zu reduzieren, wobei die Oberfläche eine Hinterkante und/oder eine Dichtkante bilden kann,
wobei die Erhebungen eine oder mehrere der folgenden Formen aufweisen können: im Wesentlichen eben, sägezahnförmig, rechteckig, dreieckig, kegelstumpfförmig dreieckig, im Wesentlichen sinusförmig oder unregelmäßig, oder Wirbelgeneratoren in Form einer verzerrten Pyramide mit dreieckiger Basis, einer Schaufelform oder Halbkugeln.

6. Diffusoreinheit nach einem der vorstehenden Ansprüche, wobei der Klappenraum eine Einlassfläche zum Bilden einer Dichtung mit einer entsprechenden Drosselklappe umfasst, wobei die Einlassfläche einen abgerundeten Einlass stromaufwärts von einer Dichtstelle beschreibt,
wobei eine oder mehrere Drosselklappen eine Verriegelung (34a) zum Verriegeln einer Position der Drosselklappe relativ zu der entsprechenden Klappenöffnung aufweisen können,
wobei die Diffusoreinheit ferner ein oder mehrere Blindsegmente zum Versperren eines Teils des Luftstroms durch die Einheit umfassen kann,
wobei die Klappenöffnungen im Wesentlichen symmetrisch um einen Umfang des Klappenraums (6b) angeordnet sein können.

7. Diffusoreinheit nach einem der vorstehenden Ansprüche, wobei die Diffusoreinheit mindestens einen Stellantrieb (10c, 26, 27, 28) zum Öffnen und Schließen der Drosselklappen umfasst,
wobei die Diffusoreinheit ferner einen Sensor zum Messen der Lufttemperatur umfassen kann, wobei der Sensor mit dem mindestens einen Stellantrieb verbunden ist, so dass die Drosselklappen in Reaktion auf die gemessene Lufttemperatur geöffnet oder geschlossen werden können,
wobei die Diffusoreinheit ferner einen Zuluftsensor (10f), der zum Messen einer Zulufttemperatur angeordnet ist, und einen Raumluftsensor (10e), der zum Messen einer Lufttemperatur des Raums angeordnet ist, umfassen kann,
wobei der mindestens eine Stellantrieb einen oder mehrere Arme (30, 32) umfassen kann, die mit jeweiligen Drosselklappen in Eingriff stehen, wobei der Stellantrieb dazu eingerichtet ist, die Arme in einer im Wesentlichen parallel zu einer Zentralachse des Klappenraums verlaufenden Richtung zu verschieben, um dadurch die Drosselklappen zwischen offenen und geschlossenen Stellungen zu bewegen.

8. Diffusoreinheit nach einem der vorstehenden Ansprüche, ferner umfassend einen Kernbereich, der durch einen Kernkanal von dem Klappenraum abgegrenzt ist,
wobei der Kernkanal eine Ummantelung (6") umfassen kann, wobei die Ummantelung einen Einlass aufweist, durch den Luft aus dem Druckplenum in die Ummantelung eintritt, und einen Auslass, durch den Luft aus der Ummantelung austritt;
wobei die Diffusoreinheit eine perforierte Kappe (8b) aufweisen kann und der Kernbereich einen Teiler (42) aufweisen kann, der den Kernbereich in einen oberen Abschnitt, der mit dem Druckplenum verbunden ist, und einen unteren Abschnitt, der mit dem Raum verbunden ist, in den während des Betriebs der Diffusoreinheit die Luft ausgestoßen wird, unterteilt, wobei der untere Abschnitt eine Venturiwand (6‴) aufweist, wobei der Teiler mit einem oder mehreren Induktionseinlässen (11') ausgebildet ist, wobei der Kernbereich ferner einen zweiten Einlass (15') aufweist, der oberhalb der Venturiwand in dem unteren Abschnitt angeordnet ist, wobei ein Luftstrom durch die Induktionseinlässe einen induzierten Luftstrom durch die Perforationen in der Kappe in die Ummantelung durch den zweiten Einlass bewirkt, um einen kombinierten Luftstrom zu bilden, der durch den Auslass aus der Ummantelung austritt,
wobei ferner der Induktionseinlass so ausgebildet sein kann, dass er dem kombinierten Luftstrom einen Drall verleiht;
die Diffusoreinheit ferner eine Induktionsklappe (29) umfassen kann, die zwischen einer geschlossenen Stellung, in der ein induzierter Luftstrom begrenzt oder verhindert ist, und einer offenen Stellung, in der ein induzierter Luftstrom zugelassen ist, betätigbar ist, wobei die Diffusoreinheit in diesem Fall ferner einen Stellantriebsmechanismus (10c, 26, 27, 28) zum Schließen der Drosselklappen und anschließendem Bewegen der Induktionsklappe in eine geschlossene Stellung sowie zum Öffnen der Drosselklappen nach Bewegen der Induktionsklappe in eine offene Stellung umfassen kann.

9. Diffusoreinheit nach einem der vorstehenden Ansprüche, umfassend einen oder mehrere Drucksensoren (10g) zum Messen eines statischen Drucks der Zuluft relativ zu einem statischen Druck des Raums.

10. Verfahren zum Diffundieren eines Luftstroms mit einer Diffusoreinheit (1d), wobei die Diffusoreinheit umfasst:
ein Druckplenum (20) mit einem Lufteinlass (4');
ein Luftleitblech (17, 17c), durch das Luft in einen Raum ausgestoßen wird, wobei das Luftleitblech eine Mehrzahl von Ausstoßelementen umfasst, die so angeordnet sind, dass die ausgestoßene Luft in einer im Wesentlichen parallel zu einer Austrittsfläche der Diffusoreinheit verlaufenden Ebene verteilt wird, wobei das Luftleitblech einen Auslass zu dem Druckplenum bildet;
einen Klappenraum (6b), der innerhalb des Druckplenums angeordnet ist und mit dem Luftleitblech verbunden ist, so dass das Luftleitblech mindestens eine Fläche des Klappenraums bildet, **dadurch gekennzeichnet, dass** der Klappenraum kegelstumpfförmig ist und eine Mehrzahl von Klappenöffnungen aufweist, die Einlässe zu dem Klappenraum bilden, wobei der Klappenraum ferner mindestens eine Drosselklappe (6a', 6a'1) umfasst, wobei die Drosselklappe einer entsprechenden Klappenöffnung zugeordnet ist und zwischen einer offenen Stellung und einer geschlossenen Stellung betätigbar ist;
wobei das Verfahren umfasst:
Aufnehmen eines Zuluftstroms mit variablem Volumenstrom durch den Lufteinlass in das Druckplenum;
Öffnen einer oder mehrerer Drosselklappen (6a', 6a'1), um einen Luftstrom in den Klappenraum zuzulassen;
Erzeugen eines Drallluftstroms innerhalb des Klappenraums; und
Zulassen, dass Luft die Diffusoreinheit über das Luftleitblech in einem Drall in einer im Wesentlichen parallel zu einer Austrittsfläche der Diffusoreinheit verlaufenden Ebene in einen Raum verlässt.

11. Verfahren nach Anspruch 10, wobei die Drosselklappe einen Drosselklappenwinkel (α) beschreibt,
wobei der Drosselklappenwinkel mit einer durch die entsprechende Klappenöffnung zugelassenen Luftmenge verknüpft ist,
wobei der Drallluftstrom innerhalb des Klappenraums einen Steigungswinkel (β) aufweist, und wobei
Volumenstrom und Steigungswinkel des Drallluftstroms innerhalb des Klappenraums mit zunehmendem Drosselklappenwinkel zunehmen,
wobei das Verfahren das Aufrechterhalten einer Anhaftung zwischen einem aus dem Luftleitblech austretenden Luftstrom und einer Fläche des Luftleitblechs umfassen kann.

12. Verfahren nach Anspruch 10 oder Anspruch 11, ferner umfassend das Schließen der Drosselklappe, um eine höhere distale Tangentialgeschwindigkeit relativ zu einer proximalen Tangentialgeschwindigkeit zu erreichen oder um eine Tangentialgeschwindigkeit des Drallluftstroms innerhalb des Klappenraums zu erhöhen; wobei der aus dem Luftleitblech austretende Luftstrom einen verringerten Volumenstrom, eine größere distale Tangentialgeschwindigkeit relativ zu einer proximalen Tangentialgeschwindigkeit aufweist und ein Wurf des aus dem Luftleitblech austretenden Luftstroms im Wesentlichen konstant oder größer ist, als wenn eine Tangentialgeschwindigkeitsverteilung der aus dem Luftleitblech austretenden Luft im Wesentlichen konstant wäre, während die Drosselklappen schließen.

13. Verfahren nach Anspruch 12, wobei ein statischer Druck in dem Druckplenum im Wesentlichen konstant bleibt,
wobei das Verfahren ferner das Schließen der Drosselklappe umfassen kann, wodurch ein kleiner, aber nicht vernachlässigbarer Drallluftstrom im Klappenraum gebildet wird, wobei der Luftstrom über das Luftleitblech in einem Drall aus der Diffusoreinheit austritt.

14. Verfahren nach einem der Ansprüche 10 bis 12, wobei die Einheit mehr als eine Klappe umfasst, wobei das Verfahren das Verriegeln einer oder mehrerer Klappen umfasst,
wobei die Einheit ein Blindsegment (25) umfassen kann, wobei das Verfahren das Verwenden des Blindsegments zum Versperren eines Teils des Luftstroms durch die Einheit umfasst;
wobei das Verfahren das Erfassen einer Temperatur einer Zuluft und/oder einer Temperatur des Raums und das Betätigen der Drosselklappen in Reaktion auf eine ermittelte Temperatur umfassen kann;
wobei die Einheit einen Induktionsraum mit Induktionseinlässen (11') umfassen kann, wobei das Verfahren das Ansaugen von Luft in den Induktionsraum (15) aus dem Raum durch eine Induktion umfasst, die durch einen Luftstrom durch die Induktionseinlässe bewirkt wird, der aus dem Druckplenum abgeleitet ist, um einen kombinierten Luftstrom zu bilden, der durch den Diffusorauslass austritt;
wobei der kombinierte Luftstrom, der durch den Diffusorauslass austritt, dies in einem im Wesentlichen 360°-Muster in einer Ebene tut, die im Wesentlichen parallel zu der Austrittsfläche der Diffusoreinheit verläuft;
wobei der kombinierte Luftstrom, der durch den Diffusorauslass austritt, sich von dem Diffusorauslass in eine Richtung erstrecken kann, die im Wesentlichen parallel zu einer durch eine Fläche des Diffusorauslasses definierten Ebene verläuft;
wobei der kombinierte Luftstrom, der durch den Diffusorauslass austritt, dazu wirken kann, eine Leckage von den Drosselklappen zu begrenzen.

15. Verfahren zum Bestimmen eines Volumenstroms für eine Diffusoreinheit (1d), wobei die Diffusoreinheit umfasst:
ein Druckplenum (20) mit einem Lufteinlass (4'), der einen Zuluftstrom mit variablem Zuluft-Volumenstrom aufnimmt;
mindestens ein Luftleitblech (17, 17c), durch das Luft in einen Raum ausgestoßen wird,
wobei das mindestens eine Luftleitblech eine Mehrzahl von Ausstoßelementen umfasst, die so angeordnet sind, dass die ausgestoßene Luft verteilt wird, wobei das Luftleitblech einen Auslass zu dem Druckplenum bildet;
einen Klappenraum (6b), der innerhalb des Druckplenums angeordnet ist und mit dem mindestens einen Luftleitblech verbunden ist, so dass das Luftleitblech mindestens eine Fläche des Klappenraums bildet, wobei der Klappenraum eine Mehrzahl von Klappenöffnungen (7a) aufweist, die Einlässe zu dem Klappenraum bilden, wobei der Klappenraum ferner eine Mehrzahl von Induktionsklappen (29) oder Drosselklappen (6a', 6a'1) umfasst, wobei die Induktionsklappen oder Drosselklappen jeweils einer entsprechenden Klappenöffnung (7a) zugeordnet sind und zwischen einer offenen Stellung und einer geschlossenen Stellung betätigbar sind;
wobei das Verfahren umfasst:
Bestimmen eines statischen Drucks in dem Druckplenum;
Bestimmen einer Stellung der Induktionsklappe oder der Drosselklappe; und
Berechnen eines Zuluft-Volumenstroms in Bezug auf den bestimmten statischen Druck und die bestimmte Klappenstellung.

## Revendications

1. Une unité de diffusion (1d) destinée à fournir de l'air à un espace, l'unité de diffusion comprenant :
un plénum de pression (20) ayant une entrée d'air (4') recevant un flux d'air avec un débit variable ;
au moins un déflecteur d'air (17, 17c) à travers lequel l'air est soufflé dans l'espace, le déflecteur d'air étant agencé pour disperser l'air soufflé dans un plan sensiblement parallèle à une face de soufflage (1) de l'unité de soufflage, le déflecteur d'air formant une sortie du plénum de pression ;
un compartiment de registre (6b) situé à l'intérieur du plénum de pression et relié au moins à un déflecteur d'air de sorte que le déflecteur d'air forme au moins une face du compartiment de registre, le compartiment de registre présentant une pluralité d'ouvertures de registre (7a) formant des entrées dans le compartiment de registre, le compartiment de registre comprenant en outre une pluralité de volets de registre (6a', 6a'1), chaque volet de registre étant associé à au moins une ouverture correspondante (7a) et étant manœuvrable entre une position ouverte et une position fermée ;
et le compartiment de registre et les ouvertures de registre étant agencés de telle sorte que l'air pénétrant dans le compartiment de registre à travers les ouvertures de registre depuis le plénum de pression forme un tourbillon avant de sortir du compartiment de registre à travers ledit au moins un déflecteur d'air, **caractérisée en ce que** le compartiment de registre est tronconique.

2. L'unité de diffusion selon la revendication 1, dans laquelle les ouvertures de registre sont manœuvrables de façon à obtenir une vitesse tangentielle plus élevée à distance et plus faible à proximité de l'air soufflé depuis le déflecteur d'air lorsque les ouvertures de registre sont étranglées,
l'unité de diffusion pouvant comprendre une plaque de cloisonnement perforée (21) associée à l'entrée d'air du plénum de pression ;
chaque volet de registre pouvant être déplacé entre une position ouverte et une position fermée ;
un ou plusieurs volets de registre pouvant comprendre une aube s'étendant tangentiellement à une surface du compartiment de registre ;
le compartiment de registre pouvant avoir une pluralité d'arêtes définissant les ouvertures, le compartiment de registre présentant éventuellement des aubes formées au niveau des arêtes.

3. L'unité de diffusion selon la revendication 1 ou la revendication 2, dans laquelle les volets de registre sont formés par une gaine qui vient en prise avec le compartiment de registre et coulisse par rapport à celui-ci,
un ou plusieurs volets de registre pouvant être montés de façon à pivoter autour d'un axe par rapport au compartiment de registre.

4. L'unité de diffusion selon l'une quelconque des revendications précédentes, dans laquelle un ou plusieurs volets ont un bord de fuite (6a‴) formé avec des dents (17"),
les dents pouvant être choisies parmi : en dents de scie, sinusoïdales ou irrégulières ;
le ou les volets pouvant être réalisés en un matériau perforé ou poreux au niveau du bord de fuite ;
un ou plusieurs volets de registre pouvant présenter un bord de fuite et un profil du bord de fuite pouvant diverger d'un profil d'une partie du volet de registre à l'exclusion du bord de fuite.

5. L'unité de diffusion selon l'une quelconque des revendications précédentes, dans laquelle un ou plusieurs volets de registre présentent une surface sur laquelle le flux d'air vient impacter, la surface étant formée avec une ou plusieurs saillies (6a3) afin de réduire un bruit généré par l'air s'écoulant sur la surface, la surface pouvant former un bord de fuite et/ou un bord d'étanchéité,
les saillies pouvant être choisies parmi : sensiblement planes, en dents de scie, en rectangles, en triangles, en triangles tronqués, sensiblement sinusoïdales ou irrégulières, ou des générateurs de tourbillons formés en une pyramide déformée à base triangulaire, une forme d'aube ou des hémisphères.

6. L'unité de diffusion selon l'une quelconque des revendications précédentes, dans laquelle le compartiment de registre comprend une surface d'entrée destinée à former un joint avec un volet de registre correspondant, la surface d'entrée décrivant une entrée arrondie en amont d'une zone d'étanchéité,
un ou plusieurs volets de registre pouvant comprendre un dispositif de verrouillage (34a) pour verrouiller une position du volet de registre par rapport à l'ouverture correspondante ;
l'unité de diffusion pouvant en outre comprendre un ou plusieurs segments obturateurs destinés à obstruer une partie du flux d'air à travers l'unité ;
les ouvertures de registre pouvant être disposées de manière sensiblement symétrique autour d'une périphérie du compartiment (6b).

7. L'unité de diffusion selon l'une quelconque des revendications précédentes, pouvant comprendre au moins un actionneur (10c, 26, 27, 28) pour l'ouverture et la fermeture des volets,
l'unité de diffusion pouvant en outre comprendre un capteur pour mesurer la température de l'air, le capteur étant relié audit au moins un actionneur de sorte que les volets puissent être ouverts ou fermés en réponse à la température de l'air mesurée ;
l'unité de diffusion pouvant en outre comprendre un capteur d'air de soufflage (10f) agencé pour mesurer la température de l'air de soufflage et un capteur d'air ambiant (10e) agencé pour mesurer une température de l'air de l'espace ;
le ou les actionneurs pouvant comprendre un ou plusieurs bras (30, 32) venant en prise avec des volets respectifs, l'actionneur étant agencé pour translater les bras dans une direction sensiblement parallèle à un axe central du compartiment afin de déplacer ainsi les volets de registre entre les positions ouverte et fermée.

8. L'unité de diffusion selon l'une quelconque des revendications précédentes, comprenant en outre une partie centrale délimitée du compartiment de registre par un conduit central,
le conduit central pouvant comprendre un carter de guidage (6"), le carter de guidage présentant une entrée dans laquelle l'air provenant du plénum de pression pénètre dans le carter de guidage, et une sortie à travers laquelle l'air sort du carter de guidage.
l'unité de diffusion peut présenter un capot perforé (8b) et la partie centrale peut comprendre une cloison de séparation (42) divisant la partie centrale en une partie supérieure associée au plénum de pression et une partie inférieure associée à l'espace dans lequel l'air est soufflé par l'unité de diffusion en cours d'utilisation, la partie inférieure présentant une paroi de venturi (6‴), la cloison de séparation étant formée avec une ou plusieurs entrées d'induction (11'), la partie centrale présentant en outre une seconde entrée (15') située au-dessus de la paroi de venturi dans la partie inférieure, dans laquelle un flux d'air traversant les entrées d'induction provoque un flux d'air induit à travers les perforations du capot dans le carter de guidage à travers la seconde entrée pour former un flux d'air combiné qui sort du carter de guidage à travers la sortie, et dans laquelle en outre
l'entrée d'induction peut être configurée pour conférer un tourbillon au flux d'air combiné ;
l'unité de diffusion peut en outre comprendre un registre d'induction (29) manœuvrable entre une position fermée dans laquelle le flux d'air induit est limité ou empêché et une position ouverte dans laquelle le flux d'air induit est autorisé, auquel cas l'unité de diffusion peut en outre comprendre un mécanisme d'actionnement (10c, 26, 27, 28) destiné à fermer les volets de registre puis à amener le registre d'induction en position fermée, et à ouvrir les volets de registre après avoir amené le registre d'induction en position ouverte.

9. L'unité de diffusion selon l'une quelconque des revendications précédentes, comprenant un ou plusieurs capteurs de pression (10g) destinés à mesurer une pression statique de l'air de soufflage par rapport à une pression statique de l'espace.

10. Procédé de diffusion d'un flux d'air au moyen d'une unité de diffusion (1d), l'unité de diffusion comprenant :
un plénum de pression (20) présentant une entrée d'air (4') ;
un déflecteur d'air (17, 17c) à travers lequel l'air est soufflé dans un espace, le déflecteur d'air comprenant une pluralité d'éléments de soufflage agencés pour disperser l'air soufflé dans un plan sensiblement parallèle à une face de soufflage de l'unité de soufflage, le déflecteur d'air formant une sortie du plénum de pression ;
un compartiment de registre (6b) situé à l'intérieur du plénum de pression et relié au déflecteur d'air de sorte que le déflecteur d'air forme au moins une face du compartiment de registre, **caractérisé en ce que** le compartiment de registre est tronconique et présente une pluralité d'ouvertures de registre formant des entrées dans le compartiment de registre, le compartiment de registre comprenant en outre au moins un volet de registre (6a', 6a'1), le volet de registre étant associé à une ouverture correspondante et étant manœuvrable entre une position ouverte et une position fermée ;
le procédé comprenant les étapes consistant à :
recevoir un flux d'air de soufflage présentant un débit d'air de soufflage variable à travers l'entrée d'air vers le plénum de pression ;
ouvrir un ou plusieurs volets de registre (6a', 6a'1) pour permettre un flux d'air dans le compartiment de registre ;
créer un flux d'air tourbillonnaire à l'intérieur du compartiment de registre ; et
permettre à l'air de sortir de l'unité de diffusion dans un espace via le déflecteur d'air en un tourbillon dans un plan sensiblement parallèle à une face de soufflage de l'unité de soufflage.

11. Procédé selon la revendication 10, dans lequel
le volet de registre décrit un angle de volet de registre (a), l'angle de volet de registre étant lié à une quantité de flux d'air autorisé à travers l'ouverture de registre correspondante, dans lequel
le flux d'air tourbillonnaire à l'intérieur du compartiment de registre présente un angle de tangage (B), et dans lequel
le débit d'air et l'angle de tangage du flux d'air tourbillonnaire à l'intérieur du compartiment augmentent avec l'augmentation de l'angle de volet de registre, le procédé pouvant consister à maintenir une adhérence entre un flux d'air sortant du déflecteur d'air et une face du déflecteur d'air.

12. Procédé selon la revendication 10 ou la revendication 11, comprenant en outre la fermeture du volet de registre afin d'obtenir une vitesse tangentielle distale plus élevée par rapport à une vitesse tangentielle proximale, ou d'augmenter une vitesse tangentielle du flux d'air tourbillonnaire à l'intérieur du compartiment de registre ; le flux d'air sortant du déflecteur d'air présentant un débit d'air réduit, une vitesse tangentielle distale plus élevée par rapport à une vitesse tangentielle proximale ; et une portée du flux d'air sortant du déflecteur d'air étant sensiblement constante ou plus grande que si une répartition de vitesse tangentielle de l'air sortant du déflecteur d'air était sensiblement constante lorsque les volets de registre se ferment.

13. Procédé selon la revendication 12, dans lequel une pression statique dans le plénum de pression reste sensiblement constante,
le procédé pouvant en outre consister à fermer le volet de registre, formant ainsi un flux d'air tourbillonnaire faible mais non négligeable dans le compartiment de registre ; le flux d'air sortant de l'unité de diffusion via le déflecteur d'air l'étant en tourbillon.

14. Procédé selon l'une quelconque des revendications 10 à 12, dans lequel l'unité comprend plus d'un volet, le procédé comprenant le verrouillage d'un ou de plusieurs volets,
l'unité pouvant comprendre un segment obturateur (25), le procédé comprenant l'utilisation du segment obturateur pour obstruer une partie du flux d'air à travers l'unité ;
le procédé pouvant consister à détecter une température d'un air de soufflage et/ou une température de l'espace et à manœuvrer les volets de registre en réponse à une température déterminée ;
l'unité pouvant comprendre une chambre d'induction présentant des entrées d'induction (11'), le procédé comprenant l'aspiration d'air dans la chambre d'induction (15) depuis l'espace par induction provoquée par un flux d'air à travers les entrées d'induction issu du plénum de pression afin de former un flux d'air combiné qui sort par la sortie de diffuseur ;
le flux d'air combiné qui sort par la sortie de diffuseur pouvant le faire selon un schéma sensiblement à 360° dans le plan sensiblement parallèle à la face de soufflage de l'unité de soufflage.
le flux d'air combiné qui sort par la sortie de diffuseur pouvant se projeter à l'écart de la sortie de diffuseur dans une direction sensiblement parallèle à un plan défini par une face de la sortie de diffuseur.
le flux d'air combiné qui sort par la sortie de diffuseur pouvant agir pour arrêter des fuites provenant des volets de registre.

15. Procédé de détermination d'un débit d'air pour une unité de diffusion (1d), l'unité de diffusion comprenant :
un plénum de pression (20) présentant une entrée d'air (4') recevant un flux d'air de soufflage avec un débit d'air de soufflage variable ;
au moins un déflecteur d'air (17, 17c) à travers lequel l'air est soufflé dans un espace, ledit au moins un déflecteur d'air comprenant une pluralité d'éléments de soufflage agencés pour disperser l'air soufflé, le déflecteur d'air formant une sortie du plénum de pression ;
un compartiment de registre (6b) situé à l'intérieur du plénum de pression et relié audit au moins un déflecteur d'air de sorte que le déflecteur d'air forme au moins une face du compartiment de registre, le compartiment de registre présentant une pluralité d'ouvertures de registre (7a) formant des entrées dans le compartiment de registre, le compartiment de registre comprenant en outre une pluralité de registres d'induction (29) ou de volets de registre (6a', 6a'1), les registres d'induction ou les volets de registre étant associés à des ouvertures correspondantes (7a) et étant manœuvrables entre une position ouverte et une position fermée ;
le procédé comprenant les étapes consistant à :
déterminer une pression statique dans le plénum de pression ;
déterminer une position du registre d'induction ou du volet de registre ; et
calculer un débit d'air de soufflage en fonction de la pression statique déterminée et de la position du registre ou du volet.
